# EUROPEAN PATENT SPECIFICATION

(11) **EP 1 126 006 B1**
(45) Date of publication and mention of the grant of the patent: **04.03.2009**
(21) Application number: 01101157.4
(22) Date of filing: 23.01.2001
(51) Int. Cl.: C09K 19/02, C09K 19/16, C09K 19/12, C09K 19/42, C09K 19/44, C09K 19/54, C07C 331/28

(54) **Liquid crystal compounds, liquid crystal medium and liquid crystal display**
Flüssigkristallverbindungen, Flüssigkristallmedium und Flüssigkristallanzeige
Composés liquides cristallins, milieu à cristaux liquides et disposiif à cristaux liquides

(30) Priority: 14.02.2000 EP 00102952; 08.05.2000 EP 00109164; 05.12.2000 EP 00126408
(43) Date of publication of application: 22.08.2001
(73) Proprietor: Merck Patent GmbH, 64293 Darmstadt (DE)
(72) Inventor: Poetsch, Eike, Dr., 64367 Mühltal (DE); Manabe, Atsutaka, 64625 Bensheim (DE); Reiffenrath, Volker, 64380 Rossdorf (DE); Reuter, Markus, 64293 Darmstadt (DE); Krause, Joachim, Dr., 64807 Dieburg (DE); Pauluth, Detlef, Dr., 64372 Ober-Ramstadt (DE)

(56) References cited:
- WO-A-92/16519
- DE-A- 4 301 700
- US-A- 5 762 828

## Description

### Field of the invention

The present invention relates to liquid crystal compounds, liquid crystal media and to liquid crystal displays comprising these media, in particular to displays of the OCB type and to displays of the composite systems type like PDLCs and most particular amongst these to holographic PDLCs.

### Problem to be solved and state of the art

Liquid Crystal Displays (LCDs) are widely used to display information. Electro-optical modes employed are e.g. the twisted nematic (TN)-, the super twisted nematic (STN)- and the electrically controlled birefringence (ECB)-mode with their various modifications, as well as others. Besides these modes, which all do use an electrical field, which is substantially perpendicular to the substrates, respectively to the liquid crystal layer, there are also electro-optical modes employing an electrical field substantially parallel to the substrates, respectively the liquid crystal layer like e.g. the in-plane switching (IPS)-mode (compare e.g. DE 40 00 451 and EP 0 588 568).

Besides the various different modes using the liquid crystal medium as such, oriented on surfaces, which typically are pre-treated to achieve uniform alignment of the liquid crystal material, there are applications using composite systems of liquid crystal materials of low molecular weight together with polymeric materials such as e.g. polymer dispersed liquid crystal (PDLC)-, nematic curvilinearily aligned phase (NCAP)- and polymer network (PN)-systems, as disclosed for example in WO 91/05 029. These composite systems typically use an electrical field substantially perpendicular to the composite layer.

LCDs are used for direct view displays, as well as for projection type displays. Besides these applications LCDs, especially LCDs comprising composite systems like PDLCs and in particular so called holographic PDLC (HPDLC) systems are used in practical applications. HPDLCs are described e.g. in Date, Takeuchi, Tanaka, and Kato, Journal of the SID 7/1 (1999), p. 17 to 22, which is incorporated by reference. These HPDLC displays are generating three bright colors, preferably primary colors, utilizing Bragg reflection. This technique results in excellent bright colors as it does neither need polarizers, nor color filters. A single layer of the periodic structure of polymer and liquid crystal controls the reflection of one particular color. To realize three primary colors consequently three layers, one for each color are required. Each of the three layers has to be addressed independently. This requires three sets of HPDLC films, each with corresponding electrodes. This large number of layers and corresponding electrodes, which is difficult to realize with a good yield in mass production, can beneficiously be reduced when the "two-frequency" drive method is applied.

For composite systems a high Δn of the liquid crystal used is required in order to achieve an efficiently scattering state and to realize a good contrast. Though there have been proposed PDLC-systems with liquid crystal mixtures with low Δn to improve the so called off axis haze, the predominant problem in most cases is to achieve sufficient contrast in the first place. This is especially the case for PDLC-systems, which are disclosed e.g. in Date, Takeuchi, Tanaka, and Kanto, Journal of the SID 7/1 (1999), p. 17-22. The liquid crystals available typically are characterized by Δn values of up to 0.280 or even up to 0.29. This upper limit, however, is still insufficiently low for many applications. Further it has so far only been achieved accepting various compromises with respect to the other properties of the liquid crystal mixtures used. The most typical undesired trade-offs are an insufficiently high clearing point, an unfavourably narrow nematic phase range, a rather high temperature for the lower end of the stability of the nematic phase, too low dielectric anisotropy and hence too high operating voltages, unfavourable elastic constants and last not least too high viscosity values or combinations thereof.

Good compatibility with the precursors of the polymers of the composite systems and easy phase separation during the formation of the composite systems are obvious prerequisites for liquid crystals for such applications.

Another promising electro-optical mode used in LCDs is the optically compensated bent (OCB) mode. This mode is described e.g. in Yamaguchi et al., "Wide-Vierwing-Angle Display Mode for the Active-Matrix LCD Using Bend-Alignment Liquid-Crystal Cell", SID 93, Digest, p. 277 (1993).

This mode is very promising. It is particularly well suited for direct view applications, as it is characterized by a favourable viewing angle dependence. Also the response times are quite short. However for video rate response for the display of changing grey shades the response time still needs to be improved. Compared to a conventional TN display in an OCB displays the amount of deformation of the director is much smaller. Whereas in a TN display the director is oriented almost parallel to the substrates in the unnpowered state and changes ist direction to almost perpendicular to the substrates upon applicatoin of the driving voltage in an OCB display the director orientation changes to the same final orientation, but dstart from an already almost homeotropic bent starting configuraton. Thus, a higher birefringence of the liquid crystal media used is required.

Liquid crystal compounds with a terminal phenyl ring bearing a terminal isothiocyanate group and two F-atoms in ortho position thereto are known from DE 40 27 869.7.

DE 43 01 700 A1 discloses compounds having a polar endgroup each on both sides of the molecules. These compounds tend to have a moderately positive dielectric anisotropy.

WO 92/16519 discloses a broad generic formula comprising many compounds. However, only terminally cyano substituted biphenyles are exemplified.

Liquid crystal mixtures consisting predominantly or even entirely of terminally cyano substituted biphenyls and terphenyls are as a rule characterized by suitable high Δs values, but have limited values of An and already are likely to show insufficient stability at low temperatures, i.e. in most cases either formation of a smectic phase and or crystallisation. Liquid crystal mixtures using large quantities of halogenated tolane compounds with three phenyl rings, which are almost dielectrically neutral, are disclosed, e.g. in the European Patent Application No. EP 99111782.1 are characterized by comparatively low Δε values which are not suitable for most applications and often even show severe problems with respect to the stability of the nematic phase at low temperatures.

Thus, there is a significant need for liquid crystal media with suitable properties for practical applications such as a wide nematic phase range, low viscosities, appropriate optical anisotropy Δn according to the display mode used especially a suitably high An for OCBs and for composite systems like PDLCs and for the latter in particular with suitably large good compatibility with polymer precursors for the composite systems.

### Present invention

Surprisingly, it now has been found that liquid crystal media with high en especially useful for composite systems can be realized which do not exhibit these drawbacks of the materials of the prior art or at least do exhibit them to a significantly lesser degree.

These improved liquid crystal media according to the instant application are characterized in that they
comprise a strongly dielectrically positive liquid crystal component A, which is
a strongly dielectrically positive liquid crystal component consisting of one or more compounds of formula I: 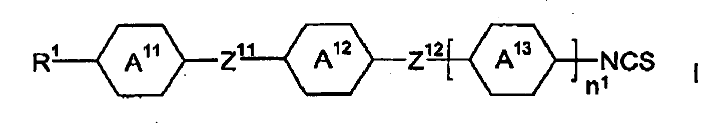 wherein
R¹ is n-alkyl, n-alkoxy with 1 to 7 C-atoms, alkenyl, alkenyloxy or Alkoxyalkyl with 2 to 7 C-atoms, 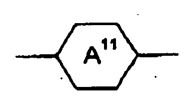 to 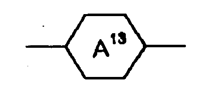 each, independently of each other, are 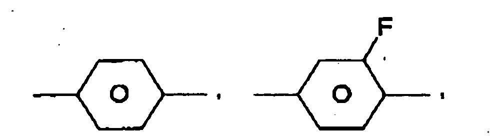 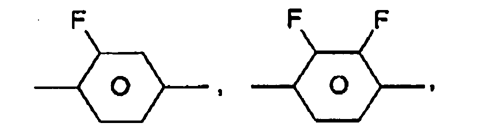 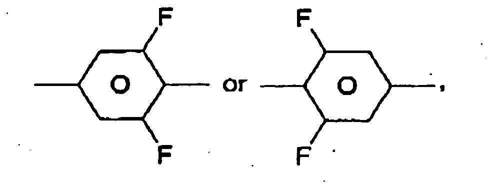
- Z¹¹ and Z¹²: each are, independently of each other, a single bond or trans -CH=CH-, in case n¹ is 0 Z¹² is a single bond and
- n¹: is 0 or 1,
with the condition, that at least one of one of Z¹¹ and Z¹² is trans -CH=CH-
or Z¹¹ and Z¹² both are a single bond and in this case
n¹ is 1 and at least one of 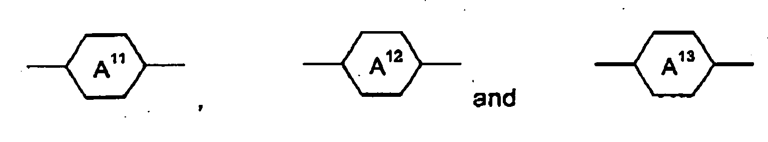 is 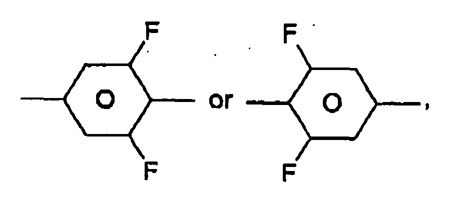 and have a Δn of more than 0.30 at 20 °C and 589.3 nm, and
comprise a further dielectrically positive component B consisting of one or more terminally polar substituted bi- or terphenyl compounds.

The terminaly polar substituted bi- or terphenyl compounds, of component B are or some of them optionally are laterally fluorinated, preferably they are of formula II 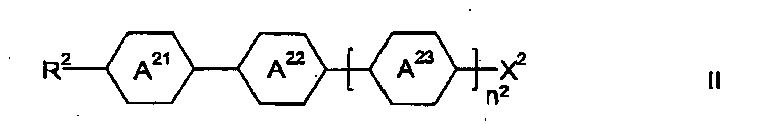 wherein
- R²: has the meaning given for R¹ under formula I above 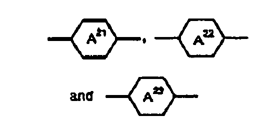 each have the meaning given for 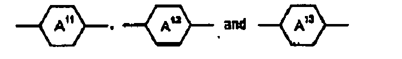 respectively, above under formula I
and
- X²: is CN, F or Cl, preferably CN or Cl, most preferably CN.

The compounds of formula I, as defined above, are novel and are one aspect of the present invention.

The compounds of formula I, wherein at least one of Z¹¹ and Z¹² is trans -CH=CH- y are prepared from corresponding mesogenic amino compounds. The amino group of these compounds is converted to the isothiocyano group using 1,1-thiocarbonyldiimidazole following the general scheme shown below. Liquid crystal compounds in this application embrace compounds with a liquid crystalline phase by themselves as well as compounds, which are compatible with mesogenic phases, especially with the nematic phase, without decreasing the clearing point unacceptably. The latter compounds have a mesogenic structure and are sometimes called mesogenic compounds. 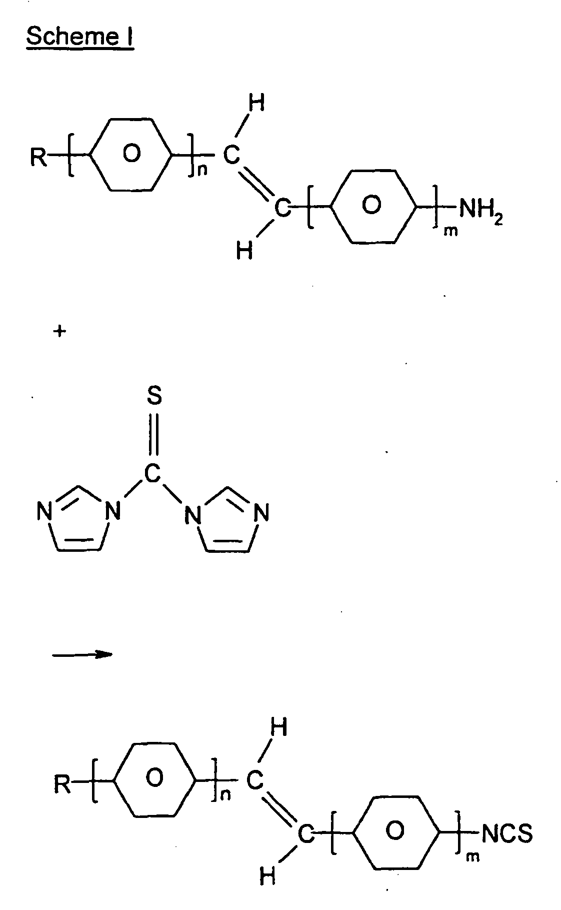 wherein
- R: is alkyl, alkoxy, alkenyl, alkenyloxy or oxaalkyl,
- n and m: are independently of each other 1 or 2, preferably n + m is 2 or 3,
and
- the phenyl rings: present may optionally be substituted by up to two F-atoms, preferably the phenyl ring adjacent to the amino group is fluorinated once or twice, preferably in ortho-position to the amino group.

Compounds of formula I wherein Z¹¹ and Z¹² both are trans-CH=CH- are prepared analoguously. These compounds preferably have n¹ = 1.

The amines are prepared using the so called "Heck"-reaction as shown in scheme II, 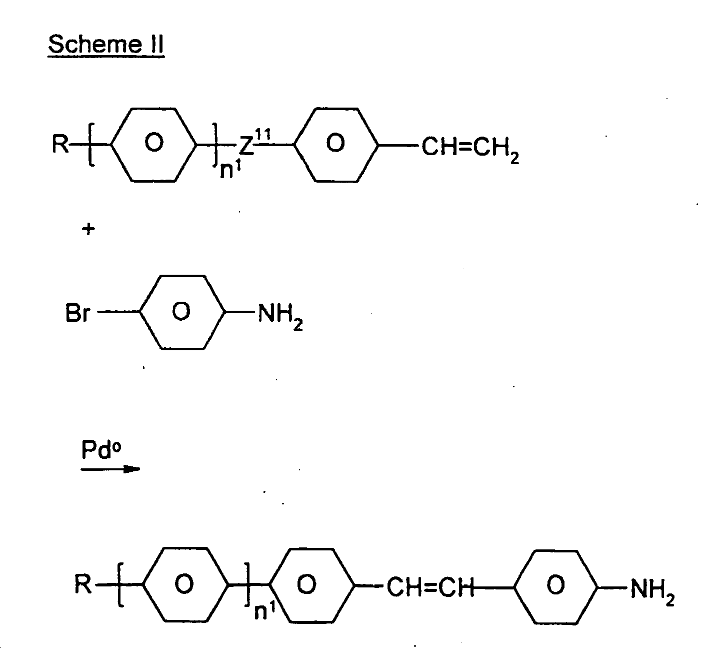 wherein the parameters are defined as in scheme I above.

Compounds of formula I in which Z¹¹ and Z¹² both are a single bond are preferably prepared from the corresponding amino compounds. The amino group of these compounds is converted into the isothiocyanato group by 1,1-thiocarbonyldiimidazole as shown in scheme III.

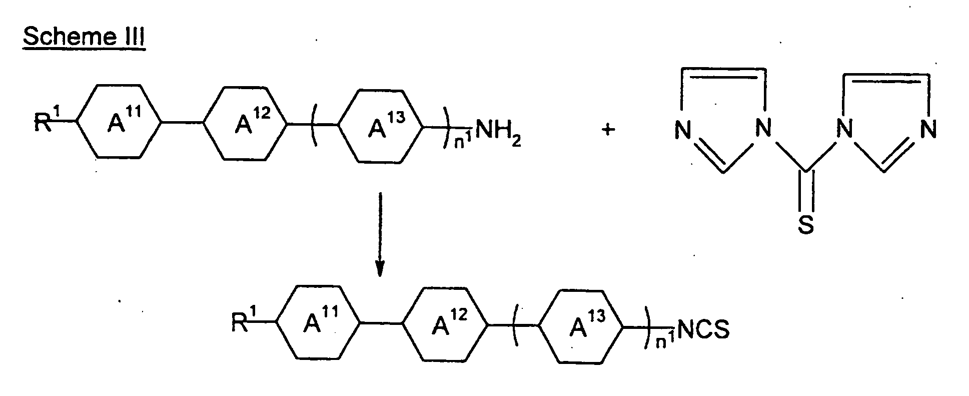

Wherein the structural parameters have the same meaning as in formula I above.

The amino compounds are advantageously prepared by cross coupling according to scheme IV.

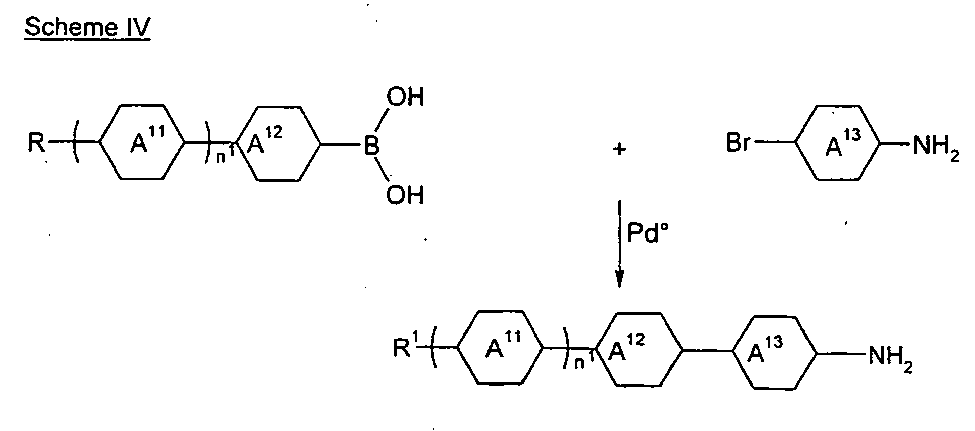

comprising in this application means in the context of compositions that the entity referred to, e.g. the medium or the component, contains the compound or compounds in question, preferably in a total concentration of 10 % or more and most preferably of 20 % or more.

Predominantly consisting, in this context, means that the entity referred to contains 80 % or more, preferably 90 % or more and most preferably 95 % or more of the compound or compounds in question.

Entirely consisting, in this context, means that the entity referred to contains 98 % or more, preferably 99 % or more and most preferably 100.0 % of the compound or compounds in question.

The compounds of formula I are preferably selected from the group of sub-formulae I-1 to I-3 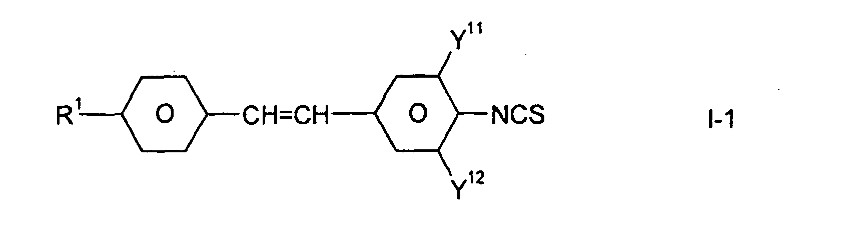 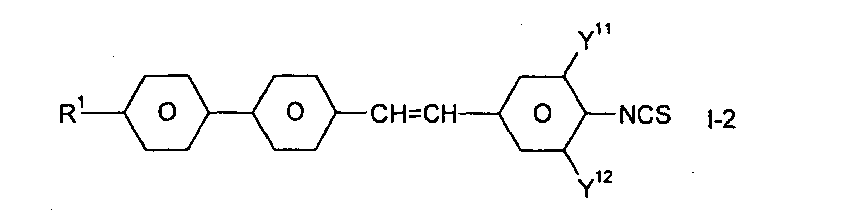 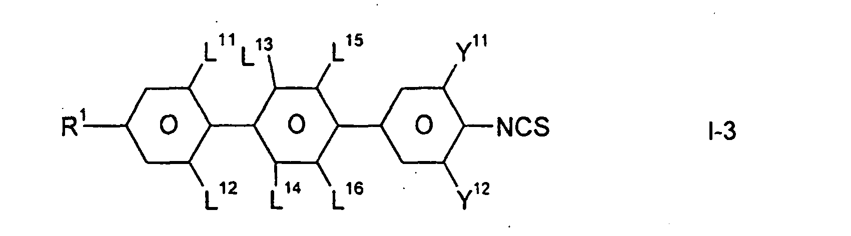 wherein
- R¹: has the meaning given under formula I above
- Y¹¹ and Y¹²: are independently of each other H or F
- L¹¹ to L¹⁶: are independently of each other H or F, preferably one or two of them are F, the others H.

These compounds of formula I-1 preferably are selected from the group of compounds of sub-formulae I-1a to I-1c 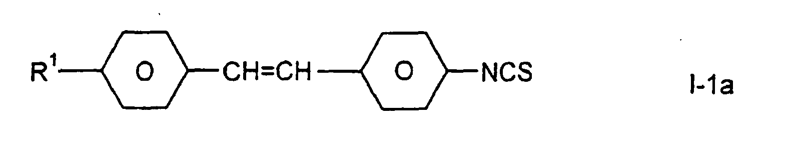 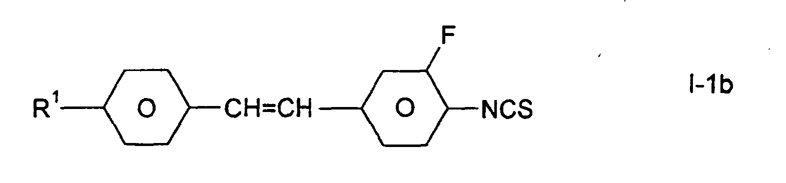 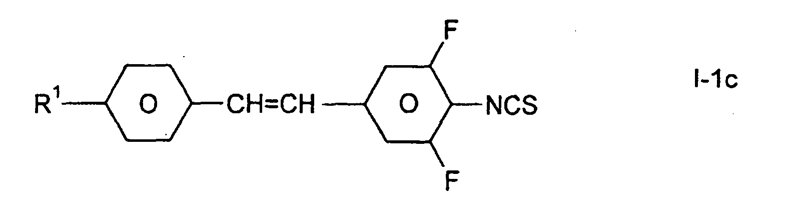 wherein
- R¹: has the meaning given under formula I above and preferably is n-alkyl with 1 to 5 C-atoms or n-alkoxy with 1 to 4 C-atoms, or 1-E-alkenyl with 2 to 5 C-atoms.

The compounds of formula I-2 are selected preferably from compounds of sub-formulae I-2a I-1i, preferably I-2a to I-2c 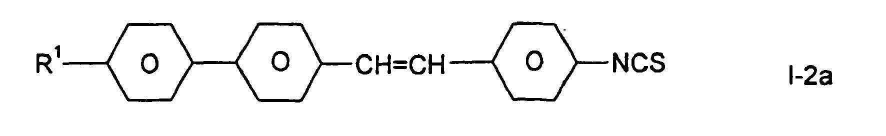 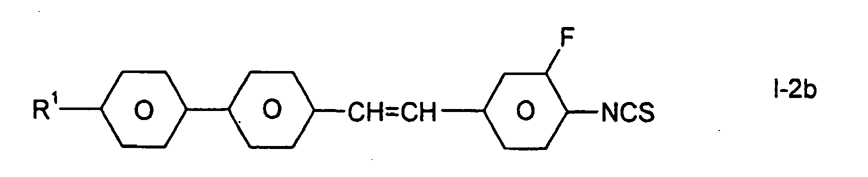 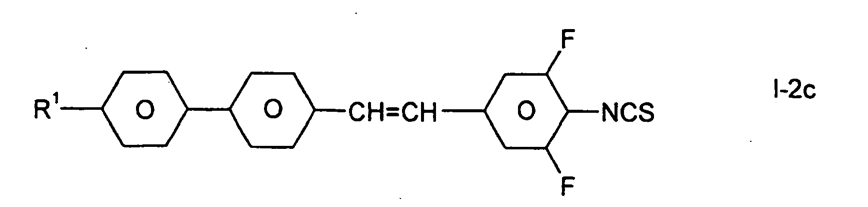 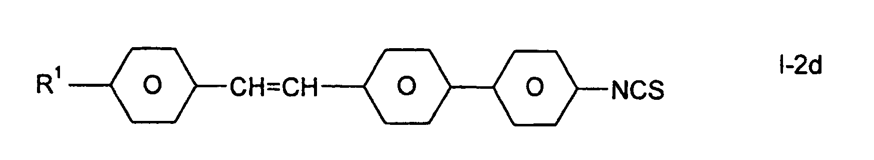 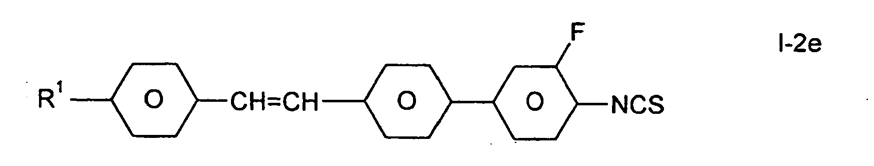 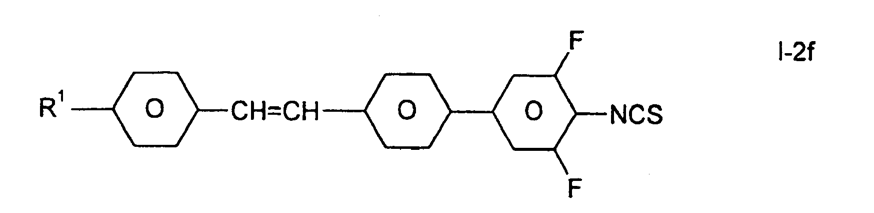 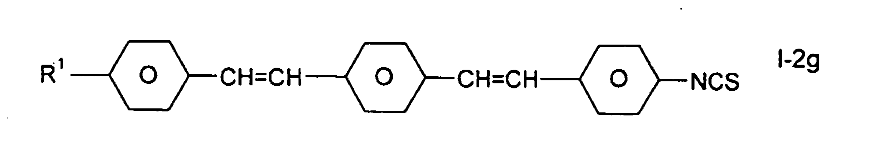 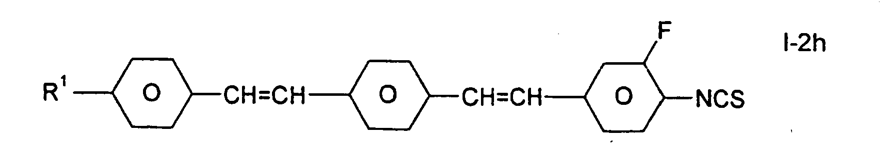 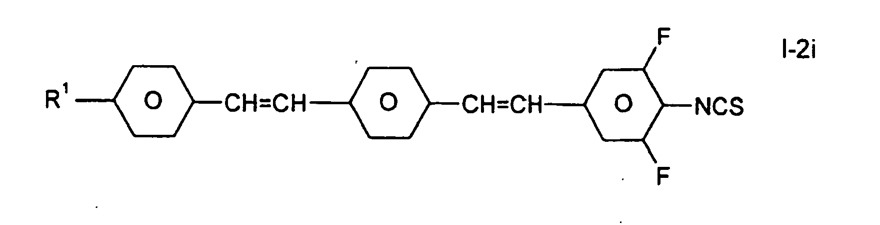
- R¹: has the meaning given under formula I above and preferably is n-alkyl with 1 to 5 C-atoms or n-alkoxy with 1 to 4 C-atoms, or 1-E-alkenyl with 2 to 5 C-atoms.

The compounds of formula I-3 are preferably selected from compounds of sub-formulae I-3a to I-3d 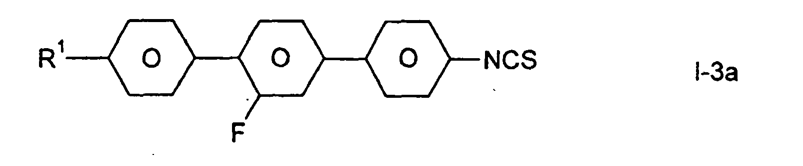 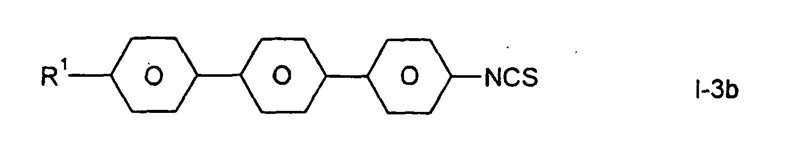 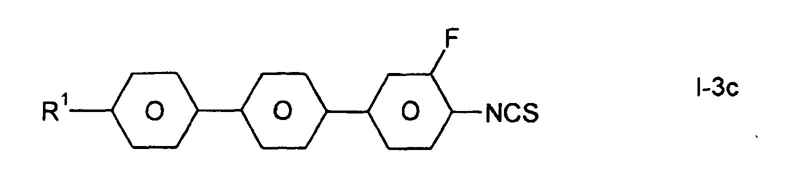 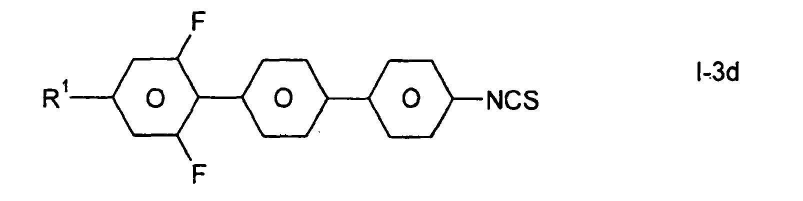 wherein
- R¹: has the meaning given under formula I above and preferably is n-alkyl with 1 to 5 C-atoms.

Most prefered are compounds of formulae I-3a and in particular of formula I-3d.

In a preferred embodiment the liquid crystalline media according to the instant invention contains a component B comprising, preferably predominantly consisting of and most preferably entirely consisting of compounds of formula II.

Preferably these compounds of formula II are chosen from the group of compounds of sub-formulae IIa to IIc. 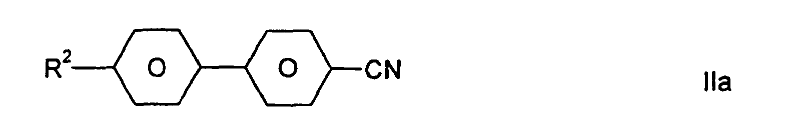 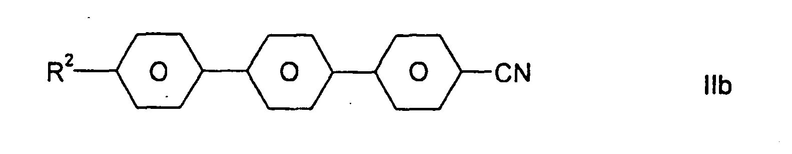 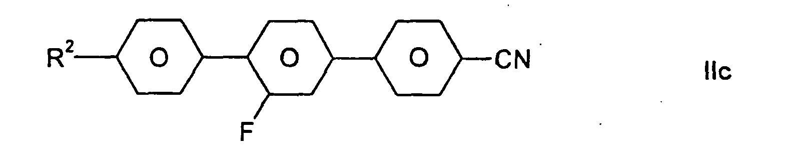 wherein
- R²: has the meaning given above under formula II and for sub-formula IIa preferably is alkyl or alkoxy and for sub-formulae IIb and IIc preferably alkyl.

In a further preferred embodiment the liquid crystal medium contains a liquid crystal component C which is preferably predominantly consisting of and most preferably entirely consisting of compounds of formula III 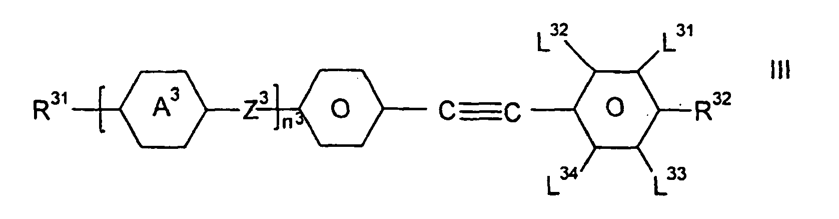 wherein
- R³¹: is alkyl or alkoxy with 1 to 7 C-atoms, alkenyl, alkenyloxy or alkoxyalkyl with 2 to 7 C-atoms,
- R³²: is Cl, CN or NCS,
- R³¹: is preferably n-alkyl, preferably with 3 to 5 C-atoms, or 1-E-alkenyl with 2 to 5 C-atoms,
- R³²: is preferably CN or NCS, most preferably NCS, 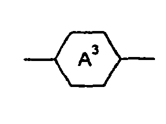 is trans-1,4-cyclohexylene or 1,4-phenylene,
- Z³: is -CH₂CH₂-, -COO-, -C≡C-, -CH=CH- or a single bond, preferably -CH₂CH₂- or a single bond and
- L³¹ to L³⁴: are independently of each other H or F, preferably up to two of them are H,
- n³: is 0 or 1.

This component C may be dielectrically neutral or dielectrically negative, depending upon the relative amounts of compounds with different meanings of L³¹ to L³⁴.

Preferably one or two of L³¹ to L³⁴ are F, preferably L³¹ is F, the others are H, or L³¹ and L³³ are F or L³² and L³⁴ are F, all other are H.

Component C is used in a concentration of 0 to 30 %, preferably 0 to 20 % and most preferably from 0 to 10 % of the total mixture.

Optionally the inventive liquid crystal medium contains a further component D, which is a dielectrically neutral component and preferably comprises and more preferably consists of dielectrically neutral compounds of formula IV 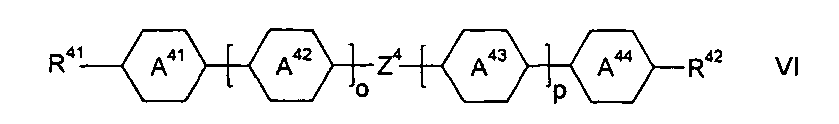 wherein
- R⁴¹ and R⁴²: are, independently of each other, alkyl or alkoxy with 1 to 7 C-atoms or alkenyl, alkenyloxy or alkoxyalkyl with 2 to 7 C-atoms, 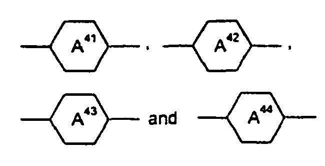 are, independently of each other, trans-1,4-cyclohexylene, 1 ,4-phenylene, 3-fluoro-1,4-phenylene, 2-fluoro-1,4-phenylene, 2,3-difluoro-1,4-phenylene or 3,5-difluoro-1,4-phenylene, preferably trains-1,4-cyclohexylene, 1,4-phenyleneor 3-fluoro-1,4-phenylene,
- Z⁴: is -COO-, -CH₂CH₂-, -CHO- or a single bond, preferably -COO- or a single bond, trans-CH=CH-, -C≡C-,
- o and p: are, independently of each other, 0 or 1.

Component D is used to adjust especially the phase range and the optical anisotropy of the inventive liquid crystal media. Compounds of formula III with o and p both 1 are particularly suited to increase the clearing point of the medium, whereas compounds of formula III with o and p both 0 are particularly suited to decrease the lower limit of the nematic phase range. Especially compounds with Z⁴¹ -C≡C- are useful to adjust Δn of the media.

The concentration of component D in the liquid crystal medium according to the present invention is preferably 0 % to 50 %, more preferably 0 % to 30 %, most preferably 0 % to 20 % and in particular 4 % to 16%.

A further optional compound of the liquid crystal media are cyano-substituted trans stilbenes of formula V 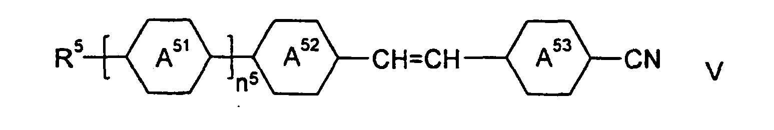 wherein
- R⁵: has the meaning given for R¹ in formula I above, preferably R⁵ is n-alkyl or 1-E-alkenyl 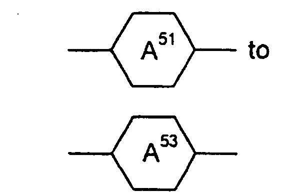 Independently of each other have the meaning given for 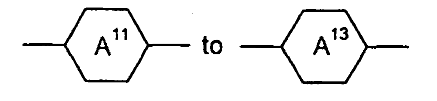 under formula I above,
preferably 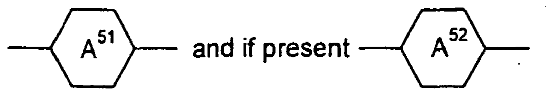 are 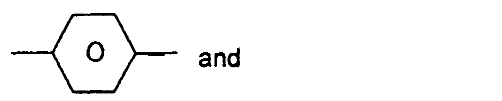 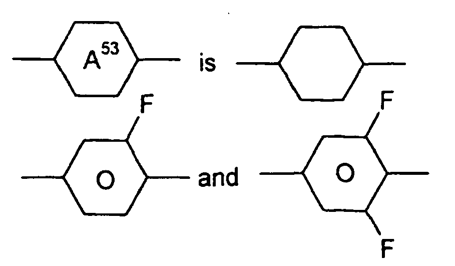
- n⁵: is 0 or 1, preferably 0.

Optionally, the inventive media can comprise further liquid crystal compounds in order to adjust the physical properties. Such compounds are known to the expert. Their concentration in the media according to the instant invention is preferably 0 % to 30 %, more preferably 0 % to 20 % and most preferably 5 % to15 %.

Preferably the liquid crystal medium contains 50 % to 100 %, more preferably 70 % to 100 % and most preferably 80 % to 100 % and in particular 90 % to 100 % totally of components A and B which contain, preferably predominantly consist of and most preferalby entirely consist of one or more of compounds of formulae I and II, respectively.

In a preferred ambodiment the liquid crystal media according to the instant application comprise compounds of at least five groups.
Group 1 are compounds with two 6-membered rings, preferably 1,4-phenylene rings, which optionally are fluorinated, each bridged by a trans CH=CH group and a terminal NCS group.
Group 2 are compounds with three 6-membered rings, preferably 1,4-phenylene rings, which are optionally fluorinated, which are directly linked to each other and a terminal NCS group.
Group 3 are compounds with two 6-membered rings, which are directly linked to each other or optionally via a CH=CH bridge and which bear a terminal cyano group.
Group 4 are compounds with three 6-membered rings, preferably 1,4-phenylene rings, which are directly linked to each toher and having a terminal cyano group.
Group 5 are compounds with two 6-membered rings, which are directly linked and bear a terminal NCS group.

The concentration ranges, in which these groups of compounds are used in the liquid crystal media are as follows:

| Group | Preferably | in particular |
|---|---|---|
| 1 | 5 to 40 % | 10 to 30 % |
| 2 | 5 to 30 % | 10 to 25 % |
| 3 | 5 to 40 % | 15 to 35% |
| 4 | 5 to 40 % | 10 to 30 % |
| 5 | 5 to 40 % | 15 to 30 % |

The liquid crystalline media according to the instant invention are characterized by a clearing point above 80 °C, preferably of 90 °C or more, especially preferred of 100 °C or more, most preferred of 110 °C or more and in particular of 120 °C or more.

The Δn of the liquid crystalline media according to the instant invention is 0.25 or more, preferably in the range of 0.30 to 0.65, more preferably in the range of 0.32 to 0.60, most preferably in the range of 0.33 to 0.48 and in particular in the range of 0.35 to 0.55.

In a preferred embodiment of the instant onvention the Δn of the liquid crystalline media is in the range of 0.30 to 0.60, preferably in the range of 0.32 to 0.50, most preferably in the range of 0.33 to 0.45 and in particular in the range of 0.35 to 0.40.

The Δε, at 1 kHz and 20 °C, of the liquid crystal medium according to the invention is 6 or more, preferably 10 or more, most preferably 15 or more and in particular 19 or more.

The liquid crystal media of the state of the art have been limited by low Δε values at high Δn values and vice versa. In contrast, the inventive media have pairs of (Δn, Δε), which are above a line passing through the points (0.290, 18.0) and (0.370, 4.0) in a plot of Δε as a function of Δn of the same medium. Preferably they are above a line through (0.290, 20.0) and (0.370, 6.0), most preferably above a line through (0.310, 20.0) and (0.370, 8.0) and in particular above a line through (0.350, 18.0) and (0.390, 8.0).

Preferably the nematic phase of the inventive media extends at least from 0 °C to 70 °C, most preferably at lest -20 °C to 70 °C and most preferably at least from -30 °C to 80 °C, wherein at least means that preferably the lower limit is under cut, wherein the upper limit is surpassed.

In the present application the term dielectrically positive compounds describes compounds with Δε > 1.5, dielectrically neutral compounds are compounds with -1.5 ≤ Δε ≤ 1.5 and dielectrically negative compounds are compounds with Δε < -1.5. The same holds for components. Δε is determined at 1 kHz and 20 °C. The dielectrical anisotropies of the compounds is determined from the results of a solution of 10 % of the individual compounds in a nematic host mixture. The capacities of these test mixtures are determined both in a cell with homeotropic and with homogeneous alignment. The cell gap of both types of cells is approximately 10 µm. The voltage applied is a rectangular wave with a frequency of 1 kHz and a root mean square value typically of 0.5 V to 1.0 V, however, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest and are extrapolated to a concentration of the compounds of interest of 100 %.

Components having a nematic phase at the measurement temperature of 20 °C are measured as such, all others are treated like compounds.

The term threshold voltage refers in the instant application to the optical threshold and is given for 10 % relative contrast (V₁₀) and the term saturation voltage refers to the optical saturation and is given for 90 % relative contrast (V₉₀) both, if not explicitly stated otherwise. The capacitive threshold voltage (V₀, also called Freedericksz-threshold V_{Fr}) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties have been determined with test cells prepared at Merck KGaA, Germany. The test cells for the determination of Δε had a cell gap of 22 µm. The electrode was a circular ITO electrode with an area of 1.13 cm² and a guard ring. The orientation layers were lecithin for homeotropic orientation (ε||) and polyimide AL-1054 from Japan Synthetic Rubber for homogeneuous orientation (ε⊥). The capacities were determined with a frequency response analyser Solatron 1260 using a sine wave with a voltage of 0.3 Vᵣₘₛ. The light used in the electro-optical measurements was white light. The set up used was a commercially available equipment of Otsuka, Japan. The characteristic voltages have been determined under perpendicular observation. The threshold (V₁₀) - mid grey (V₅₀) - and saturation (V₉₀) voltages have been determined for 10 %, 50 % and 90 % relative contrast, respectively.

The liquid crystal media according to the present invention can contain further additives and chiral dopants in usual concentrations. The total concentration of these further constituents is in the range of 0 % to 10 %, preferably 0.1 % to 6 %, based in the total mixture. The concentrations of the individual compounds used each are preferably in the range of 0.1 to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 5 to 20 and most preferably of 6 to 14 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e. g. using so called pre-mixtures, which can be e. g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as such, like TN-, TN-AMD, ECB-, VAN-AMD and in particular in composite systems, like PDLC-, NCAP- and PN-LCDs and especially in HPDLCs.

The melting point T(C,N), the transition from the smectic (S) to the nematic (N) phase T(S,N) and the clearing point T (N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups CₙH₂ₙ₊₁ and CₘH₂ₘ₊₁ are straight chain alkyl groups with n respectively m C-atoms. The interpretation of table B is self evident. Table A does only list the abbreviations for the cores of the structures. The individual compounds are denoted by the abbreviation of the core followed by a hyphen and a code specifying the substituents R¹, R², L² and L² follows:

| Code for R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nN.F.F | CₙH₂ₙ₊₁ | CN | F | F |
| nF | CₙH₂ₙ₊₁ | F | H | H |
| nF.F | CₙH₂ₙ₊₁ | F | H | F |
| nF.F.F | CₙH₂ₙ₊₁ | F | F | F |
| nOF | OCₙH₂ₙ₊₁ | F | H | H |
| nCl | CₙH₂ₙ₊₁ | Cl | H | H |
| nCl.F | CₙH₂ₙ₊₁ | Cl | H | F |
| nCl.F.F | CₙH₂ₙ₊₁ | Cl | F | F |
| nCF₃ | CₙH₂ₙ₊₁ | CF₃ | H | H |
| nOCF₃ | CₙH₂ₙ₊₁ | OCF₃ | H | H |
| nOCF₃.F | CₙH₂ₙ₊₁ | OCF₃ | H | F |
| nOCF₃.F.F | CₙH₂ₙ₊₁ | OCF₃ | F | F |
| nOCF₂ | CₙH₂ₙ₊₁ | OCHF₂ | H | H |
| nOCF₂.F | CₙH₂ₙ₊₁ | OCHF₂ | H | F |
| nOCF₂.F.F | CₙH₂ₙ₊₁ | OCHF₂ | F | F |
| nS | CₙH₂ₙ₊₁ | NCS | H | H |
| nS.F | CₙH₂ₙ₊₁ | NCS | H | F |
| nS.F.F | CₙH₂ₙ₊₁ | NCS | F | F |
| rVsN | CᵣH₂ᵣ₊₁-CH=C-H-CₛH₂ₛ- | CN | H | H |
| rEsN | CᵣH₂ᵣ₊₁-O-CₛH₂ₛ- | CN | H | H |

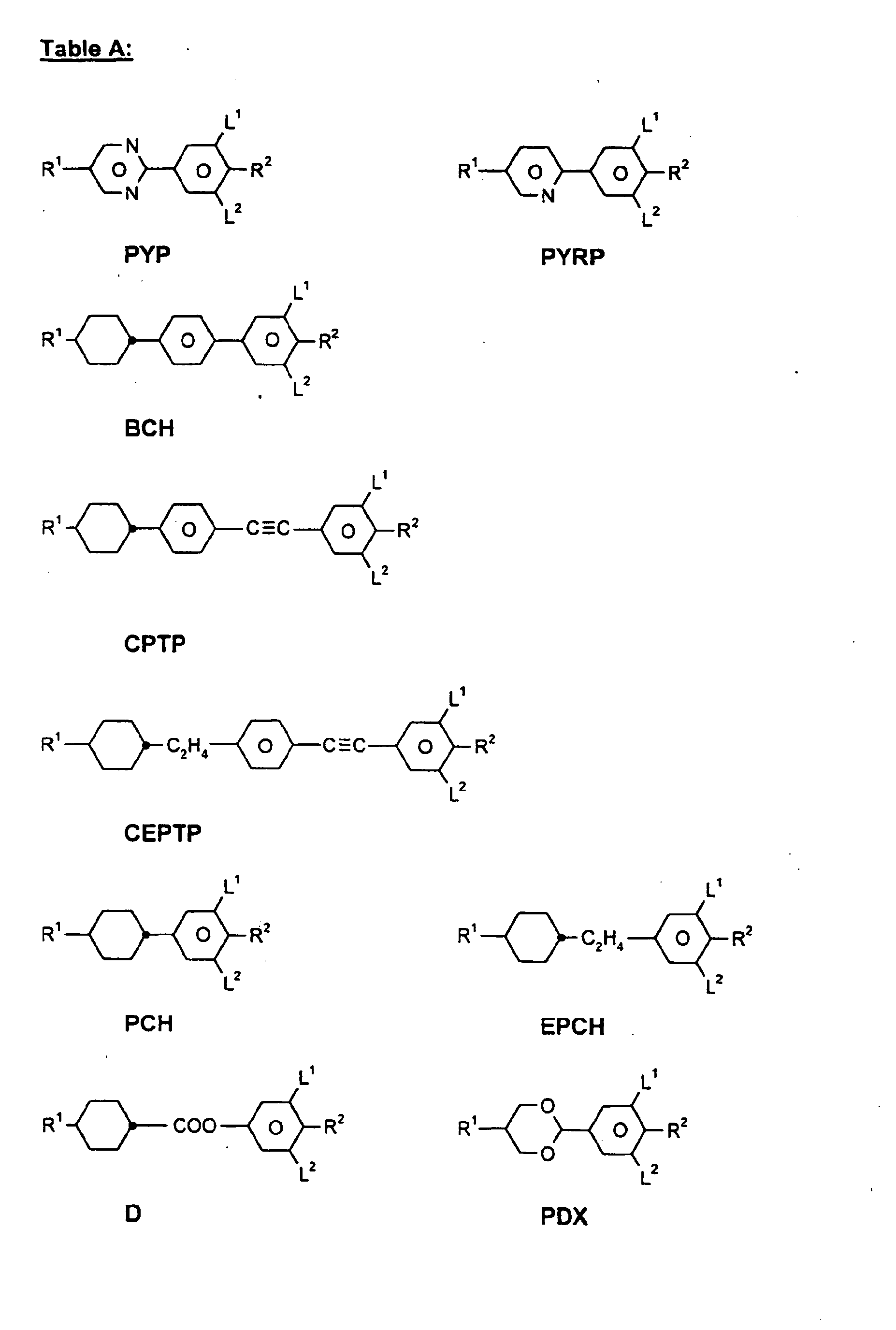

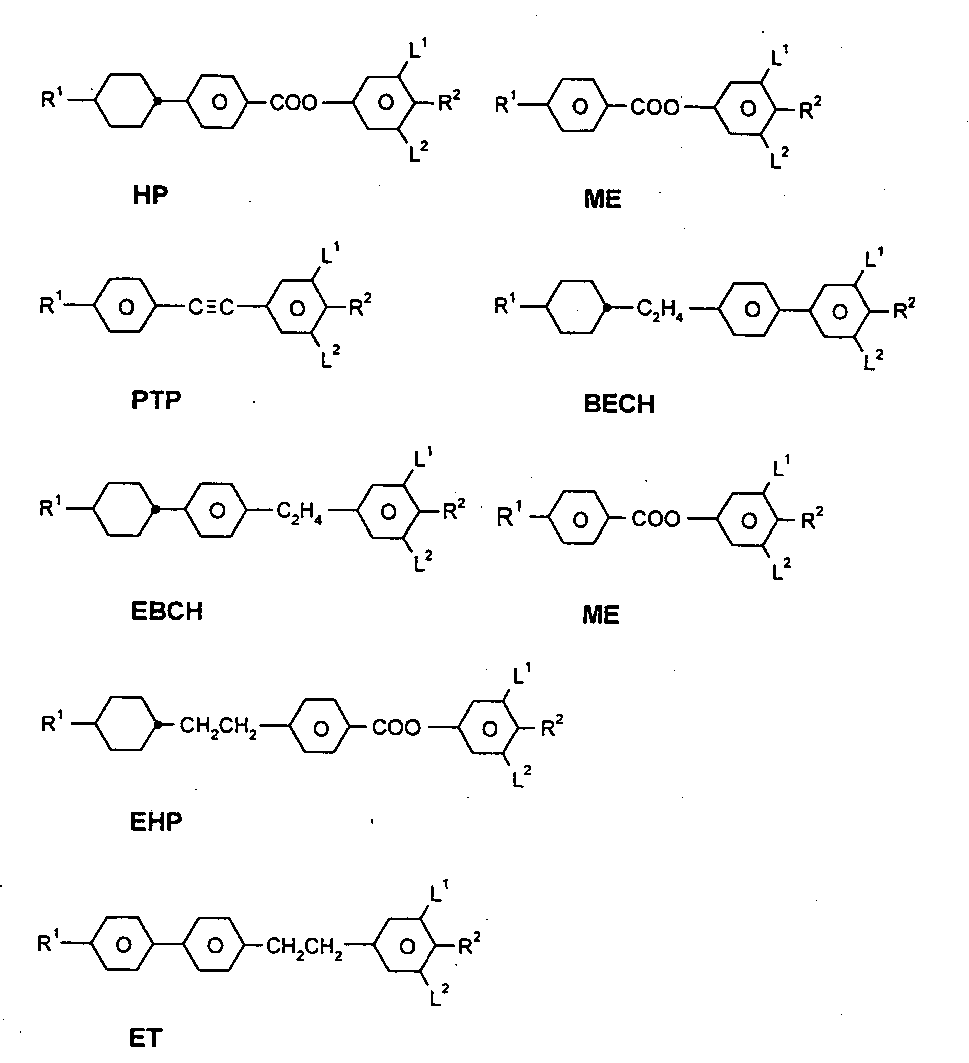

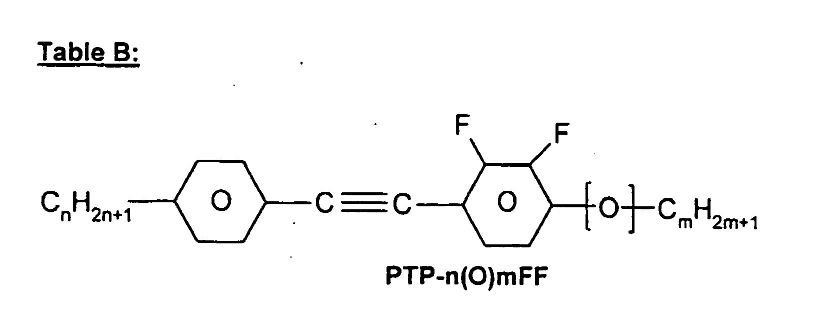

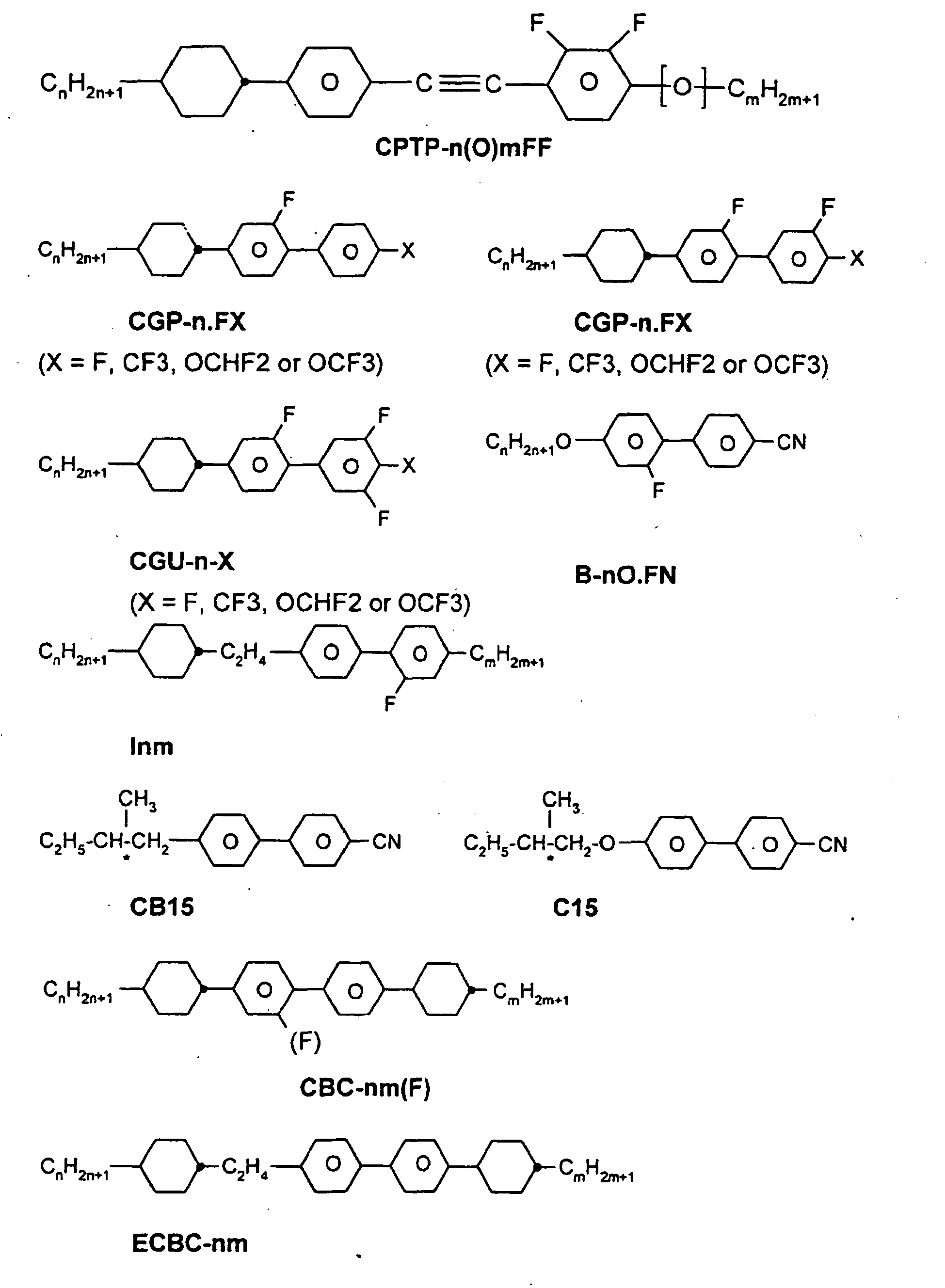

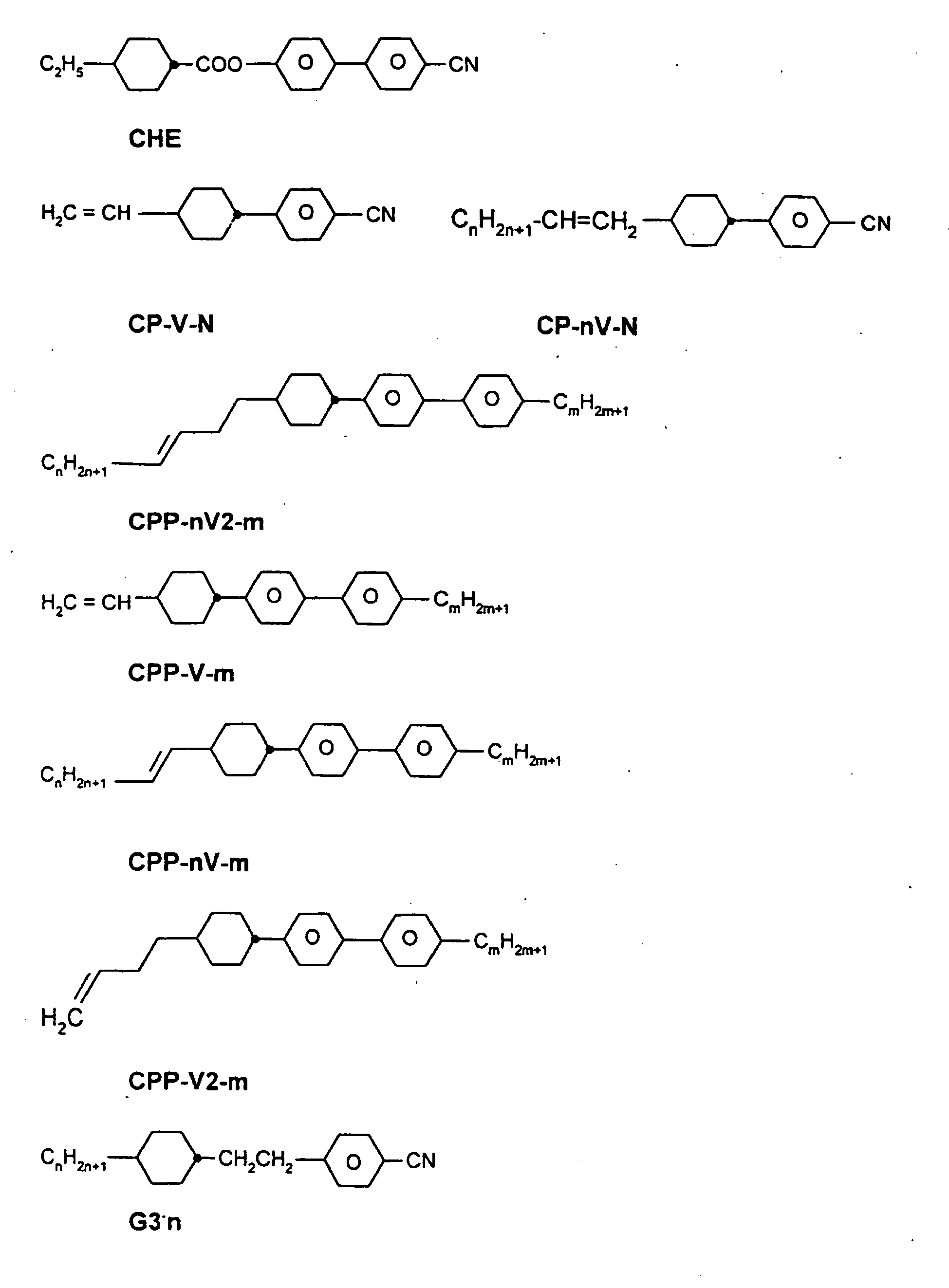

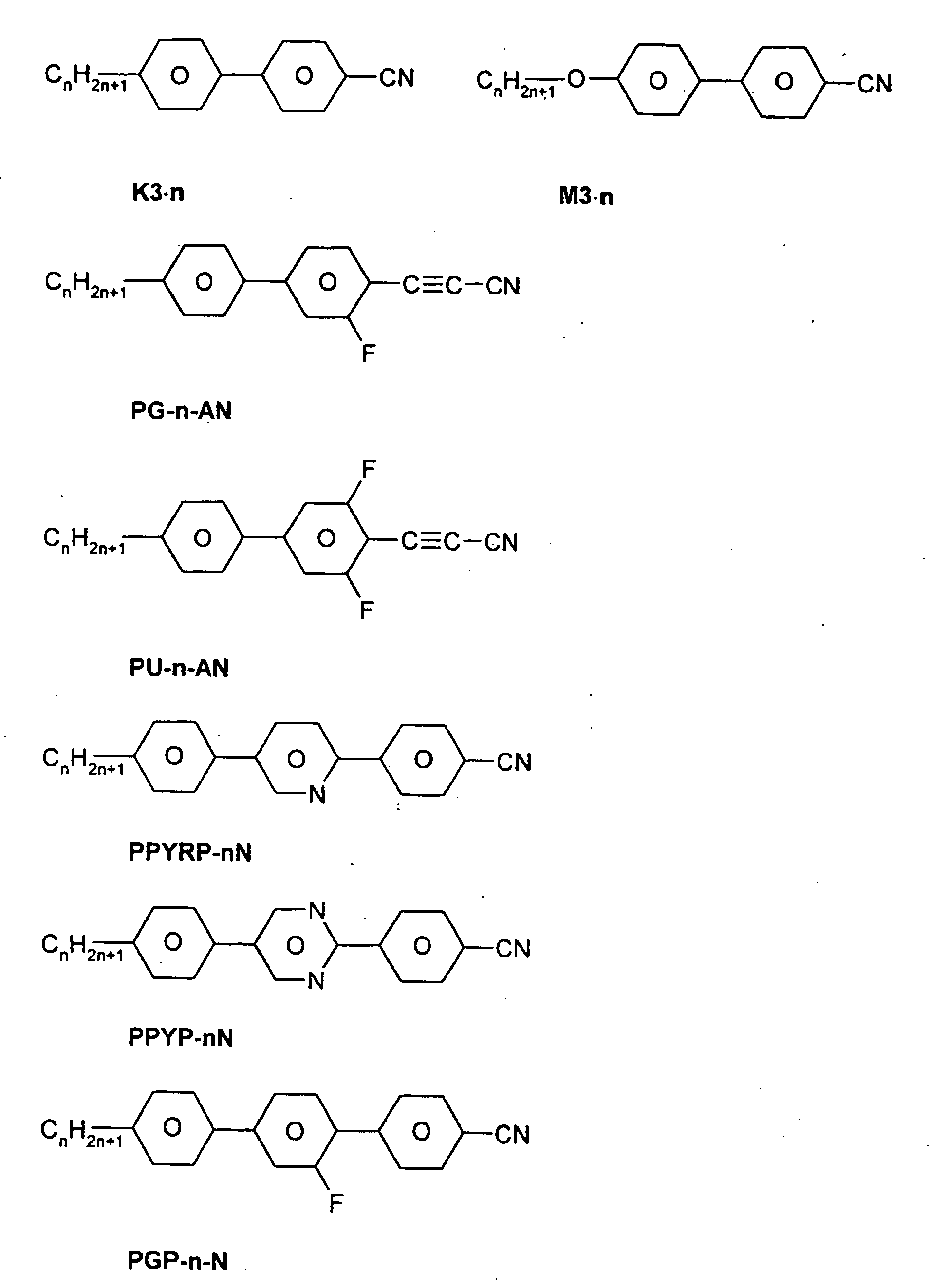

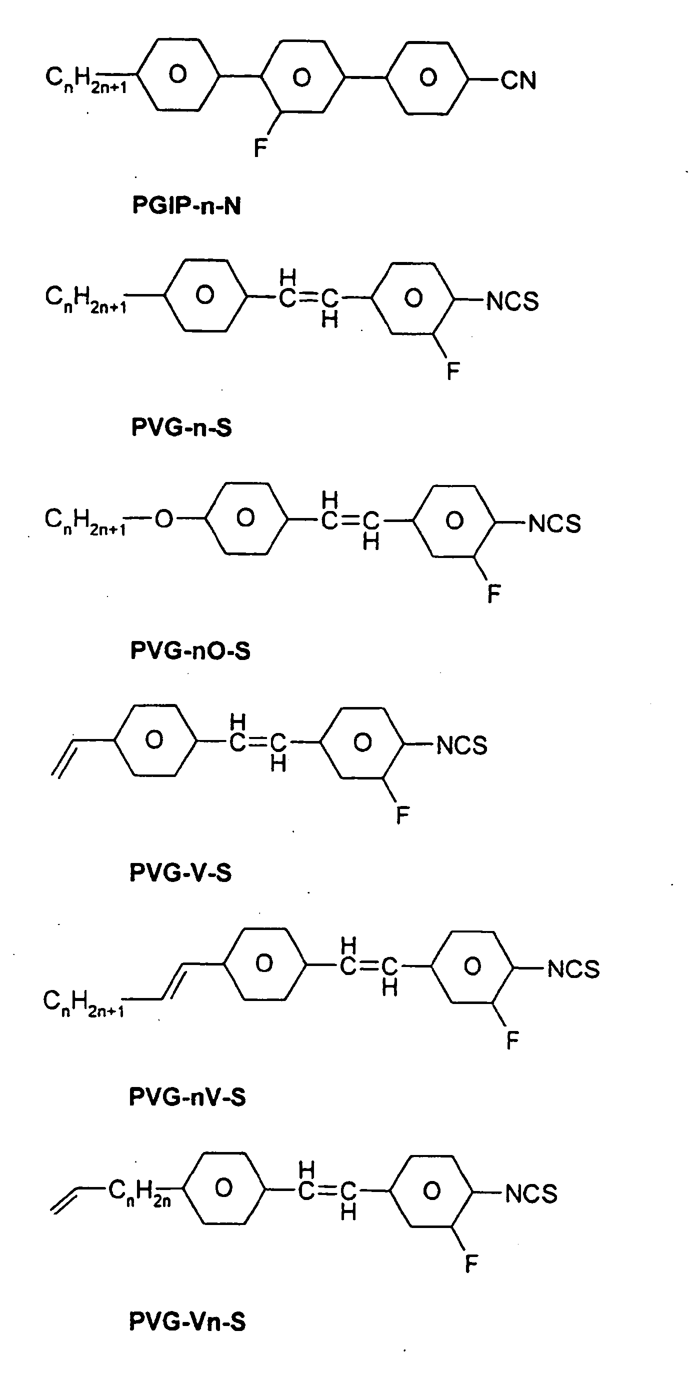

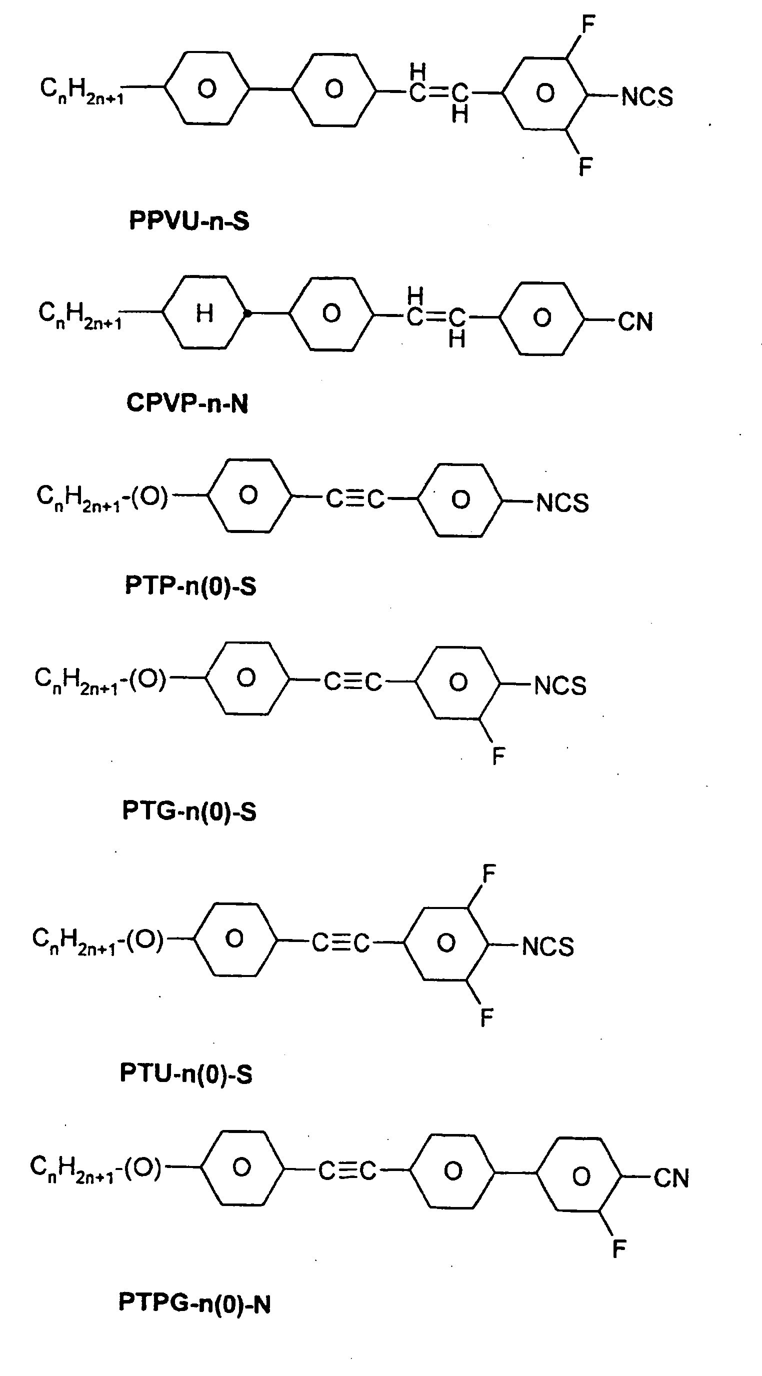

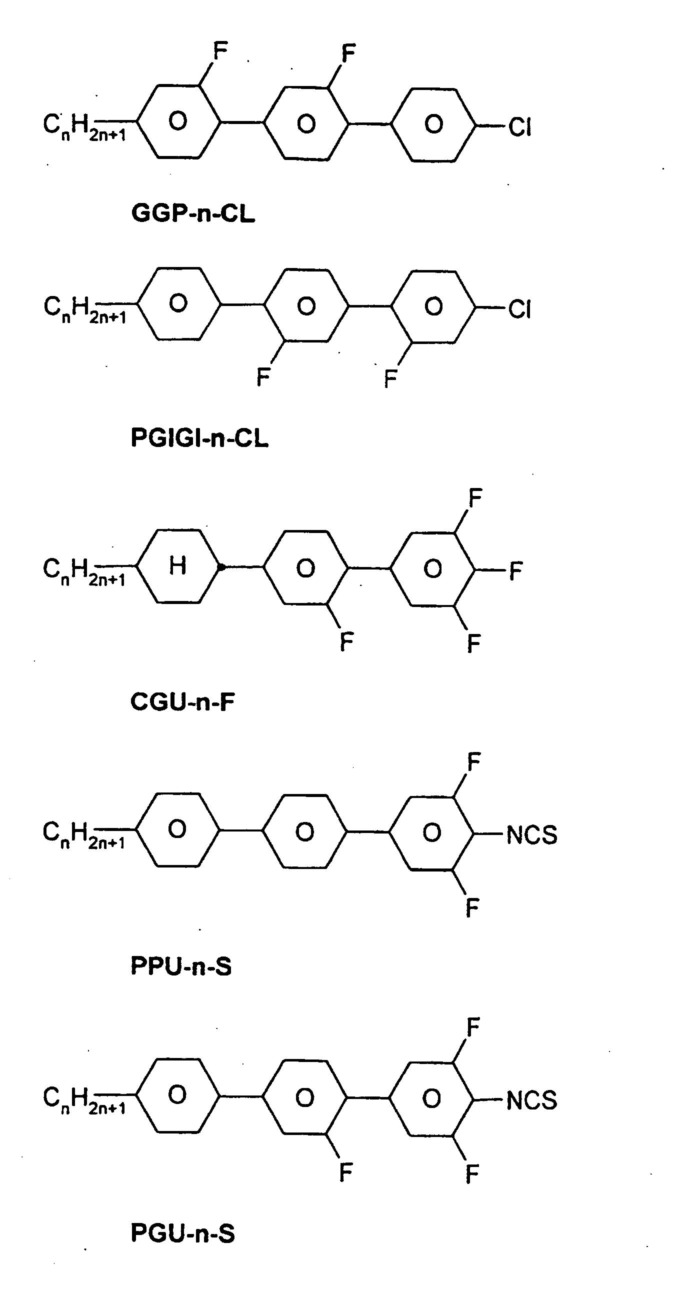

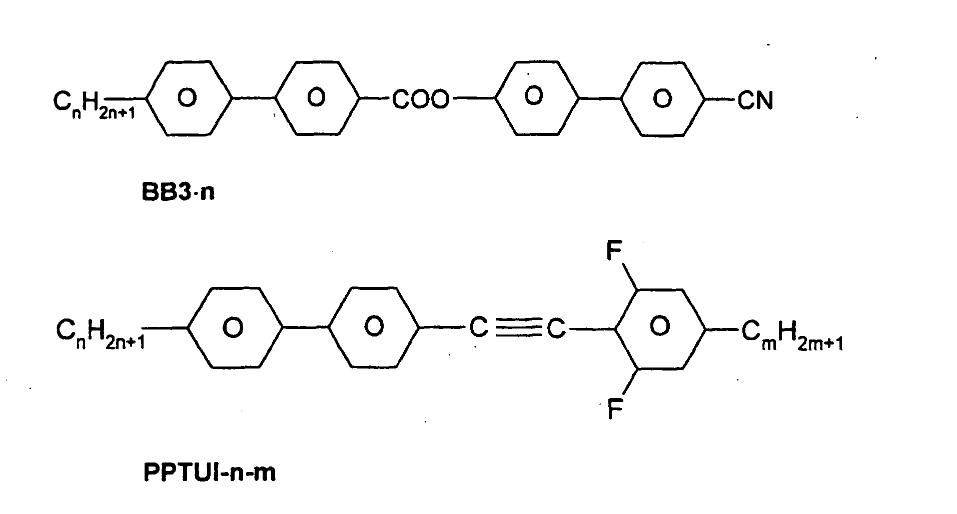

The liquid crystal media according to the instant invention do contain preferably
- four or more compounds selected from the group of compounds of tables A and B and/or
- five or more compounds selected from the group of compounds of table B and/or
- two or more compounds selected from the group of compounds of table A.

### Examples

The examples given in the following are illustrating the present invention without limiting it in any way.

However, the phyiscal data especially of the compounds illustrate to the expert which properties can be achieved in which ranges. Especially the combination of the various properties which can be preferably achieved is thus well defined.

### Example 1

### Preparation of E-1-(4-n-pentyl-phenyl)-2-(3-fluoro-4-isothiocyanato-phenyl)-ethene.

### Step 1

49.2 g of the amine *E-*1-(4-n-pentyl-phenyl)-2-(4-amino-3-fluoro-phenyl)-ethene were prepared in house following scheme II shown above. Appropriate amounts of 4-pentyl-styrene, triethylamine and 4-bromo-2-fluoroaniline were dissolved in 600 ml of acetonitrile. Then 6.3 g of palladium-II-acetate and 6.8 g of tri-o-tolylphosphine were added. The reaction system was heated under reflux for 72 hours. Then the reaction system was cooled to 0 °C within 2 hours. Subsequently the product and tirethyl amine hydrobromide were filtered off. The solids were washed with acetonitrile and water subsequently. The product was dried (yield 49.2 g) and used as such for the further reaction.

### Step 2

The amine was dissolved in 250 ml dichloromethane of Merck KGaA (Art.No. 106 049) and placed in a reaction bulb. 62.0 g of 1,1-thiocarbonyldiimidazole of Biesterfeld (Art.No. ST 736) were dissolved in 350 ml dichloromethane. The 1,1-thiocarbonyldiimidazole solution was added dropwise to the solution of the amine. The speed of addition was adjusted so that the temperature in the vessel did never exceed 35 °C. The resultant mixture was stirred for 12 hours. Then water and dichloromethane were added. The organic phase was separated, dried and the solvent removed using a vacuum evaporator. The resultant product was purified over silicagel in toluene. The appropriate fractions were combined and the solvent evaporated, as described above. The product was then subsequently recrystallized twice from heptane at a temperature of 0 °C. The final white crystals were filtered off and the residual solvent was evaporated. The yield was 9.0 g of 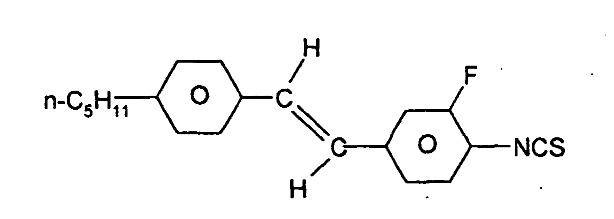 which had a melting point of 74.0 °C and a clearing point of 99.7 °C.

### Example 2

*E*-1-(4-ethoxy-phenyl)-2-(3-fluoro-4-isothiocyanato-phenyl)-ethene was prepared by the method described under Example 1 above.

12.0 g of *E*-1-(4-ethoxy-phenyl)-2-(4-amino-3-fluoro-phenyl)-ethene, made in house, in 150 ml dichloromethane were reacted with 16.752 g 1,1-thiocarbonyldiimidazole in 250 ml dichloromethane. After the second recrystallization from heptane a final yield of 9.0 g of white crystals of 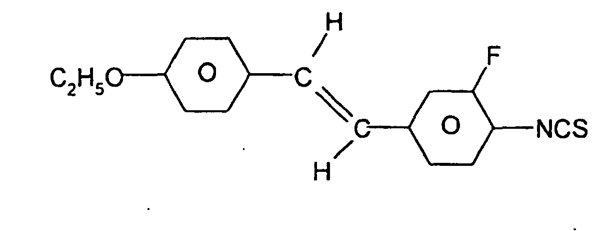 were obtained, which had a melting point of 129.0 °C and a clearing point of 149.0 °C.

### Example 3

*E*-1-(4-*n*-butoxy-phenyl)-2-(3-fluoro-4-isothiocyanato-phenyl)-ethane has been prepared by the method described under Example 1 above.

The starting material in this case was 47.1 g of *E*-1-(4-butoxy-phenyl)-2-(4-amino-3-fluoro-phenyl)-ethene prepared in house. To this 58.812 g of 1,1-thiocarbonyldiimidazole were added. The product was recrystallized from heptane three times after purification over silicagel. The final yield was 9.0 g of white crystalline 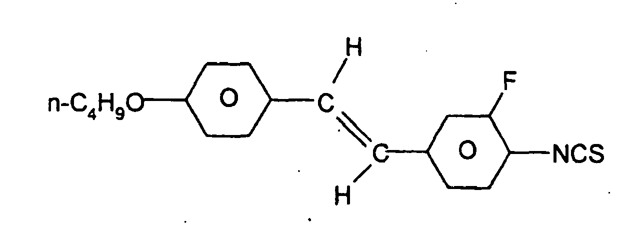 with a melting point of 104.0 °C and a clearing point of 139.8 °C.

### Example 4

E-1-(4-ethoxy-phenyl)-2-(4-isothiocyanato-phenyl)-ethene was prepared by the method described under Example 1 above.

23.45 g of *E*-1-(4-ethoxy-phenyl)-2-(4-amino-phenyl)-ethene in 150 ml dichloromethane were reacted with 34.931 g 1,1-thiocarbonyldiimidazole in 250 ml dichloromethane. After the second recrystalization from heptane the final yield was 13.0 g of white crystals of 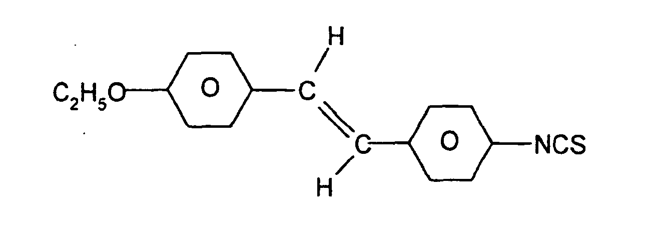 which had a melting point of 174 °C and a clearing point of 176.9°C.

### Example 5

*E-*1-(4-ethoxy-phenyl)-2-(3,5-difluoro-4-isothiocyanato)-ethene was prepared by the method described under Example 1 above.

### Step 1

10.0 g of 4-ethoxy-styrene, 18.02 ml triethylamine and 13.52 g of 4-bromo-2,6-difloroaniline were dissolved in 200 ml of acetonitrile. Then 0.292 g of palladium-II-acetate and 0.799 g of tri-o-tolylphosphine were added. The components were heated under reflux for 72 hours. Subsequently the reaction system was cooled to 0 °C within 2 hours. Then it was filtered and washed with acetonitrile and distilled water. The product (yield 17.4 g) was dried and used directly for the further reaction.

### Step 2

17.4 g of *E*-1-(4-ethoxy-phenyl)-2-(4-amino-3,5-difluoro-phenyl)-ethene in 150 ml dichloromethane were reacted with 23.168 g of 1,1-thiocarbonyldiimidazole in 250 ml dichloromethane. The product was recrystallized twice from heptane. The final yield was 11.0 g of white crystals of 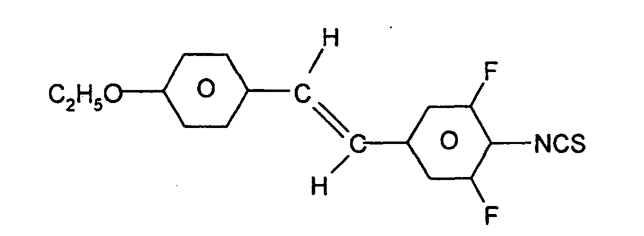 with a melting point of 134 °C.

### Example 6

*E*-1-(4-butyloxy-phenyl)-2-(3,5-difluoro-4-isothiocyanato-phenyl)-ethene was prepared by the method described under Example 1 above.

50.0 g of *E*-1-(4-butyloxy-phenyl)-2-(4-amino-3,5-difluoro-phenyl)-ethene prepared in house in 150 ml dichloromethane were reacted with 58.0 g 1,1-thiocarbonyldiimidazole in 250 ml dichloromethane.

The product was recrystallized twice from heptane. The final yield was 8.0 g of white crystals of 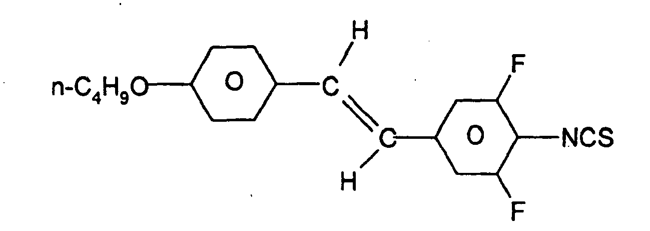 with a melting point of 92 °C and a clearing point of 109.5 °C.

### Examples 7 to 37

Analogously to Example 1 the following compounds are prepared:

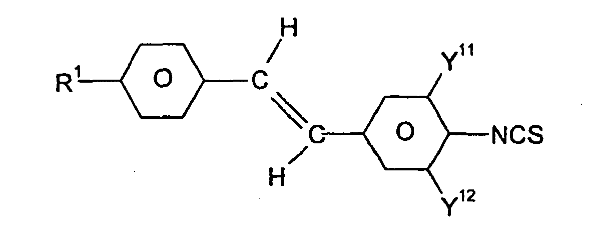

| No. | R¹ | Y¹¹ | Y¹² | Phases (T/°C) |
|---|---|---|---|---|
| 7 | C₂H₅ | H | H | |
| 8 | *n*-C₃H₇ | H | H | |
| 9 | *n*-C₄H₉ | H | H | |
| 10 | *n*-C₅H₁₁ | H | H | C 106 Sₓ 142 I |
| 11 | CH₃O | H | H | |
| 12 | *n*-C₃H₇0 | H | H | |
| 13 | *n*-C₄H₉O | H | H | |
| 14 | CH₂=CH | H | H | |
| 15 | *E*-CH₃-CH₂=CH | H | H | |
| 16 | CH₂=CH-O | H | H | |
| 17 | CH₂=CH-CH₂O | H | H | |
| 18 | C₂H₅ | F | H | |
| 19 | *n*-C₃H₇ | F | H | C 95 N (94.5) I |
| 20 | *n*-C₄H₉ | F | H | C 70 N 86.5 I |
| 21 | CH₃O | F | H | |
| 22 | *n*-C₃H₇O | F | H | C 89 S 113 N 131.9 I |
| 23 | n-C₅H₁₁O | F | H | C 104 N 139.8 I |
| 24 | CH₂=CH | F | H | C117 I |
| 25 | *E*-CH₃-CH=CH | F | H | |
| 26 | CH₂=CH-O | F | H | |
| 27 | CH₂=CH-CH₂O | F | H | |
| 28 | C₂H₅ | F | F | |
| 29 | *n*-C₃H₇ | F | F | |
| 30 | *n*-C₄H₉ | F | F | |
| 31 | *n*-C₅H₁₁ | F | F | |
| 32 | CH₃O | F | F | |
| 33 | *n*-C₃H₇O | F | F | |
| 34 | CH₂=CH | F | F | |
| 35 | *E*-CH₃-CH=CH | F | F | |
| 36 | CH₂=CH-O | F | F | |
| 37 | CH₂=CH-CH₂O | F | F | |

### Examples 38 to 72

Analogously to Example 1 the following compounds are prepared

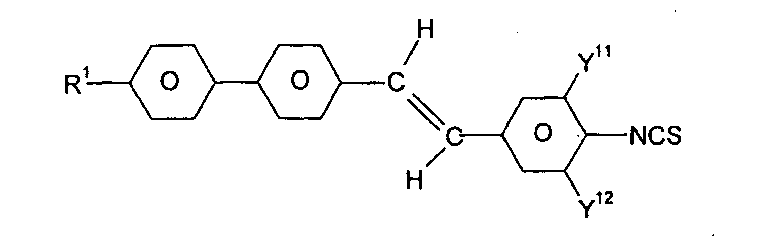

| No. | R¹ | Y¹¹ | Y¹² | Phases (T/°C) |
|---|---|---|---|---|
| 38 | C₂H₅ | F | H | |
| 39 | *n*-C₃H₇ | F | H | C 135 Sₓ 169 S_{A} 181 N 248.8 I |
| 40 | *n*-C₄H₉ | F | H | |
| 41 | *n*-C₅H₁₁ | F | H | |
| 42 | CH₃O | F | H | |
| 43 | C₂H₅O | F | H | |
| 44 | *n*-C₃H₇O | F | H | |
| 45 | *n*-C₄H₉O | F | H | |
| 46 | CH₂=CH | F | H | C 170 dec. |
| 47 | *E*-CH₃-CH=CH | F | H | |
| 48 | CH₂=CH-O | F | H | |
| 49 | CH₂=CH-CH₂O | F | H | |
| 50 | C₂H₅ | F | F | C 136 N 263.7 I |
| 51 | *n*-C₃H₇ | F | F | C 124 N 267.3 I |
| 52 | *n*-C₄H₉ | F | F | C 90 N S_{c} 93 N 246.5 I |
| 53 | *n*-C₅H₁₁ | F | F | |
| 54 | CH₃O | F | F | |
| 55 | C₂H₅O | F | F | |
| 56 | *n*-C₃H₇O | F | F | |
| 57 | *n*-C₄H₉O | F | F | |
| 58 | CH₂=CH | F | F | |
| 59 | *E*-CH₃-CH=CH | F | F | |
| 60 | CH₂=CH-O | F | F | |
| 61 | CH₂=CH-CH₂O | F | F | |
| 62 | C₂H₅ | H | H | |
| 63 | *n*-C₃H₇ | H | H | |
| 64 | *n*-C₄H₉ | H | H | |
| 65 | n-C₅H₁₁ | H | H | |
| 66 | CH₃O | H | H | |
| 67 | C₂H₅O | H | H | |
| 68 | *n*-C₃H₇O | H | H | |
| 69 | *n*-C₄H₉O | H | H | |
| 70 | CH₂=CH | H | H | |
| 71 | *E*-CH₃-CH=CH | H | H | |
| 72 | CH₂=CH-O | H | H | |
| 73 | CH₂=CH-CH₂O | H | H | |

### Examples 74 to 109

Analogously to Example 1 the following compounds were prepared

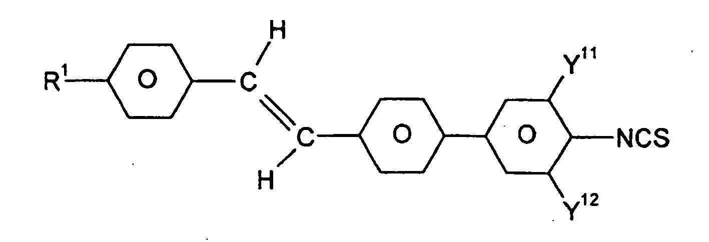

| No. | R¹ | Y¹¹ | Y¹² | Phases (T/°C) |
|---|---|---|---|---|
| 74 | C₂H₅ | F | H | |
| 75 | *n*-C₃H₇ | F | H | C 170 Sₓ 196.5 S_{A} 209 N 291.4 I |
| 76 | *n*-C₄H₉ | F | H | |
| 77 | *n*-C₅H₁₁ | F | H | |
| 78 | CH₃O | F | H | |
| 79 | C₂H₅O | F | H | |
| 80 | *n*-C₃H₇O | F | H | |
| 81 | *n*-C₄H₉O | F | H | |
| 82 | CH₂=CH | F | H | |
| 83 | *E*-CH₃-CH=CH | F | H | |
| 84 | CH₂=CH-O | F | H | |
| 85 | CH₂=CH-CH₂O | F | H | |
| 86 | C₂H₅ | F | F | |
| 87 | *n*-C₃H₇ | F | F | C 129 N 261.2 I |
| 88 | *n*-C₄H₉ | F | F | |
| 89 | *n*-C₅H₁₁ | F | F | |
| 90 | CH₃O | F | F | |
| 91 | C₂H₅O | F | F | |
| 92 | *n*-C₃H₇O | F | F | |
| 93 | *n*-C₄H₉O | F | F | |
| 94 | CH₂=CH | F | F | |
| 95 | *E*-CH₃-CH=CH | F | F | |
| 96 | CH₂=CH-O | F | F | |
| 97 | CH₂=CH-CH₂O | F | F | |
| 98 | C₂H₅ | H | H | |
| 99 | *n*-C₃H₇ | H | H | |
| 100 | *n*-C₄H₉ | H | H | |
| 101 | *n*-C₅H₁₁ | H | H | |
| 102 | CH₃O | H | H | |
| 103 | C₂H₅O | H | H | |
| 104 | *n*-C₃H₇O | H | H | |
| 105 | *n*-C₄H₉O | H | H | |
| 106 | CH₂=CH | H | H | |
| 107 | *E*-CH₃-CH=CH | H | H | |
| 108 | CH₂=CH-O | H | H | |
| 109 | CH₂=CH-CH₂O | H | H | |

### Example 110

### 4-isothiocyanato-4"-n-butyl-3'-fluoro-p-terphenyl was prepared as follows.

### Step 1

2.106 g of bis(triphenylphosphine) palladium(II)chloride (Merck Schuchart, Art. No. 804 174) were suspended in 20.0 ml tetrahydrofurane (Merck KGaA, Art. No. 108 107) in a 50 ml, four necked vessel and heated to 55°C. Now 0.113 g sodiumboric hydride (Merck Schuchart, Art. Nr. 806 372) were added slowly while the suspension was stirred with a magnetic stirrer. The dark mixture was heated under reflux for 30 minutes and then allowed to cool to 40°C. 49.648 g of 1-bromo-3-fluoro-4-iodo-benzene (Wychem, Art. No. 45 570 300/12) 35.60 g of 4-n-butyl-phenylboronic acid, prepared in house), 330 ml toluene (Merck KGaA, Art. No. 108 325), 130 ml ethanole (Merck KGaA, Art. No. 100 983) and 170 ml of a solution of sodium carbonate (Merck KGaA, Art. No. 106 384) were placed in an 1 l, four necked vessel at ambient temperature and heated to 50°C. Now the freshly prepared 40°C warm solution of the Pd⁰-catalyst was rapidly added dropwise to the vigorously stirred reaction mixture. The brown mixture was stirred at 50°C for 16 hours. The completeness of the reaction was confirmed by thin sheet chromatography. The reaction mixture was cooled to ambient temperature. Then distilled water and methyl-*t*-butyl ether were added and the phases separated. The aquous phase was extracted twice with methyl-*t*-butyl ether. The combined organic phases were washed twice with distilled water, dried over Na₂SO₄ filtered and the solvent evaporated. The crude product of 74 g of 4-bromo-4'-*n*-butyl-2-fluoro-biphenyl was purified over 3 l silicagel with 1-chloro-butane. The resultant 61.4 g of crude product were distilled under reduced pressure. Thus 45.4 g of 4-bromo-4'-*n*-butyl-2-fluoro-biphenyl with a purity of 90.6% by GC were obtained.

### Step 2

11.0 g of 4-bromo-4'-*n*-butyl-2-fluoro-biphenyl, prepared as described above, were dissolved in 100 ml diethylether (Merck KGaA, Art. No. 100 929) and cooled to -70°C. At this temperature subsequently 21.963 ml of a 15% solution of *n*-butyllithium (Merck Schuchart, Art. No. 818 874) was added dropwise, the reaction mixture stirred for 1 hour, 4.022 ml trimethylborate (Merck Schuchart, Art. No. 821 180) added dropwise and the reaction mixture stirred again, now for 30 minutes. The completenes of the reaction was verified by thin sheet chromatography. Then the mixture was allowed to heat up to -10°C and hydrolyzed with distilled water. Then the pH value was adjusted to 2 by addition of diluted hydrochloric acid prepared equal amounts of concentrated hydrochloric acid (Merck KGaA, Art. No. 314) and of distilled water. The phases were separated. The aquous phase was extracted twice with methyl-*t*-butyl ether. The combined organic phases were washed twice with distilled water, dried over Na₂SO₄, filtered and the solvent evaporated. The crude product of 12.2 g of 4'-n-butyl-2-fluoro-biphenyl-4-ylboronic acid was purified by recristallisatoin from heptane in the ratio of 1/10 at -20°C and washed with cold heptane.

### Step 3

### 4"-n-butyl-3'-fluoro-p-terphenyl-4-ylamine was prepared.

3.00 g of 4'-*n*-butyl-2-fluoro-biphenyl-4-ylboronic acid prepared in house, 1.90 g of 4-bromo-aninline (Merck KGaA, Art. No. 801 600), 10 mg of palladium(II) acetate (Merck-Schuchart, Art. No. 818 056) and 35 mg of trisphenylphosphine (Merck-Schuchart, Art. No. 808 270) were placed together with 30.0 ml of 2-propanole in a four necked 100 ml vessel and heated for 16 hours under reflux (i.e. at 82°C). The completeness of the reaction was confirmed by thin sheet chromatography. Then the reaction vessel was taken out of the hot bath and 4.0 ml distilled water were added to the hot, darkish reaction mixture. At a themperature of the mixture of approximately 40°C methyl-*t*-butyl ether was added and the phases separated. The organic phase was washed once each with 5% aquous solution of NaHCO₃ and saturated aquous solution of NaCl. The aquous phases were combined and extracted with methyl-*t*-butyl ether. The organic phases were combined and dried over Na₂SO₄. Then the solution was filtered and the solvent evaporated. The yield was 2.50 of slightly brown crystals.

### Step 4

The 2.50 g of 4"-*n*-butyl-3'-fluoro-*p*-terphenyl-4-ylamine thus prepared and 2.80 g of 1,1-thiocarbonyldiimidazole were dissolved in 250 ml dichloromethane. The solution was stirred for 16 hours at ambient temperature of approximately 22°C. The completeness of the reaction was verified by thin sheet chromatography with 1-chloro-butane. Evaporation of the solvent yielded 5.4 g of crude product. This was purified over silicagel in 1-chloro-butane and subsequently recrystallized at 5°C from n-heptane. The final yield was 2.0 g of white crystals of 4-isothiocyanato-4"-*n*-butyl-3'-fluoro-*p*-terphenyl with a purity of 99.6% by GC.

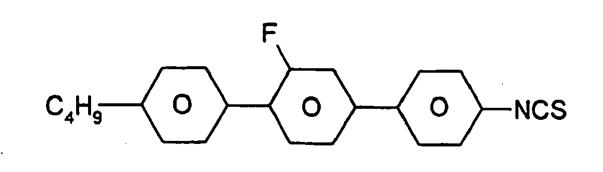

The phase sequence was as follows:
C 116°C S_{A}138°C N 200.1 °C I.

### Examples 111 to 121

Analogously to Example 110 the following compounds are prepared

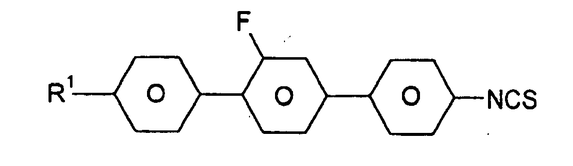

| No. | R¹ | | | Phases (T/°C) |
|---|---|---|---|---|
| 111 | C₂H₅ | | | |
| 112 | *n*-C₃H₇ | | | |
| 113 | *n*-C₅H₁₁ | | | |
| 114 | CH₃O | | | |
| 115 | C₂H₅O | | | |
| 116 | *n*-C₃H₇O | | | |
| 117 | *n*-C₄H₉O | | | |
| 118 | CH₂=CH | | | |
| 119 | *E*-CH₃-CH=CH | | | |
| 120 | CH₂=CH-O | | | |
| 121 | CH₂=CH-CH₂O | | | |

### Example 122

4"-n-butyl-2",6"-difluoro-1-isothiocyanato-*p*-terphenyl was prepared as folows.

### Step 1

150 g biphenyl (Merck-Schuchart, Art. No. 803 090) and 75.0 iodine (Merck KGaA, Art. No. 104 760) were added and heated to about 70°C. Then 360 ml nitric acid (65%, Merck KGaA, Art. No. 100 456) were added dropwise, which lead.to strong formation of gas.Then 20 ml dichloromethane (Merck KGaA, Art. No. 106 050) were added and the mixture heated at approximately 75°C under reflux for 1 hour. Now distilled water was added to the reaction mixture until a yellow solid precipitated. The liquid was poured off from the precipitate. The precipitate was washed five times with 500 ml each of distilled water. Each time the water was poured off from the precipitate. Then the precipitate was suspended in 500 ml toluene filtered off and washed with 250 ml of toluene. The yield was 102.3 g of 4-iodo-4'-nitro-biphenyl with a purity of 94.9% (by HPLC).

### Step 2

350 g of tin(II)chloride dihydrate were dissolved in 500 ml fuming hydrochloric acid (both Merck KGaA, Art. Nos. 107 813 and 100 314, respectively). During this process the temperature decreased to 15°C. Then the clear solution was heated to approximately 50°C and 92 g of 4-iodo-4'nitro-biphenyl, prepared as described above, were added. The yellow suspension was stirred at 60°C for 16 hours. The completeness of the reaction was confirmed by thin layer chromatography with toluene as solvent. The reaction mixture was cooled down and poured into distilled water with ice. A surplus of 1.300 I of aquous sodium hydroxide was added, leading to an exothermic reaction.The reaction mixture was extracted with 3 I of toluene. The pases were separated and the organic phase washed two times with 1 I each of distilled water. The combined aquous phases were extracted with 1 I of toluene. Then the organic phases were combined, dried over Na₂SO₄, filtered and the solvent evaporated. The yield was 83.2 g of 4'-iodo-biphenyl-4-ylamine with a purity of 92.1% by GC.

### Step 3

74.954 g zinc chloride (Merck KGaA, Art. No. 108 815) were dissolved in 700 ml tetrahydrofurane. Then 671.105 ml of a solution of n-butyllithium (Merck Schuchart, Art. No. 818 874) were added dropwise witout cooling. The temperature of the clear solution gradually increased to 50°C during the addition. The instantly blue solution became a white suspension. Then the reaction mixture was stirred for 30 minutes without cooling. Next 3.659 g 1,1'-bis(diphenylphosphino)-ferrocene-palladium(II)dichloride (short PdCl₂-dppf), prepared in house, were added. Now the color of the mixture turned to beige. Then 115.15 ml 1-bromo-3,5-difluoro-benzene, prepared in house, dissolved in 300 ml tetrahydrofurane were added dropwise to the boiling reaction mixture. The temperature was 62°C. The color of the solution became dark brown and a precipitate formed. The reaction mixture was heated under reflux for 2 hours and then cooled down. Then distilled water was added and acidified with diluted hydrochloric acid. The reaction mixture was extracted twice with hexane. The combined organic phases were washed with distilled water, dried over Na₂SO₄ and the solvent evaporated carefully. The yield was 260 g of crude product still including some solvent. The crude product was distilled under reduced pressure. The yield was 155 g of a clear liquid consisting of 1-*n-*butyl-3,5-difluoro-benzene with a purity of 98.8% by GC.

### Step 4

155.0 g 1-*n*-butyl-3,5-difluoro-benzene, prepared as described above, were dissolved in 2.0 I of tetrahydrofurane (Merck KGaA, Art. No. 108 107) in a reaction vessel and cooled to -70°C. At -70°C 610.095 ml of a solution of *n*-butyllithium (Merck KGaA, Art. No. 818 874) was added dropwise. Then the reaction mixture was stirred for 30 minutes at -70°C. Next 11.731 ml of trimethylborate were added at -70°C and the reaction mixture stirred for 30 minutes at this temperature. The completenes of the reaction was confirmed by thin layer chromatography. Then the reaction mixture was allowed to heat up to -20°C and was hydrolyzed with distilled water. By the addition of diluted hydrochloric acid prepared from equal amounts of concentrated hydrochloric acid (Merck KGaA, Art. No. 314) and of distilled water, the pH value was adjusted to 2. The organic phase was separated and the aquous phase extracted twice with methyl-*t*-butyl ether. The combined organic phases were washed twice with distilled water and once with saturated solution of NaCl, dried over Na₂SO₄ filtered and the solvent evaporated. The yield was 197.1 g of the crude product 4-*n*-butyl-2,6-difluoro-phenylboronic acid.

### Step 5

15.0 g of 4-*n*-butyl-2,6-difluoro-phenylboronic acid and 25,0 g of 4'-iodo-biphenyl-4-ylamine, both prepared in house as described above, were dissolved in 200.0 ml tetrahydrofurane (Merck KGaA, Art. No. 108 107). A buffer solution of 9.6 g potassium dihydogenphosphate and 50.2 g disodium hydrogenphosphate in 100 ml distilled water was added under stirring. The reaction mixture was heated rapidly to the boiling point by immersion into a preheated hot bath. At a temperature of approximately 60°C 1.20 g tetrakis(triphenylphosphine) palladium (0) was added and the reaction mixture heated under reflux for 65 hours. The completeness of the reaction was checked by thin layer chromatography. The reactoin mixture was cooled and then distilled water and methyl-*t*-butyl ether were added. The phases were separated and the organic phase washed twice with distilled water. The aquous phases were combined and washed twice with methyl-*t*-butyl ether. The organic phases were combined and dried over Na₂SO₄. Then the solution was filtered and the solvent evaporated. The 35 g of raw product thus obtained were recrystallized from n-hexane. 11.2 g of first crystals were obtained.

### Step 6

These 11.2 g of 4"*n*-butyl-2",6"-difluoro-terphenyl-4-ylamine were dissolved together with 12.5 g of 1,1-thiocarbonyldiimidazole in 100 ml dichloromethane and stirred for 16 hours at ambient temperature of about 22°C. The completeness of the reactoin was verified by thin sheet chromatography. The solvent was evaporated and the product purified over silicagel in 1-chlorobutane. After severeal purification steps the product was obtained with a purity of 99.8% bay GC.

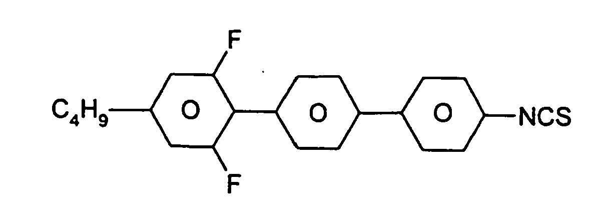

It had the following phase sequence:
C 132°C SA 138 °C N 176.6°C.

### Examples 123 to 146

Analogously to Example 110 the following compounds are prepared

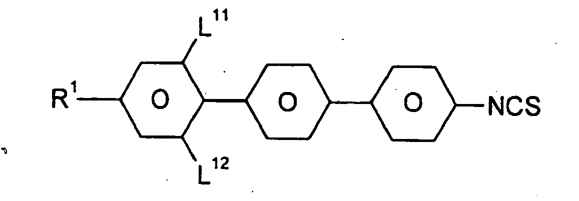

| No. | R¹ | L¹¹ | L¹² | Phases (T/°C) |
|---|---|---|---|---|
| 123 | C₂H₅ | F | H | |
| 124 | *n*-C₃H₇ | F | H | |
| 125 | *n*-C₄H₉ | F | H | |
| 126 | *n*-C₅H₁₁ | F | H | |
| 127 | CH₃O | F | H | |
| 128 | C₂H₅O | F | H | |
| 129 | *n*-C₃H₇O | F | H | |
| 130 | *n*-C₄H₉O | F | H | |
| 131 | CH₂=CH | F | H | |
| 132 | *E*-CH₃-CH=CH | F | H | |
| 133 | CH₂=CH-O | F | H | |
| 134 | CH₂=CH-CH₂O | F | H | |
| 135 | C₂H₅ | F | F | |
| 136 | *n*-C₃H₇ | F | F | |
| 137 | *n*-C₄H₉ | F | F | |
| 138 | *n*-C₅H₁₁ | F | F | |
| 139 | CH₃O | F | F | |
| 140 | C₂H₅O | F | F | |
| 141 | *n*-C₃H₇O | F | F | |
| 142 | *n*-C₄H₉O | F | F | |
| 143 | CH₂=CH | F | F | |
| 144 | *E*-CH₃-CH=CH | F | F | |
| 145 | CH₂=CH-O | F | F | |
| 146 | CH₂=CH-CH₂O | F | F | |

### Example 147

*E*-1-(4-cyano-phenyl)-2-(4-isothiocyanato-phenyl)-ethene was prepared analoguously to the compound of example 1 above.

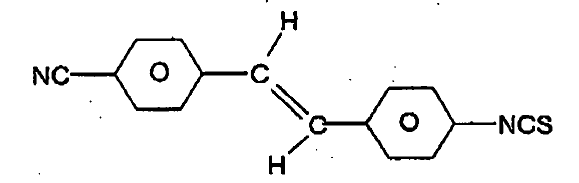

It had the phase sequence: C 188 °C N 190.7 °C I.

### Example 148

*E*-1-(4-cyano-phenyl)-2-(3-fluoro-4-isothiocyanato-phenyl)-ethene was prepared analoguously to the compound of example 1 above.

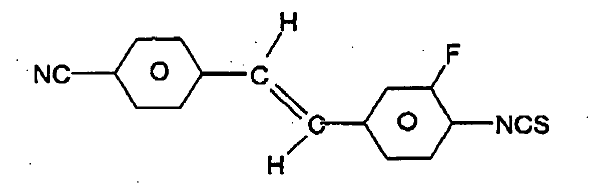

It had the phase sequence: C 178 °C N 181.5 °C I.

### Example 149

*E*-1-(4-cyano-phenyl)-2-(3,5-difluoro-4-isothiocyanato-phenyl)-ethene was prepared analoguously to the compound of example 1 above,

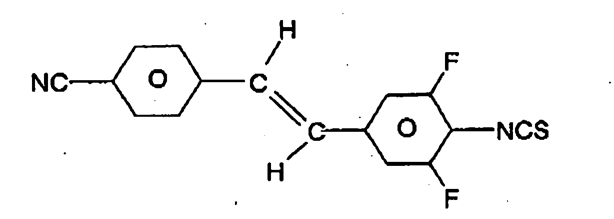

The compound had the phase sequence: C 169 °Cl.

### Examples 150 to 185

Analogously to Example 110 the following compounds are prepared

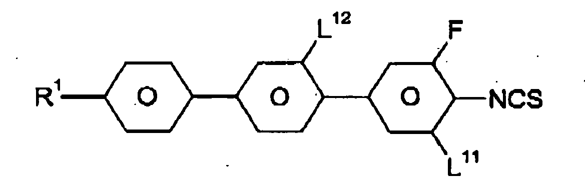

| | | | | |
|---|---|---|---|---|
| No. | R¹ | L¹¹ | L¹² | Phases (T/°C) |
| 150 | C₂H₅ | H | H | |
| 151 | *n*-C₃H₇ | H | H | |
| 152 | *n*-C₄H₉ | H | H | |
| 153 | *n*-C₅H₁₁ | H | H | |
| 154 | CH₃O | H | H | |
| 155 | C₂H₅O | H | H | |
| 156 | *n*-C₃H₇O | H | H | |
| 157 | *n*-C₄H₉O | H | H | |
| 158 | CH₂=CH | H | H | |
| 159 | *E*-CH₃-CH=CH | H | H | |
| 160 | CH₂=CH-O | H | H | |
| 161 | CH₂=CH-CH₂O | H | H | |
| 162 | C₂H₅ | F | H | |
| 163 | *n*-C₃H₇ | F | H | C 107 N 201.4 I |
| 164 | *n*-C₄H₉ | F | H | C 97 S_{A} 105 N 187.4 I |
| 165 | *n*-C₅H₁₁ | F | H | C 95 S_{A} 110 N 190.6 I |
| 166 | CH₃O | F | H | |
| 167 | C₂H₅O | F | H | |
| 168 | *n*-C₃H₇O | F | H | |
| 169 | *n*-C₄H₉O | F | H | |
| 170 | CH₂=CH | F | H | |
| 171 | *E* CH₃-CH=CH | F | H | |
| 172 | CH₂=CH-O | F | H | |
| 173 | CH₂=CH-CH₂O | F | H | |
| 174 | C₂H₅ | F | F | |
| 175 | *n*-C₃H₇ | F | F | C 80 N 172.4 I |
| 176 | *n*-C₄H₉ | F | F | |
| 177 | *n*-C₅H₁₁ | F | F | |
| 178 | CH₃O | F | F | |
| 179 | C₂H₅O | F | F | |
| 180 | *n*-C₃H₇O | F | F | |
| 181 | *n*-C₄H₉O | F | F | |
| 182 | CH₂=CH | F | F | |
| 183 | *E*-CH₃-CH=CH | F | F | |
| 184 | CH₂=CH-O | F | F | |
| 185 | CH₂=CH-CH₂O | F | F | |

### Use-example 1

A liquid crystal mixture is realized consisting of:

| Compound/Abbreviation | Concentration/mass-% |
|---|---|
| K6 | 12.0 |
| K9 | 4.0 |
| K15 | 29.2 |
| M9 | 8.8 |
| T15 | 8.0 |
| PGIP-3-N | 20.0 |
| PVG-20-S | 6.0 |
| PVG-4O-S | 6.0 |
| UPP-4-S | 6.0 |
| Σ | 100.0 |

This mixture has the following properties:

| | |
|---|---|
| Clearing point (T(N,I))/°C: | 95.0 |
| Smectic to nematic | |
| transition point (T(S,N))/°C: | <0 |
| nₑ (20 °C, 589.3 nm): | 1.8492 |
| Δn (20 °C, 589.3 nm): | 0.3123 |
| ε∥ (20 °C, 1 kHz): | 22.5 |
| Δε (20°C, 1 kHz): | 17.3 |
| k₁ (20 °C)/pN: | 13.1 |
| k₃/k₁ (20°C): | 1.79 |
| V_{Freedericksz} = Vₒ (20 °C)/V: | 0.92 |

### Use-example 2

A liquid crystal mixture is realized consisting of:

| Compound/Abbreviation | Concentration/mass-% |
|---|---|
| K6 | 7.0 |
| K9 | 4.0 |
| K15 | 29.0 |
| M9 | 8.0 |
| T15 | 8.0 |
| PGIP-3-N | 20.0 |
| PVG-2O-S | 8.0 |
| PVG-4O-S | 8.0 |
| UPP-4-S | 8.0 |
| Σ | 100.0 |

This mixture has the following properties:

| | |
|---|---|
| Clearing point (T(N,I))/°C: | 102.0 |
| Smectic to nematic | |
| transition point (T(S,N))/°C: | <0 |
| nₑ (20 °C, 589.3 nm): | 1.8639 |
| Δn (20 °C, 589.3 nm): | 0.3267 |
| ε∥ (20 °C, 1 kHz): | 22.6 |
| Δε (20 °C, 1 kHz): | 17.4 |
| k₁ (20 °C)/pN: | 14.0 |
| k₃/k₁ (20 °C): | 1.83 |
| V_{Freedericksz} = Vₒ (20 °C)/V: | 0.95 |

### Use-example 3

A liquid crystal mixture is realized consisting of:

| Compound/Abbreviation | Concentration/mass-% |
|---|---|
| K6 | 5.0 |
| K9 | 4.0 |
| K15 | 25.0 |
| M9 | 8.0 |
| T15 | 8.0 |
| PGIP-3-N | 20.0 |
| PVG-20-S | 10.0 |
| PVG-4O-S | 10.0 |
| UPP-4-S | 10.0 |
| Σ | 100.0 |

This mixture has the following properties:

| | |
|---|---|
| Clearing point (T(N,I))/°C: | 108.0 |
| Smectic to nematic | |
| transition point (T(S,N))/°C: | <0 |
| nₑ (20 °C, 589.3 nm): | 1.8800 |
| Δn (20°C, 589.3 nm): | 0.3425 |
| ε∥ (20°C, 1 kHz): | 22.9 |
| Δε (20 °C, 1 kHz): | 17.8 |
| k₁ (20 °C)/pN: | 15.0 |
| k₃/k₁(20°C): | 1.76 |
| V_{Freedericksz} = Vₒ (20 °C)/V: | 0.97 |

### Use-example 4

A liquid crystal mixture is realized consisting of:

| Compound/Abbreviation | Concentration/mass-% |
|---|---|
| K9 | 3.0 |
| K15 | 25.0 |
| M9 | 8.0 |
| T15 | 8.0 |
| PGIP-3-N | 20.0 |
| PVG-20-S | 12.0 |
| PVG-4O-S | 12.0 |
| UPP-4-S | 12.0 |
| E | 100.0 |

This mixture has the following properties:

| | |
|---|---|
| Clearing point (T(N,I))/°C: | 115.0 |
| Smectic to nematic | |
| transition point (T(S,N))/°C: | <0 |
| nₑ (20 °C, 589.3 nm): | 1.8921 |
| Δn (20 °C, 589.3 nm): | 0.3551 |
| ε∥ (20 °C, 1 kHz): | 22.7 |
| Δε (20 °C, 1 kHz): | 17.5 |
| k₁ (20 °C)/pN: | 15.9 |
| k₃/k₁ (20 °C): | 1.69 |
| V_{Freedericksz} = Vₒ (20 °C)/V: | 1.01 |

### Use-example 5

A liquid crystal mixture is realized consisting of:

| Compound/Abbreviation | Concentration/mass-% |
|---|---|
| K9 | 3.0 |
| K15 | 25.0 |
| M9 | 8.0 |
| T15 | 8.0 |
| PGIP-3-N | 20.0 |
| PVG-20-S | 12.0 |
| PVG-4O-S | 12.0 |
| PVG-5-S | 12.0 |
| Σ | 100.0 |

This mixture has the following properties:

| | |
|---|---|
| Clearing point (T(N,I))/°C: | 110.0 |
| Smectic to nematic | |
| transition point (T(S,N))/°C: | <0 |
| nₑ (20 °C, 589.3 nm): | 1.9036 |
| Δn (20 °C, 589.3 nm): | 0.3652 |
| ε∥ (20 °C, 1 kHz): | 22.8 |
| Δε (20 °C, 1 kHz): | 17.6 |
| k₁ (20 °C)/pN: | 16.0 |
| k₃/k₁ (20 °C): | 1.72 |
| V_{Freedericksz} = Vₒ (20° C)/V: | 1.01 |

### Use-example 6

A liquid crystal mixture is realized consisting of:

| Compound/Abbreviation | Concentrationlmass-% |
|---|---|
| K15 | 26.0 |
| M9 | 8.0 |
| T15 | 8.0 |
| PGIP-3-N | 20.0 |
| PVG-20-S | 12.0 |
| PVG-4O-S | 12.0 |
| PVG-5-S | 14.0 |
| Σ | 100.0 |

This mixture has the following properties:

| | |
|---|---|
| Clearing point (T(N,I))/°C: | 111.5 |
| nₑ (20 °C, 589.3 nm): | 1.9081 |
| Δn (20 °C, 589.3 nm): | 0.3701 |
| ε∥ (20 °C, 1 kHz): | 22.6 |
| Δε (20 °C, 1 kHz): | 17.5 |
| k₁ (20 °C)/pN: | 16.5 |
| k₃/k₁ (20 °C): | 1.67 |
| V_{Freedericksz} = Vₒ (20 °C)/V: | 1.03 |

### Use-example 7

A liquid crystal mixture is realized consisting of:

| Compound/Abbreviation | Concentration/mass-% |
|---|---|
| PTG-5-S | 10.0 |
| PTU-3-S | 15.0 |
| PTU-4O-S | 10.0 |
| PVG-5-S | 10.0 |
| PGU-3-S | 10.0 |
| PPU-3-S | 5.0 |
| PPU-4-S | 5.0 |
| PPU-5-S | 5.0 |
| PGIP-3-N | 15.0 |
| PPYP-4N | 15.0 |
| Σ | 100.0 |

This mixture has the following properties:

| | |
|---|---|
| Clearing point (T(N,I))/°C: | 126.5 |
| Smectic to nematic | |
| transition point (T(S,N))/°C: | <-10 |
| nₑ (20 °C, 589.3 nm): | 1.9475 |
| Δn (20 °C, 589.3 nm): | 0.4016 |

### Use-example 8

A liquid crystal mixture is realized consisting of:

| Compound/Abbreviation | Concentration/mass-% |
|---|---|
| PTG-5-S | 10.0 |
| PTU-3-S | 13.0 |
| PTU-4O-S | 10.0 |
| PVG-5-S | 11.0 |
| PGU-3-S | 10.0 |
| PPU-3-S | 5.0 |
| PPU-4-S | 5.0 |
| PPU-5-S | 5.0 |
| PGIP-3-N | 12.0 |
| PPYP-4N | 13.0 |
| PVG-V-S | 6.0 |
| Σ | 100.0 |

This mixture has the following properties:

| | |
|---|---|
| Clearing point (T(N,I))/°C: | 125.0 |
| Smectic to nematic | |
| transition point (T(S,N))/°C: | <-10 |
| nₑ (20 °C, 589.3 nm): | 1.9623 |
| Δn (20 °C, 589.3 nm): | 0.4153 |

### Use-example 9

A liquid crystal mixture is realized consisting of:

| Compound/Abbreviation | Concentration/mass-% |
|---|---|
| PG-3-AN | 8.0 |
| PU-3-AN | 7.0 |
| PU-5-AN | 7.0 |
| PPVU-2-S | 6.0 |
| PPVU-3-S | 6.0 |
| PGP-3-N | 6.0 |
| PGIP-3-N | 6.0 |
| PPYP-4N | 8.0 |
| PTP-3-S | 4.0 |
| PTG-3-S | 5.0 |
| PVG-5-S | 10.0 |
| PTPG-2-N | 4.0 |
| PPU-CL-S | 4.0 |
| PTP-2O-S | 4.0 |
| PTP-4O-S | 5.0 |
| PTG-2O-S | 5.0 |
| PTG-4O-S | 5.0 |
| Σ | 100.0 |

This mixture has the following properties:

| | |
|---|---|
| Clearing point (T(N,I))/°C: | 135.0 |
| nₑ (20 °C, 589.3 nm): | 1.9906 |
| Δn (20 °C, 589.3 nm): | 0.4511 |

### Comparative Use-example 1

A liquid crystal mixture is realized consisting of:

| Compound/Abbreviation | Concentration/mass-% |
|---|---|
| K6 | 12.0 |
| K9 | 4.0 |
| K15 | 29.6 |
| M9 | 8.8 |
| T15 | 8.0 |
| PGIP-3-N | 20.0 |
| BB21 | 5.6 |
| BCH-5 | 12.0 |
| Σ | 100.0 |

This mixture has the following properties:

| | |
|---|---|
| Clearing point (T(N,I))/°C: | 113.0 |
| nₑ (20 °C, 589.3 nm): | 1.8160 |
| Δn (20 °C, 589.3 nm): | 0.2860 |
| ε∥ (20 °C, 1 kHz): | 22.8 |
| Δε (20 °C, 1 kHz): | 17.3 |

### Comparative Use-example 2

A liquid crystal mixture is realized consisting of:

| Compound/Abbreviation | Concentration/mass-% |
|---|---|
| ME2N.F | 10.00 |
| PPTUI-2-4 | 8.45 |
| PPTUI-3-2 | 5.16 |
| PPTUI-3-4 | 15.82 |
| PPTUI-4-4 | 35.54 |
| PPTUI-5-2 | 7.25 |
| PPTUI-5-4 | 17.78 |
| E | 100.00 |

This mixture has the following properties:

| | |
|---|---|
| Clearing point (T(N,I))/°C: | 145 °C |
| Δn (20 °C, 589.3 nm): | 0.336 |
| ε∥ (20 °C, 1 kHz): | 9.8 |
| Δε (20 °C, 1 kHz): | 6.5 |

### Comparative Use-example 3

A liquid crystal mixture is realized consisting of:

| Compound/Abbreviation | Concentration/mass-% |
|---|---|
| GGP-5-CL | 16.0 |
| PGIGI-3-CL | 6.0 |
| BCH-2F.F | 14.0 |
| BCH-3F.F | 15.0 |
| BCH-5F.F | 14.0 |
| BCH-3F.F.F | 14.0 |
| CGU-2-F | 6.0 |
| CGU-3-F | 6.0 |
| CGU-5-F | 6.0 |
| CBC-33F | 3.0 |
| Σ | 100.0 |

This mixture has the following properties:

| | |
|---|---|
| Clearing point (T(N,I))/°C: | 81.0 |
| Smectic to nematic | |
| transition point (T(S,N))/°C: | <-30 |
| nₑ (20 °C, 589.3 nm): | 1.6711 |
| Δn (20 °C, 589.3 nm): | 0.1603 |
| ε∥ (20°C, 1 kHz): | 14.6 |
| Δε (20 °C, 1 kHz): | 9.9 |
| k₁ (20 °C)/pN: | 10.3 |
| k₃/k₁ (20°C): | 1.09 |

## Claims

1. Liquid crystal medium, **characterized in that** it
- comprises a strongly dielectrically positive liquid crystal component A, which is
a strongly dielectrically positive liquid crystal component consisting of one or more compounds of formula I: 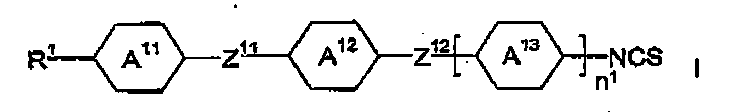 wherein
R¹ is n-alkyl, n-alkoxy with 1 to 7 C-atoms, alkenyl, alkenyloxy or alkoxyalkyl with 2 to 7 C-atoms, 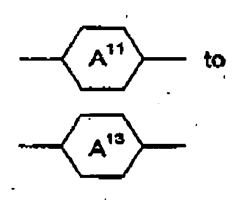 each, independently of each other, are 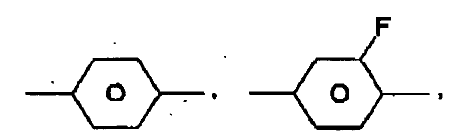 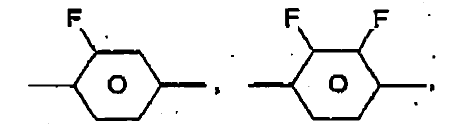 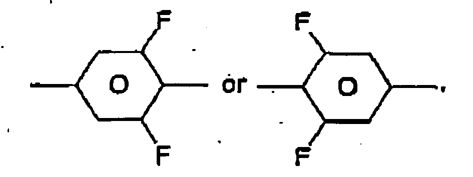
Z¹¹ and Z¹² each are, independently of each other, a single bond or trans -CH=CH-, in case n¹ is 0 Z¹² is a single bond and
n¹ is 0 or 1,
with the condition, that at least one of one of Z¹¹ and Z¹² is trans -CH=CH-
or Z¹¹ and Z¹² both are a single bond and in this case
n¹ is 1 and at least one of 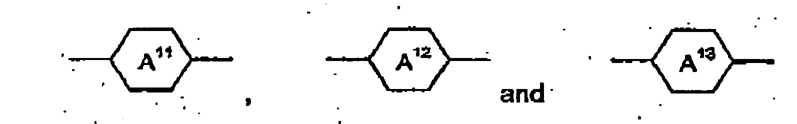 is 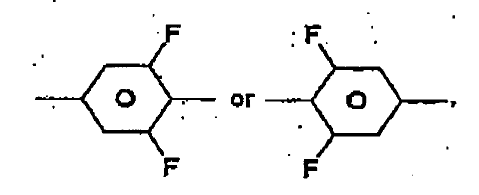 and having a Δn of more than 0.30 at 20°C and 589.3 nm, and
- comprises a further dielectrically positive component B consisting of one more terminally polar substituted bi- or terphenyl compounds.

2. Liquid crystal medium according to claim 1, **characterized in that** the dielectrically positive component A comprises one or more compounds selected from the group of compounds of sub-formulae I-1 to I-3: 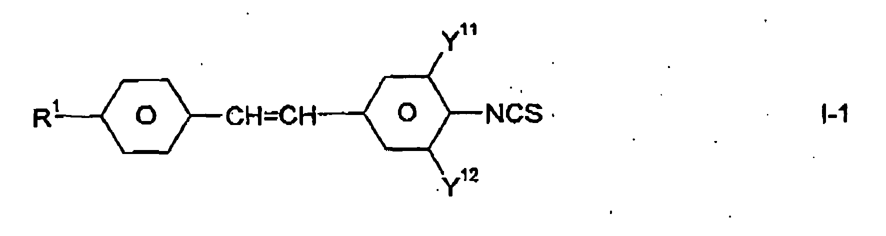 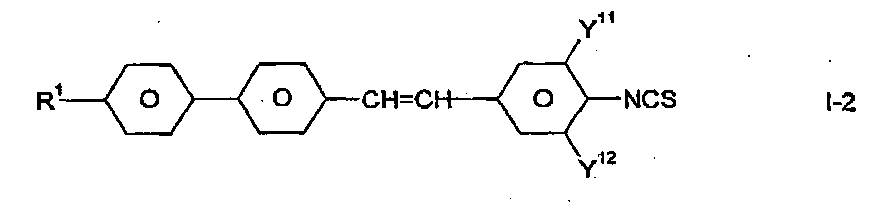 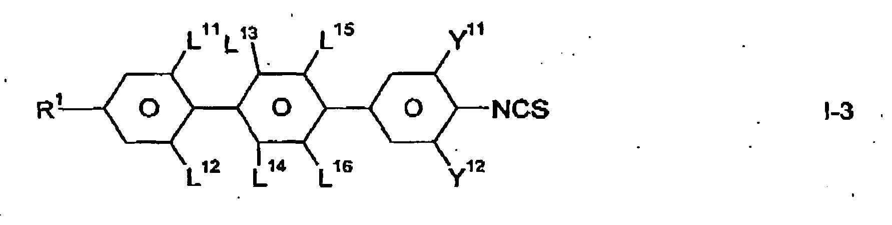 wherein
R¹ is n-alkyl, n-alkoxy with 1 to 10 C-atoms, alkenyl, alkenyloxy or alkoxyalkyl with 2 to 7 C-atoms,
Y¹¹ and Y¹² are independently of each other H or F,
L¹¹ to L¹⁶ are independently of each other H or F
with the condition, that in formula I-3 at least one of the rings 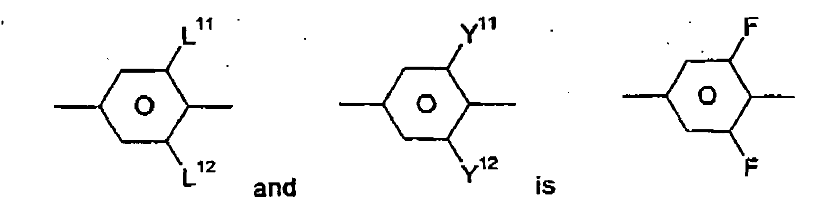 or

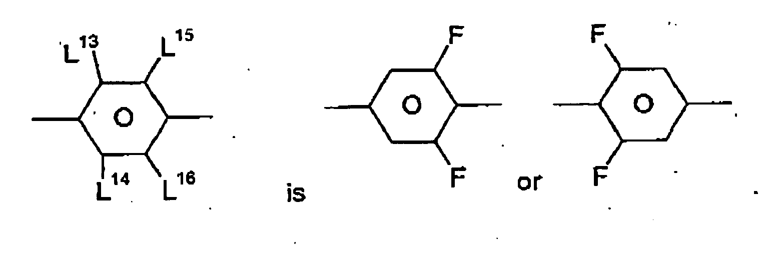

3. Liquid crystal medium according to at least one of claims 1 and 2, **characterized in that** the dielectrically positive component B comprises one or more bi- or terphenyl compounds of formula II 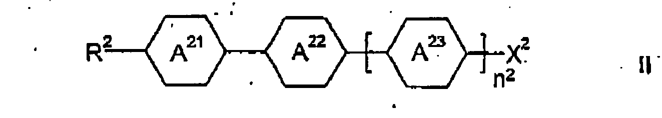 wherein
R² has the meaning given for R¹ under formula I in claim 2 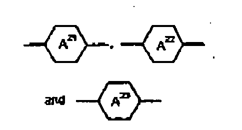 Each have the meaning given for 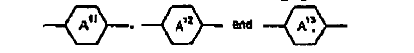 respectively, under formula I in claim 2,
and
n² is 0 or 1
X² is CN, F or Cl.

4. Liquid crystal medium according to at least one of claims 1 to 3, **characterized in that** component A comprises one or more compounds of formula Ia 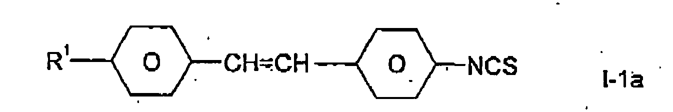 wherein
R¹ has the meaning given under formula I above and preferably is n-alkyl with 1 to 5 C-atoms or n-alkoxy with 1 to 4 C-atoms.

5. Liquid crystal medium according to at least one of claims 1 to 4, **characterized in that** component A comprises one or more compounds of formula I-3d 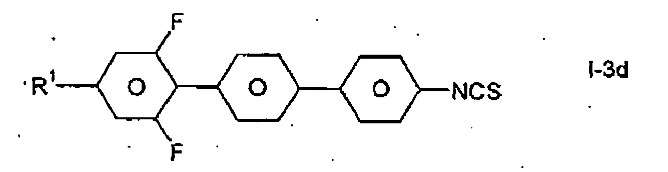 wherein
R¹ is n-alkyl with 1 to 5 C-atoms.

6. Liquid crystal medium according to at least one of claims 1 to 5, **characterized in that** the dielectrically positive component A comprises one or more compounds selected from the group of compounds of sub-formulae I-1a to I-1c, I-2a to I-2i and I-3d: 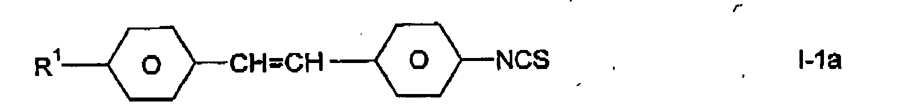 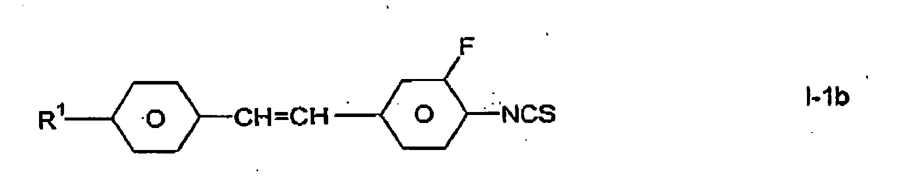 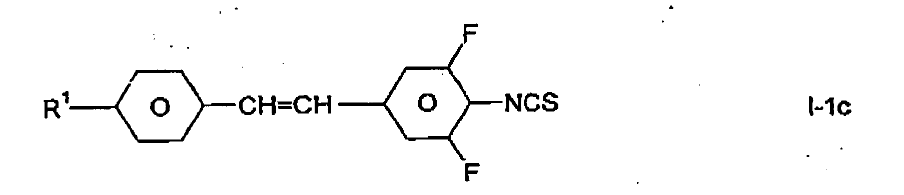 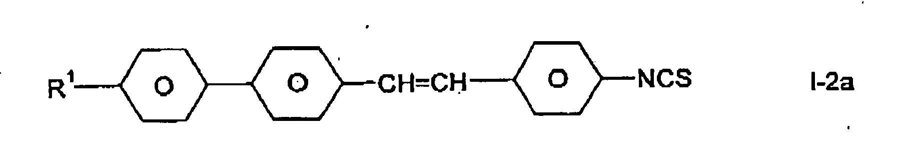 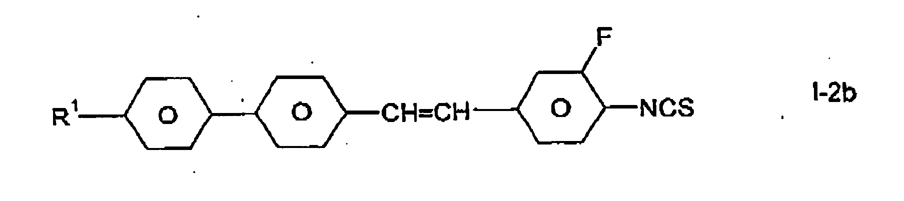 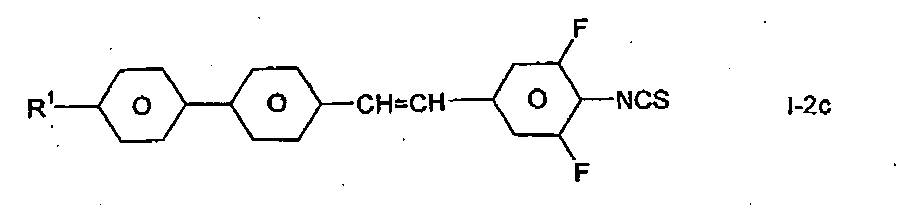 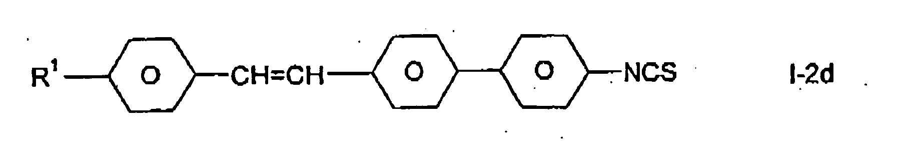 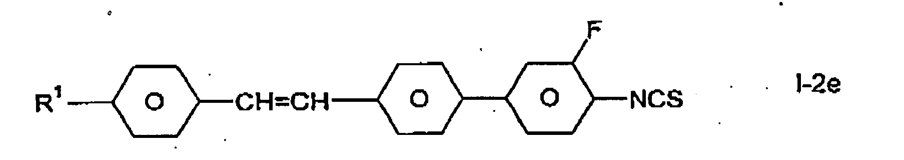 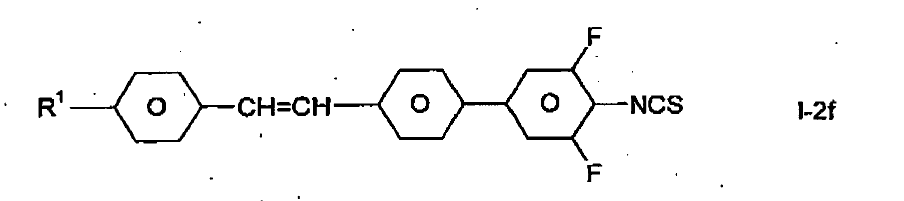 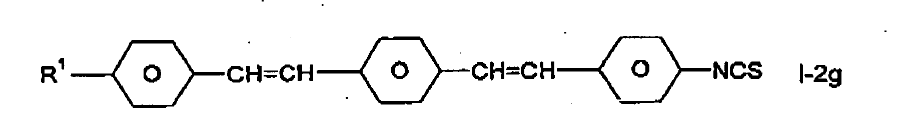 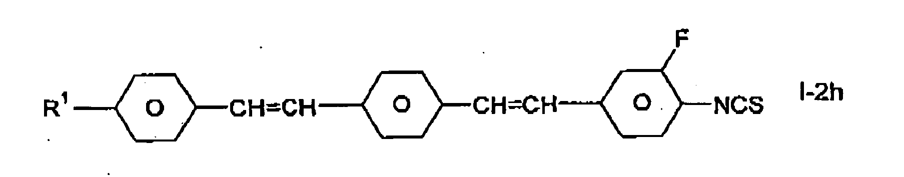 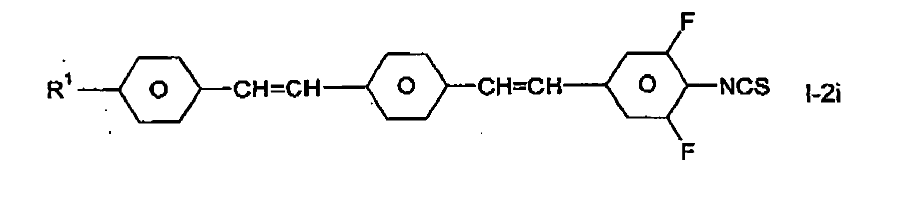 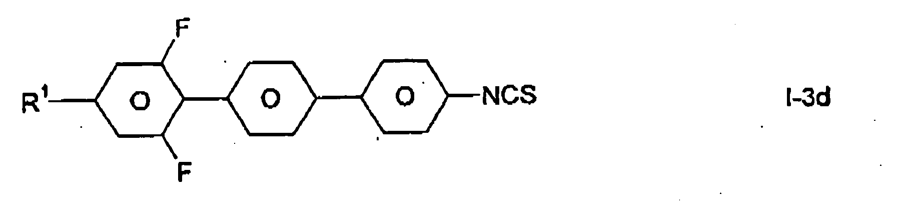 wherein
R¹ has the meaning given in claim 1.

7. Liquid crystal display, **characterized in that** it comprises a liquid crystal medium according to at least one of claims 1 to 6.

8. Liquid crystal display according to claim 7, **characterized in that** it comprises a composite system comprising a liquid crystal medium according to at least one of claims 1 to 6 and a polymer.

9. Liquid crystal display system according to at least one of claims 7 and 8, **characterized in that** it is a holographic display system.

10. Use of a liquid crystal medium according to at least one of claims 1 to 6 in a liquid crystal system.

11. Compound of formula I 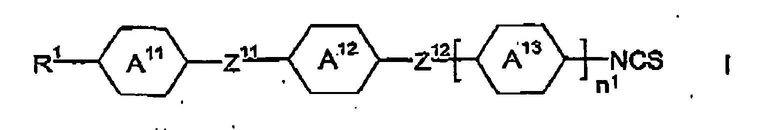 wherein
R¹ is n-alkyl, n-alkoxy with 1 to 7 C-atoms, alkenyl, alkenyloxy or alkoxyalkyl with 2 to 7 C-atoms, 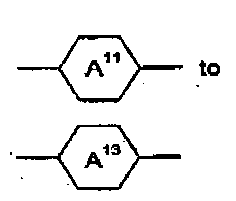 each, independently of each other, are 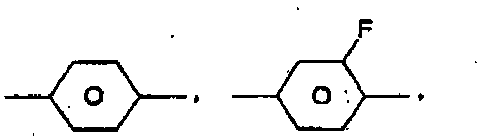 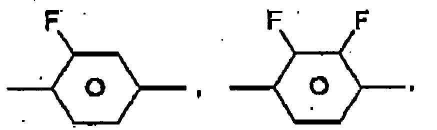 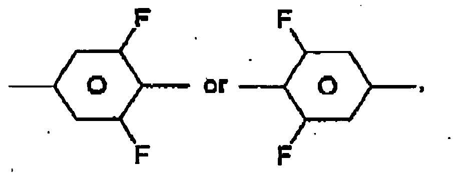
Z¹¹ and Z¹² each are independently of each other a single bond or trans -CH=CH-, in case n¹ is 0 Z¹² is a single bond and
n¹ is 0 or 1,
with the condition, that at least one of one of Z¹¹ and Z¹² is trans -CH=CH-
or Z¹¹ and Z¹² both are a single bond and in this case
n¹ is 1 and at least one of 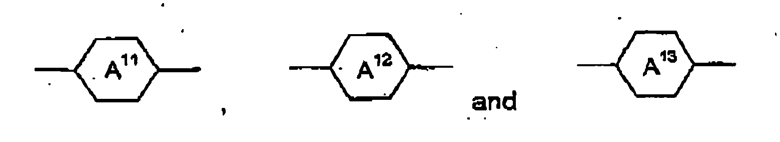 is

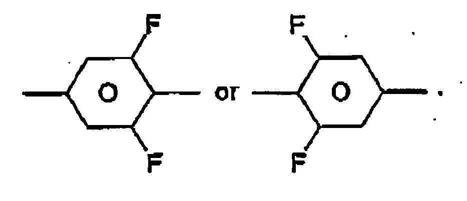

12. Compound selected from the group of compounds of formulae I-1 to I-3: 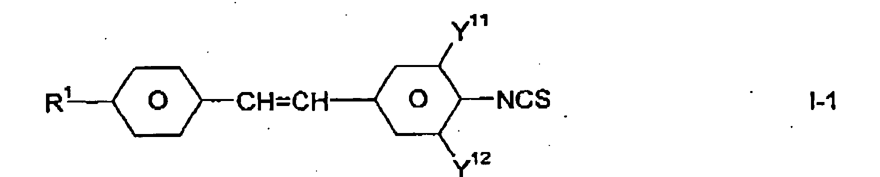 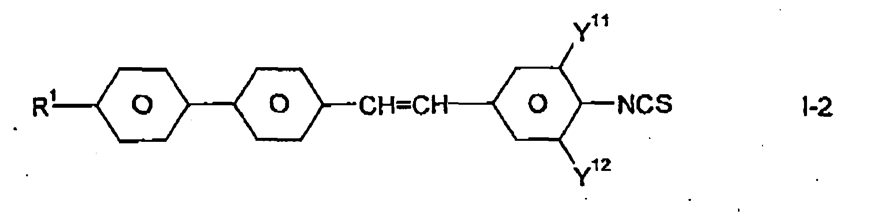 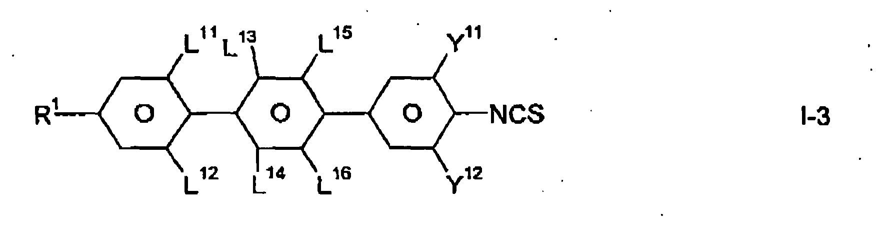 wherein
R¹ is n-alkyl, n-alkoxy with 1 to 10 C-atoms, alkenyl, alkenyloxy or Alkoxyalkyl with 2 to 7 C-atoms,
Y¹¹ and Y¹² are independently of each other H or F,
L¹¹ to L¹⁶ are independently of each other H or F
with the condition, that in formula I-3 at least one of the rings 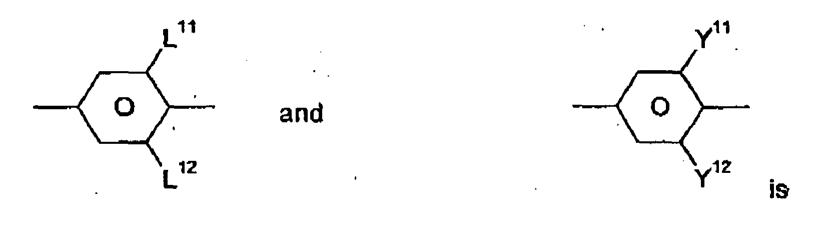 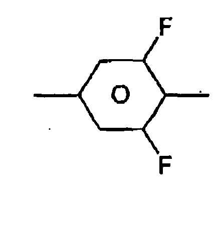 or

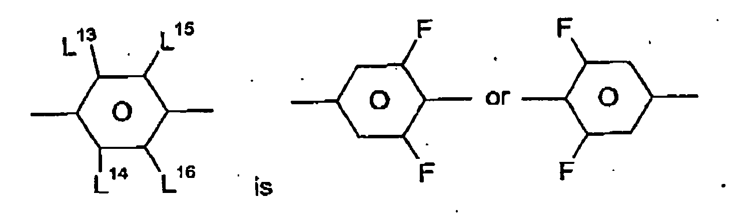

13. Compound selected from the group of formulae I-1a to I-1c, 1-2a to I-2i and I-3d: 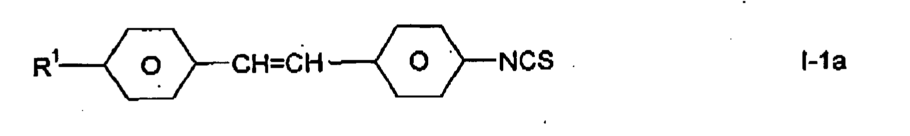 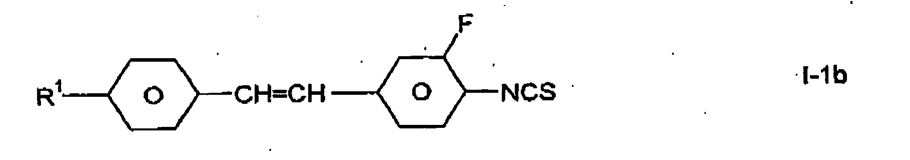 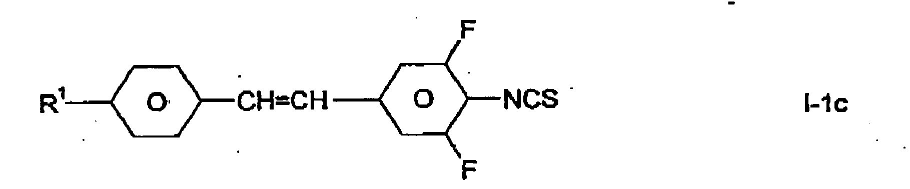 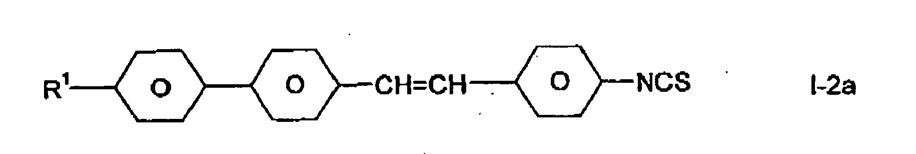 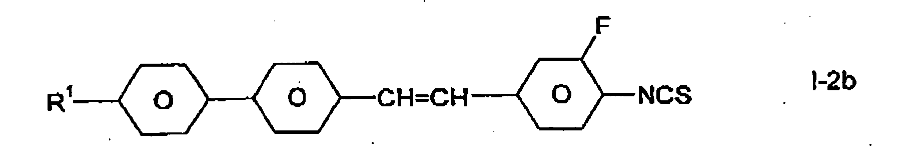 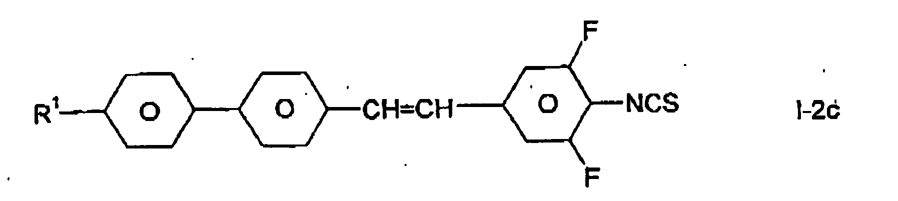 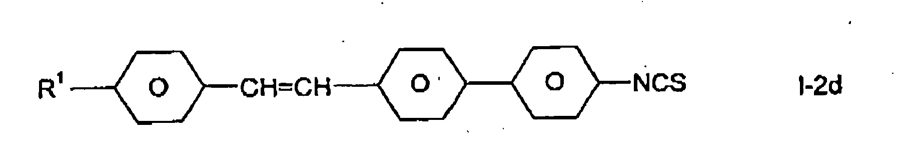 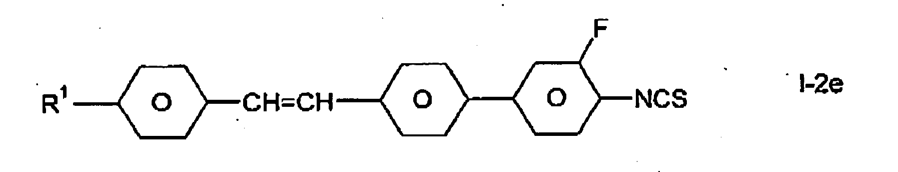 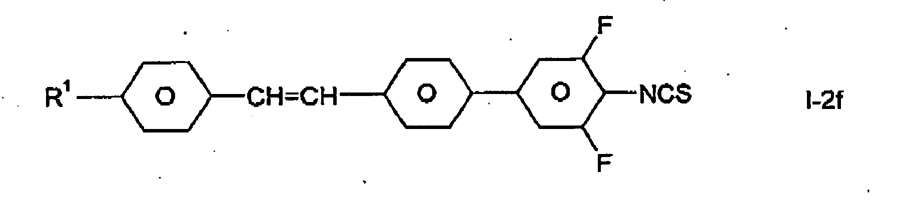 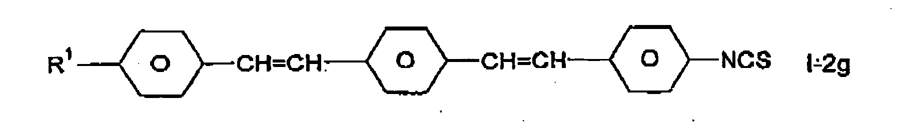 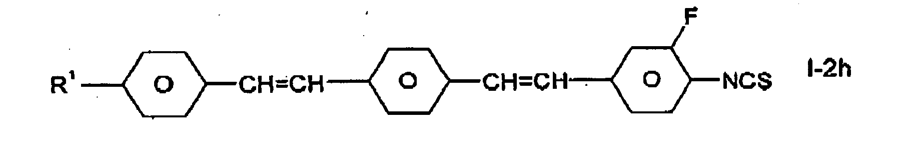 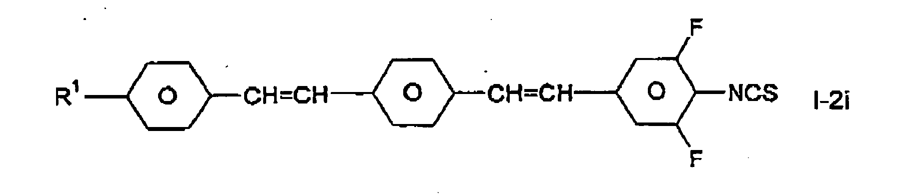 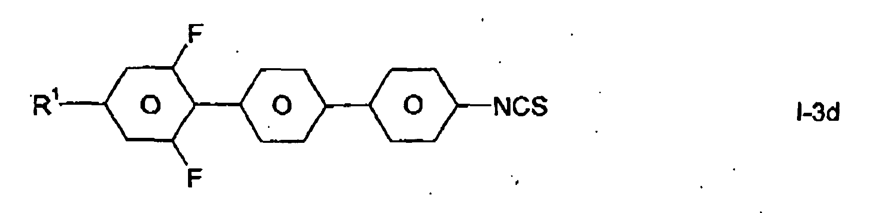 wherein
R¹ has the meaning given in claim 12.

## Patentansprüche

1. Flüssigkristallmedium, **dadurch gekennzeichnet, dass** es
- eine stark dielektrisch positive Flüssigkristallkomponente A enthält, bei der es sich um
eine stark dielektrisch positive Flüssigkristallkomponente bestehend aus einer oder mehreren Verbindungen der Formel I 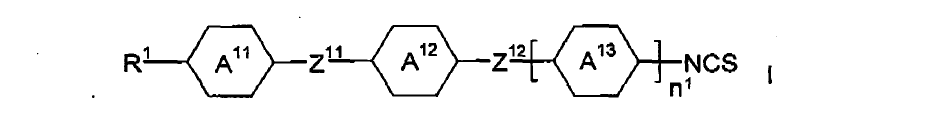 worin
R¹ n-Alkyl, n-Alkoxy mit 1 bis 7 C-Atomen, Alkenyl, Alkenyloxy oder Alkoxyalkyl mit 2 bis 7 C-Atomen bedeutet, 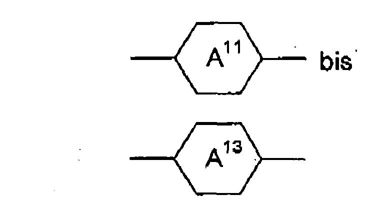 jeweils unabhängig voneinander 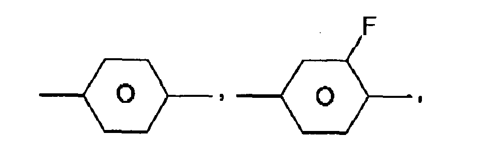 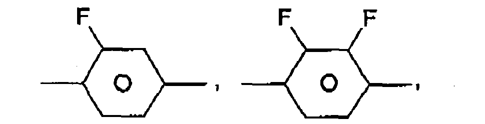 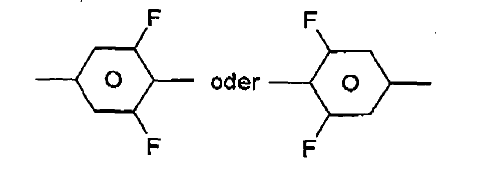 bedeuten,
Z¹¹ und Z¹² jeweils unabhängig voneinander eine Einfachbindung oder trans -CH=CH- bedeuten, wenn n¹ 0 ist, Z¹² eine Einfachbindung bedeutet und
n¹ 0 oder 1 bedeutet,
mit der Maßgabe, dass mindestens eines von Z¹¹ und Z¹² trans -CH=CH- bedeutet
oder Z¹¹ und Z¹² beide eine Einfachbindung bedeuten und in diesem Fall
n¹ 1 bedeutet und mindestens eines von 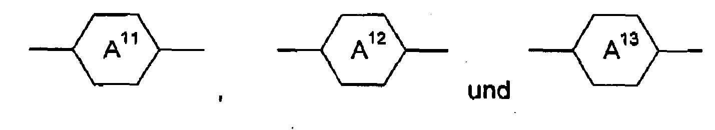 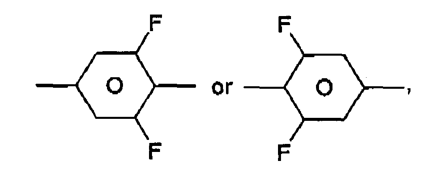 bedeuten,
und mit einem Δn von mehr als 0,30 bei 20 °C und 589,3 nm handelt,
- eine weitere dielektrisch positive Komponente B bestehend aus einer oder mehreren endständig polar substituierten Bi- oder Terphenylverbindungen enthält.

2. Flüssigkristallmedium nach Anspruch 1, **dadurch gekennzeichnet, dass** die dielektrisch positive Komponente A eine oder mehrere Verbindungen ausgewählt aus der Gruppe der Verbindungen der Unterformeln I-1 bis I-3: 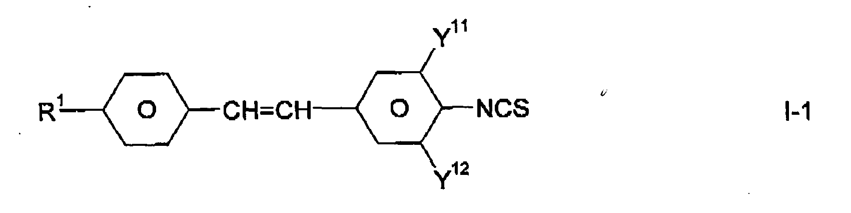 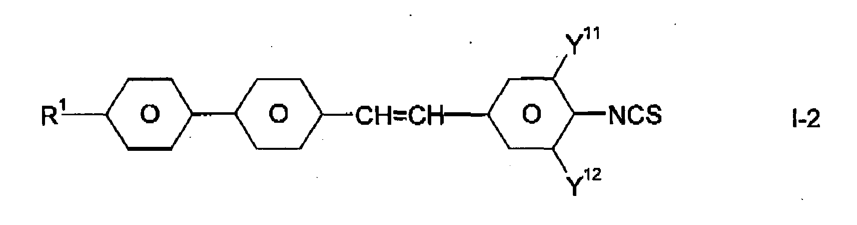 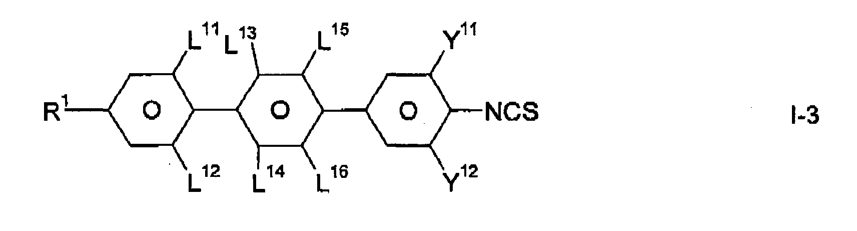 enthält, worin
R¹ n-Alkyl, n-Alkoxy mit 1 bis 10 C-Atomen, Alkenyl, Alkenyloxy oder Alkoxyalkyl mit 2 bis 7 C-Atomen bedeutet,
Y¹¹ und Y¹² unabhängig voneinander H oder F bedeuten,
L¹¹ bis L¹⁶ unabhängig voneinander H oder F bedeuten,
mit der Maßgabe, dass in Formel I-3 mindestens einer der Ringe 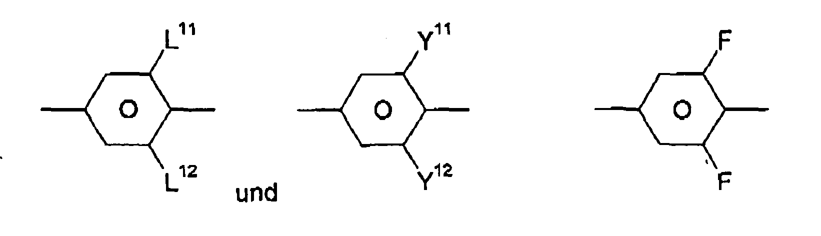 bedeutet oder 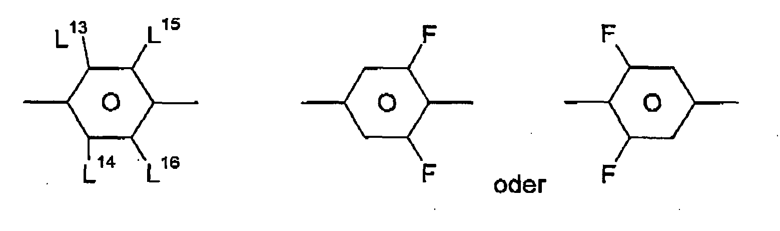 bedeutet.

3. Flüssigkristallmedium nach mindestens einem der Ansprüche 1 und 2, **dadurch gekennzeichnet, dass** die dielektrisch positive Komponente B eine oder mehrere Bi- oder Terphenylverbindungen der Formel II 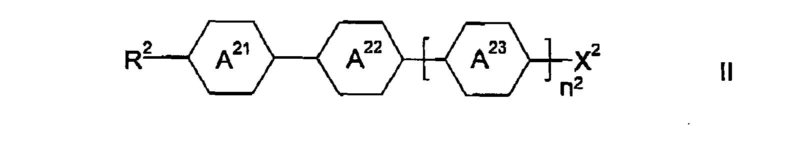 enthält, worin
R² die für R¹ unter Formel I in Anspruch 2 angegebene Bedeutung besitzt, 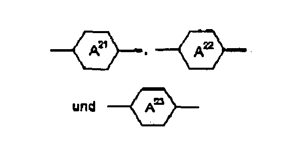 jeweils die für 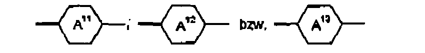 unter Formel I in Anspruch 2 angegebene Bedeutung besitzen,
n² 0 oder 1
und
x² CN, F oder Cl bedeutet.

4. Flüssigkristallmedium nach mindestens einem der Ansprüche 1 bis 3, **dadurch gekennzeichnet, dass** die Komponente A eine oder mehrere Verbindungen der Formel la 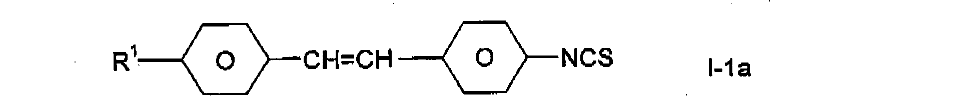 enthält, worin
R¹ die oben unter Formel I angegebene Bedeutung besitzt und vorzugsweise n-Alkyl mit 1 bis 5 C-Atomen oder n-Alkoxy mit 1 bis 4 C-Atomen bedeutet.

5. Flüssigkristallmedium nach mindestens einem der Ansprüche 1 bis 4, **dadurch gekennzeichnet, dass** die Komponente A eine oder mehrere Verbindungen der Formel I-3d 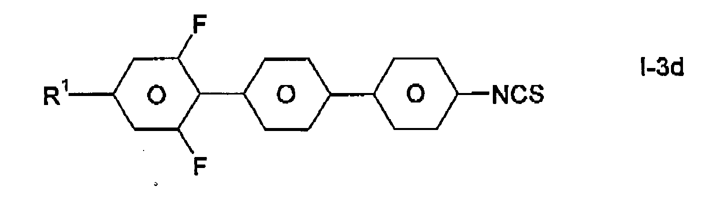 enthält, worin
R¹ n-Alkyl mit 1 bis 5 C-Atomen bedeutet.

6. Flüssigkristallmedium nach mindestens einem der Ansprüche 1 bis 5, **dadurch gekennzeichnet, dass** die dielektrisch positive Komponente A eine oder mehrere Verbindungen ausgewählt aus der Gruppe der Verbindungen der Unterformeln I-1a bis I-1c, I-2a bis I-2i und I-3d: 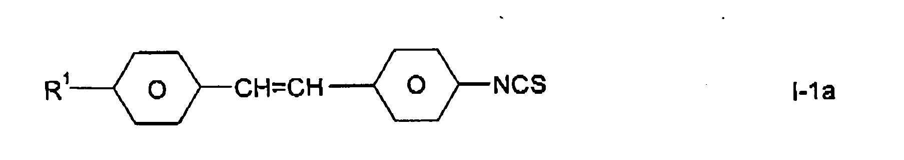 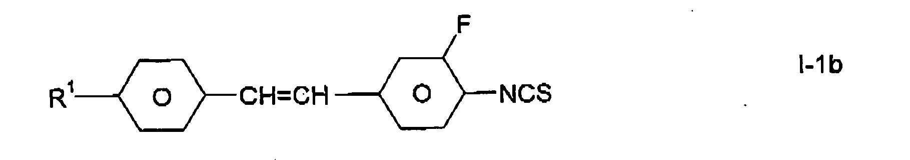 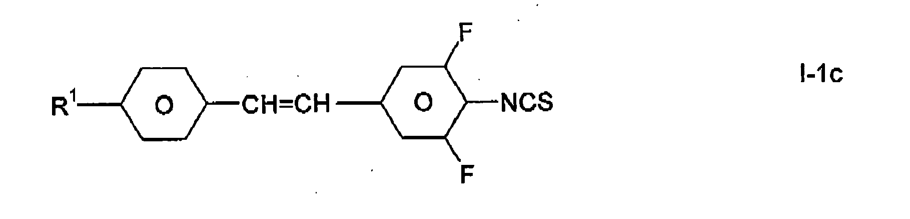 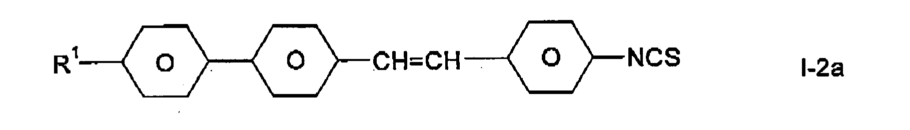 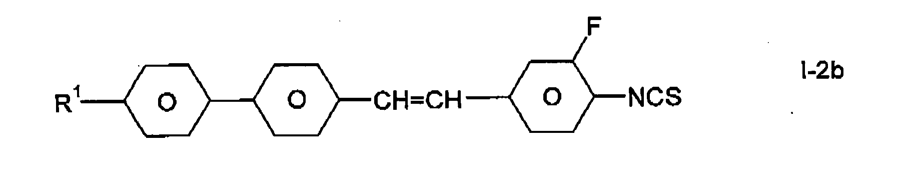 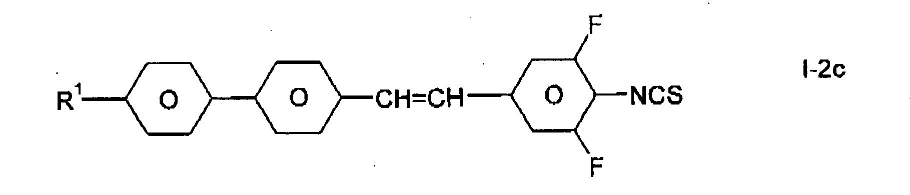 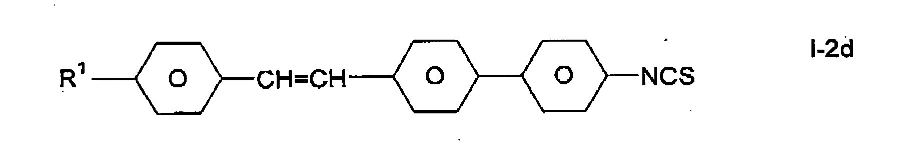 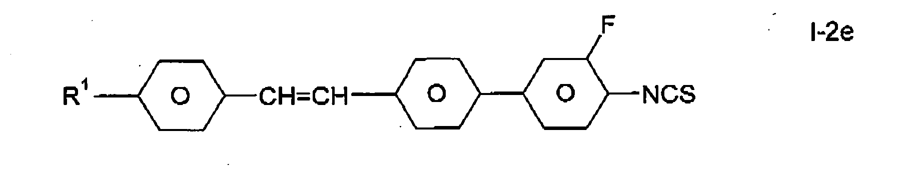 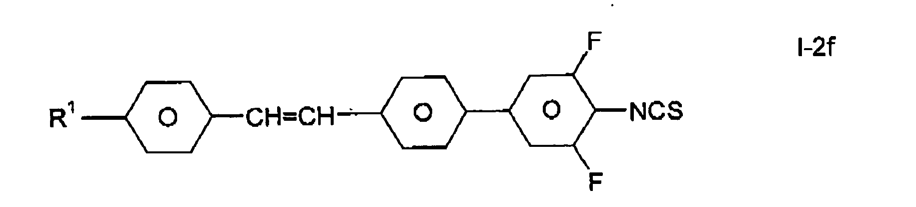 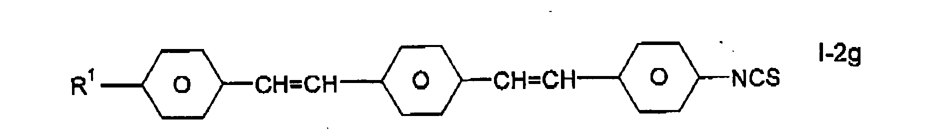 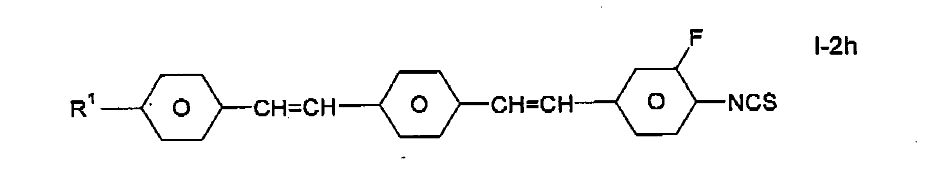 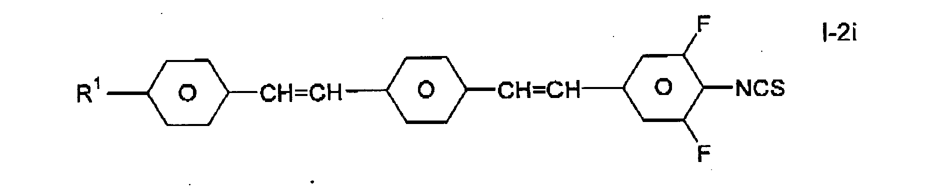 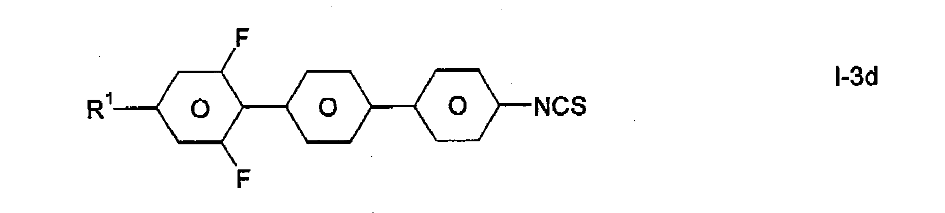 enthält, worin
R¹ die in Anspruch 1 angegebene Bedeutung besitzt.

7. Flüssigkristallanzeige, **dadurch gekennzeichnet, dass** sie ein Flüssigkristallmedium nach mindestens einem der Ansprüche 1 bis 6 enthält.

8. Flüssigkristallanzeige nach Anspruch 7, **dadurch gekennzeichnet, dass** sie ein Verbundsystem enthaltend ein Flüssigkristallmedium nach mindestens einem der Ansprüche 1 bis 6 und ein Polymer enthält.

9. Flüssigkristallanzeige nach mindestens einem der Ansprüche 7 und 8, **dadurch gekennzeichnet, dass** es sich um ein holographisches Anzeigesystem handelt.

10. Verwendung eines Flüssigkristallmediums nach mindestens einem der Ansprüche 1 bis 6 in einem Flüssigkristallsystem.

11. Verbindung der Formel I 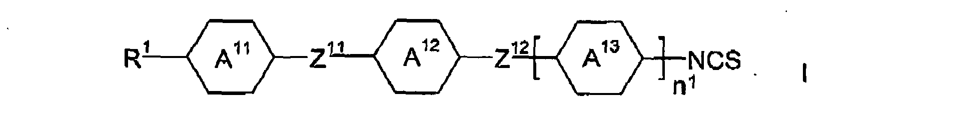 worin
R¹ n-Alkyl, n-Alkoxy mit 1 bis 7 C-Atomen, Alkenyl, Alkenyloxy oder Alkoxyalkyl mit 2 bis 7 C-Atomen bedeutet, 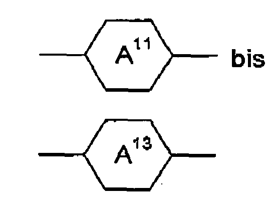 jeweils unabhängig voneinander 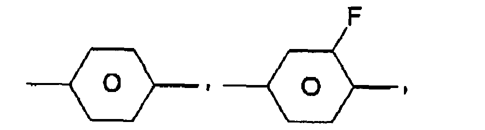 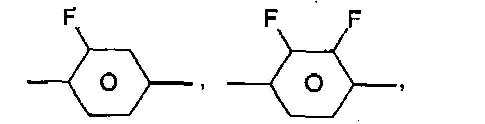 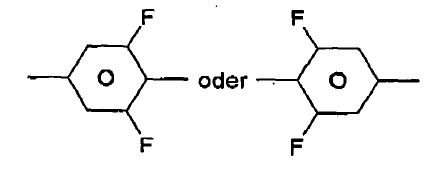 bedeuten,
Z¹¹ und Z¹² jeweils unabhängig voneinander eine Einfachbindung oder trans -CH=CH- bedeuten, wenn n¹ 0 ist, Z¹² eine Einfachbindung bedeutet und
n¹ 0 oder 1 bedeutet,
mit der Maßgabe, dass mindestens eines von Z¹¹ und Z¹² trans -CH=CH- bedeutet
oder Z¹¹ und Z¹² beide eine Einfachbindung bedeuten und in diesem Fall
n¹ 1 bedeutet und mindestens eines von 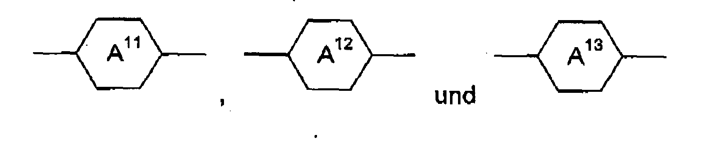 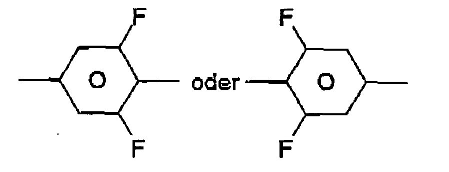 bedeutet.

12. Verbindung ausgewählt aus der Verbindungen der Formeln I-1 bis I-3: 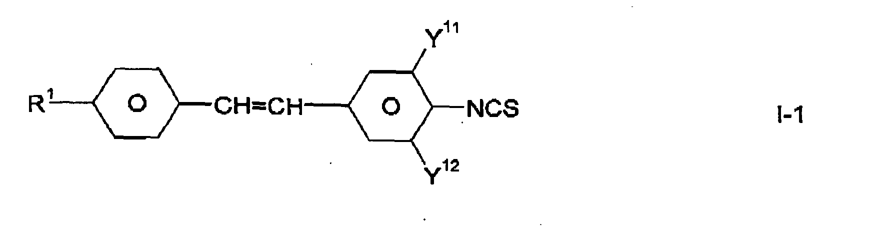 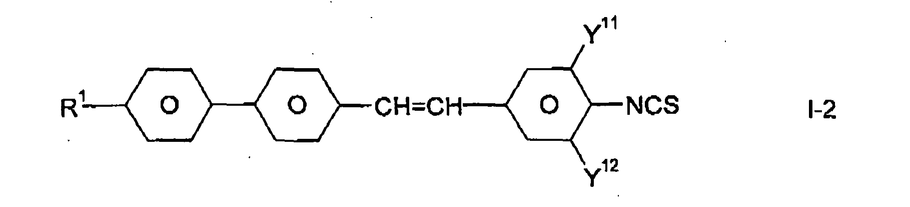 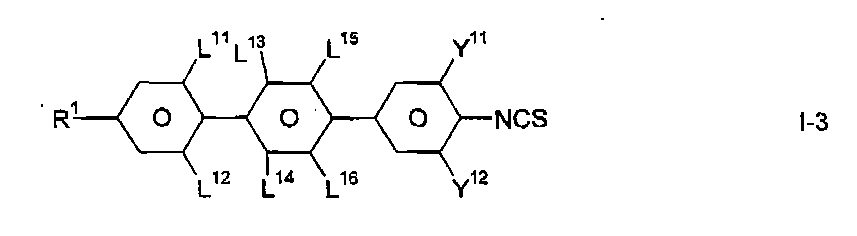 worin
R¹ n-Alkyl, n-Alkoxy mit 1 bis 10 C-Atomen, Alkenyl, Alkenyloxy oder Alkoxyalkyl mit 2 bis 7 C-Atomen bedeutet,
Y¹¹ und Y¹² unabhängig voneinander H oder F bedeuten,
L¹¹ bis L¹⁶ unabhängig voneinander H oder F bedeuten,
mit der Maßgabe, dass in Formel I-3 mindestens einer der Ringe 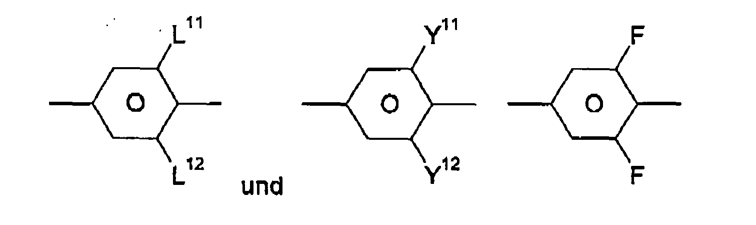 bedeutet oder 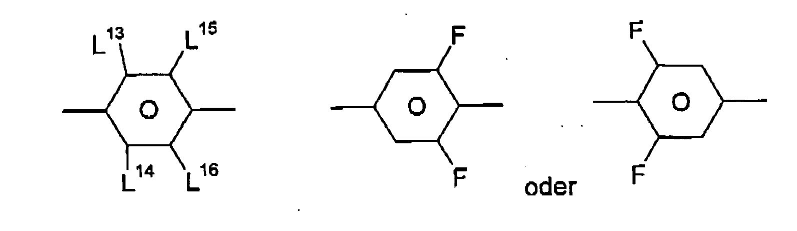 bedeutet.

13. Verbindung ausgewählt aus der Gruppe der Formeln I-1a bis I-1c, I-2a bis I-2i und I-3d: 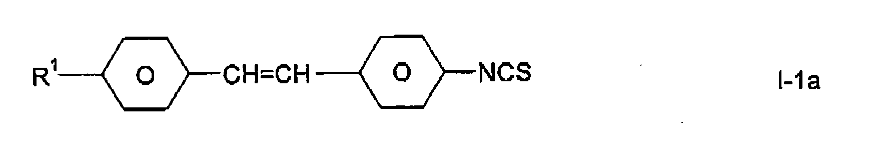 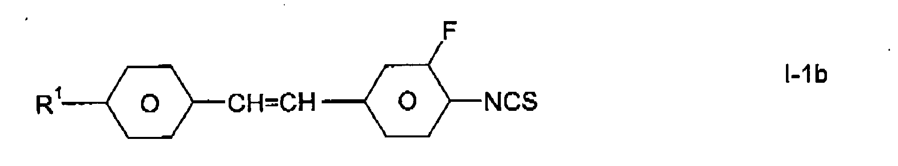 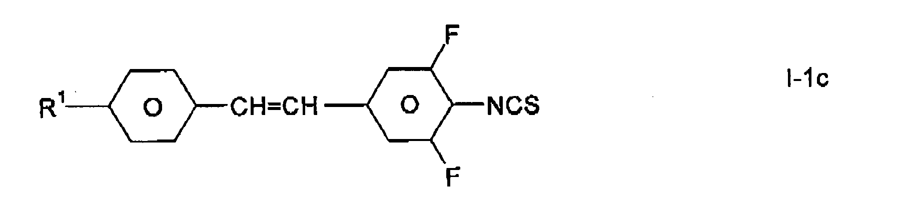 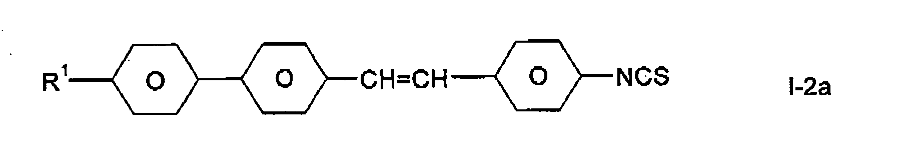 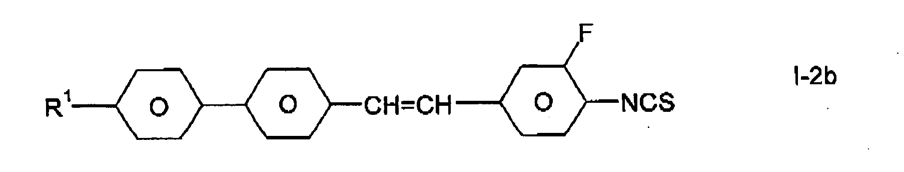 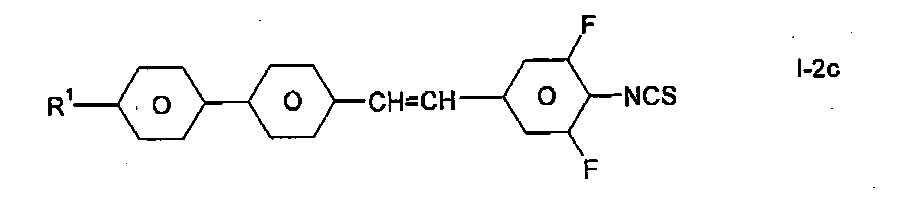 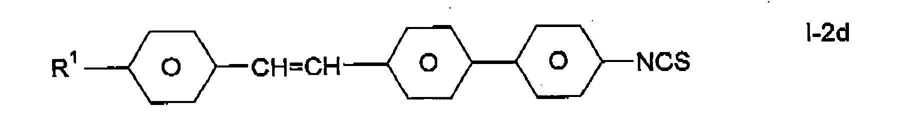 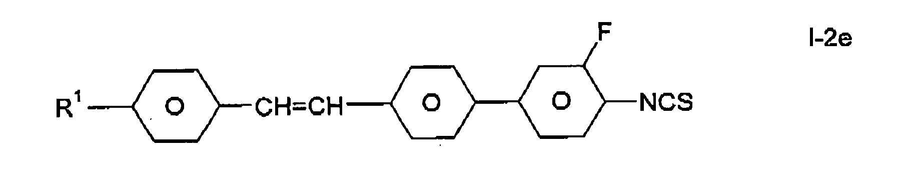 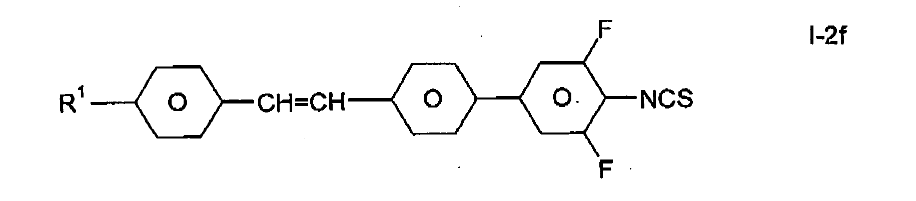 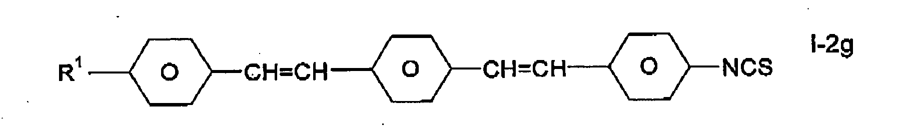 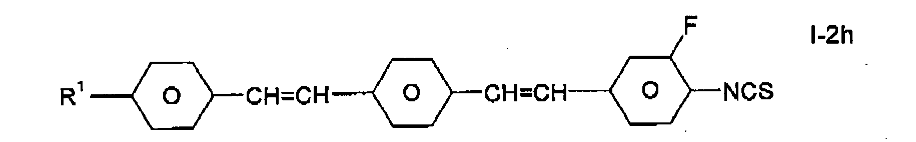 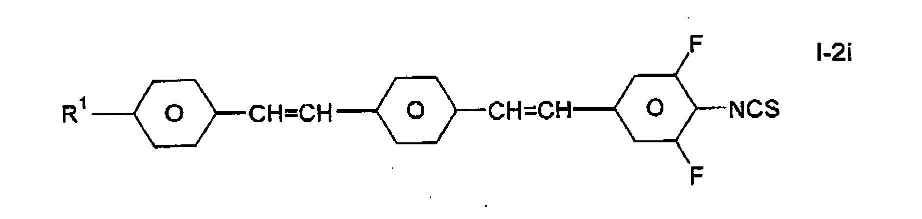 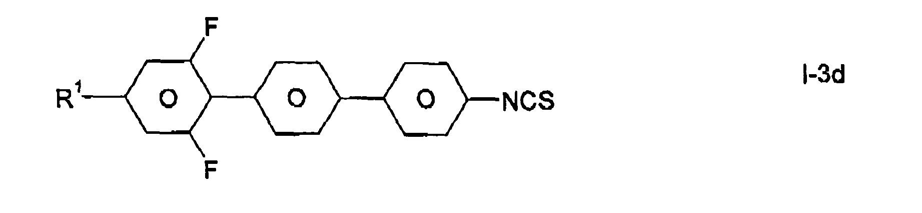 worin
R¹ die in Anspruch 12 angegebene Bedeutung besitzt.

## Revendications

1. Milieu de cristal liquide, **caractérisé en ce qu'**il
- comprend un composant de cristal liquide fortement diélectriquement positif A, qui est
un composant de cristal liquide fortement diélectriquement positif constitué d'un ou plusieurs composes de la formule I : 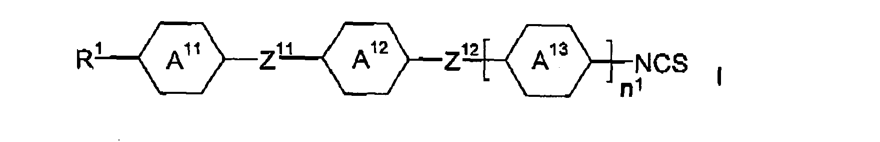
dans laquelle
R¹ est n-alkyle, n-alcoxy avec 1 à 7 atomes de C, alkényle, alkényloxy ou alcoxyalkyle avec 2 à 7 atomes de C, 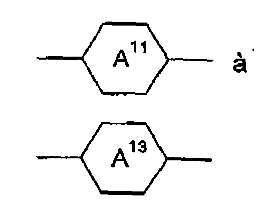 chacun, indépendamment les uns des autres, sont 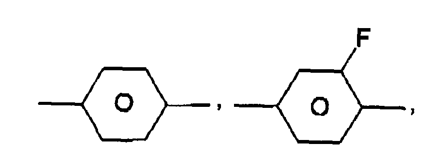 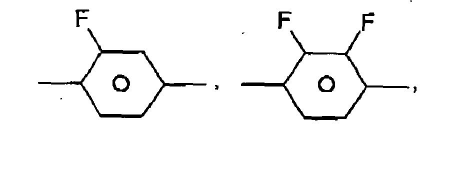 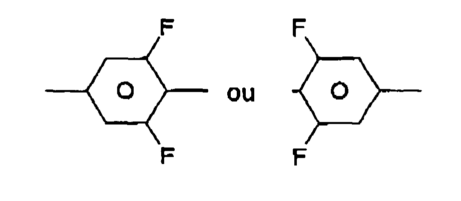
Z¹¹ et Z¹² chacun, indépendamment l'un de l'autre, sont une liaison simple ou trans -CH=CH-, dans le cas où n¹ est 0, Z¹² est une liaison simple et
n¹ est 0 ou 1,
avec la condition qu'au moins un de Z¹¹ et Z¹² est trans -CH=CH-
ou Z¹¹ et Z¹² sont tous deux une liaison simple et dans ce cas
n¹ est 1 et au moins un de 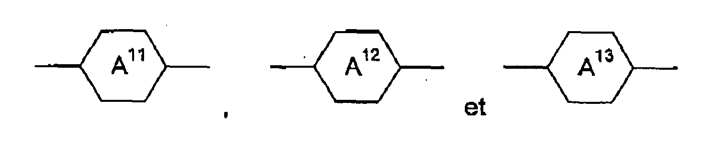 est 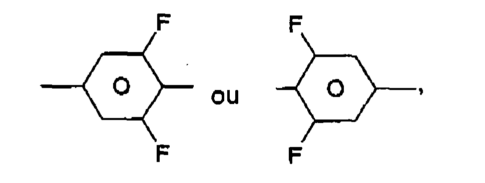 et ayant un Δn de plus de 0,30 à 20°C et 589,3 nm, et
- comprend un composant encore plus diélectriquement positif B constitué d'un ou plusieurs composés bi- ou terphényle substitués polaires en terminaison.

2. Milieu de cristal liquide selon la revendication 1, **caractérisé en ce que** le composant diélectriquement positif A comprend un ou plusieurs composés choisis parmi le groupe des composés des sous-formules I-1 à I-3: 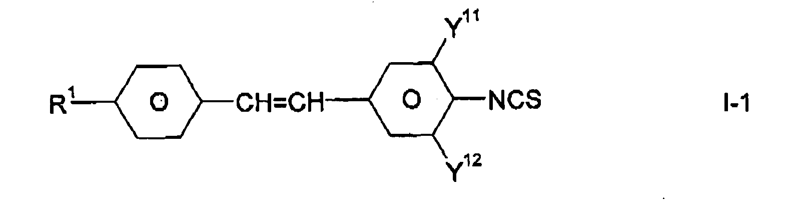 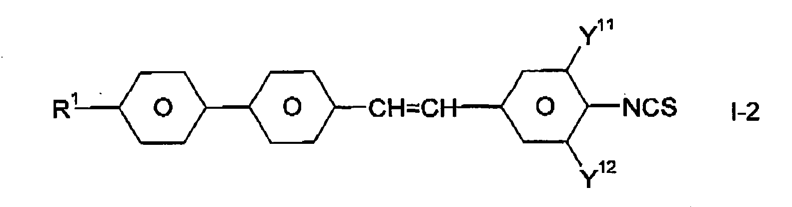 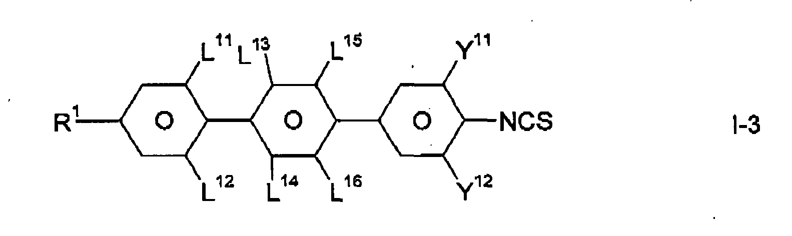 dans lesquelles
R¹ est n-alkyle, n-alcoxy avec 1 à 10 atomes de C, alkényle, alkényloxy ou alcoxyalkyle avec 2 à 7 atomes de C,
Y¹¹ et Y¹² sont indépendamment l'un de l'autre H ou F
L¹¹ à L¹⁶ sont indépendamment les uns des autres H ou F,
avec la condition que dans la formule I-3 au moins un des cycles 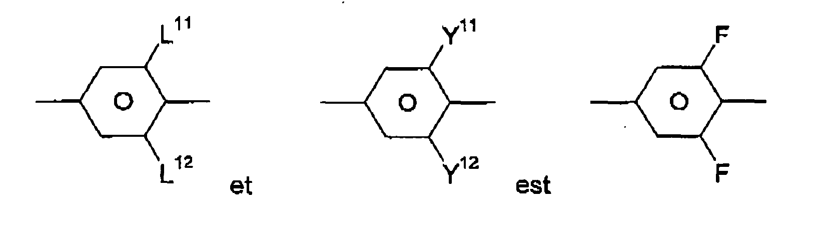 ou

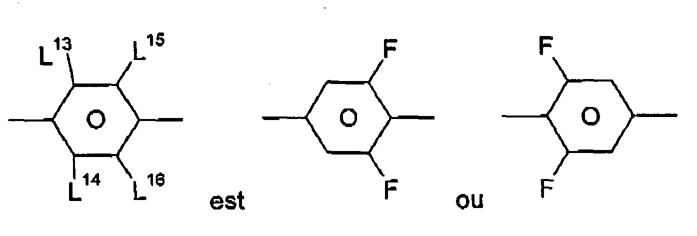

3. Milieu de cristal liquide selon au moins une des revendications 1 et 2, **caractérisé en ce que** le composant diélectriquement positif B comprend un ou plusieurs composés biphenyle ou terphenyle de la formule II 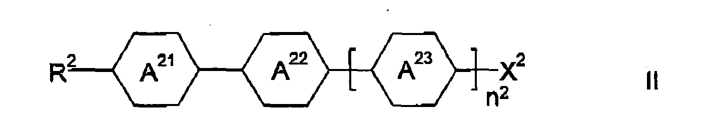 dans laquelle
R² a la signification donnée pour R¹ sous la formule I dans la revendication 2 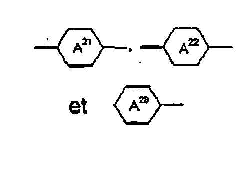 chacun ont la signification donnée pour 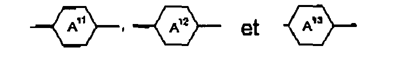 respectivement, sous la formule I dans la revendication 2,
n² est 0 ou 1
et
X² est CN, F ou Cl.

4. Milieu de cristal liquide selon au moins une des revendications 1 à 3, **caractérisé en ce que** le composant A comprend un ou plusieurs composés de la formule Ia 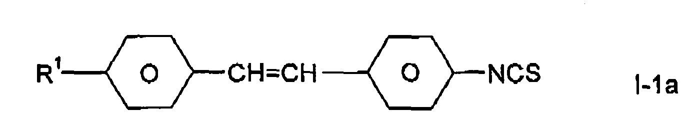 dans laquelle
R¹ a la signification donnée sous la formule I ci dessus et de préférence est n-alkyle avec 1 à 5 atomes de C ou n-alcoxy avec 1 à 4 atomes de C.

5. Milieu de cristal liquide selon au moins une des revendications 1 à 4, **caractérisé en ce que** le composant A comprend un ou plusieurs composés de la formule I-3d 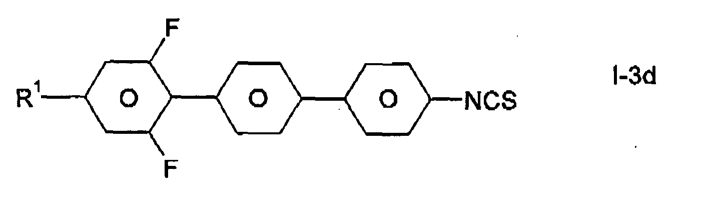 dans laquelle
R¹ est n-alkyle avec 1 à 5 atomes de C.

6. Milieu de cristal liquide selon au moins une des revendications 1 à 5, **caractérisé en ce que** le composant diélectriquement positif A comprend un ou plusieurs composés choisis parmi le groupe des composés des sous-formules I-1a à I-1c, I-2a à I-2i et I-3d: 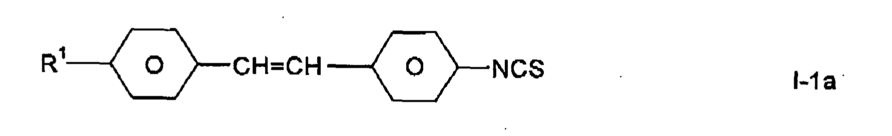 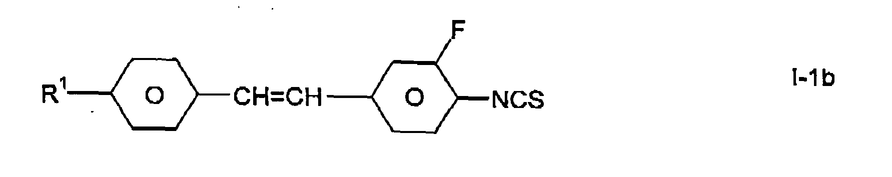 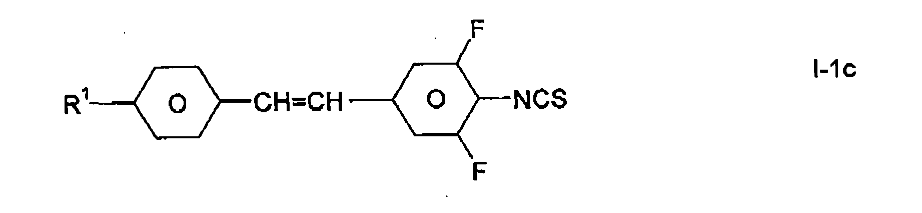 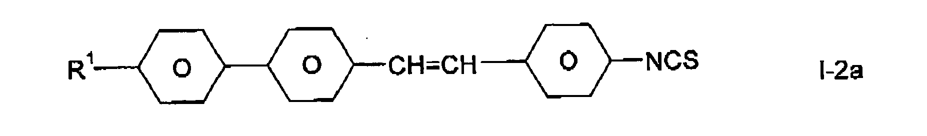 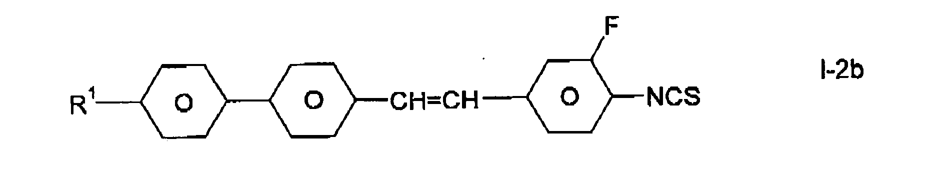 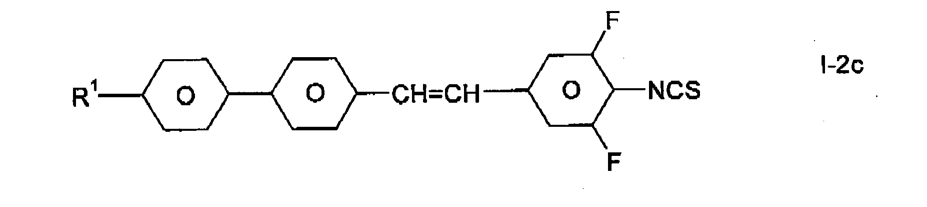 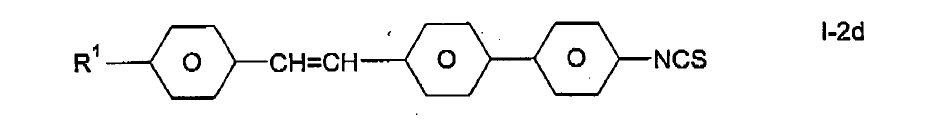 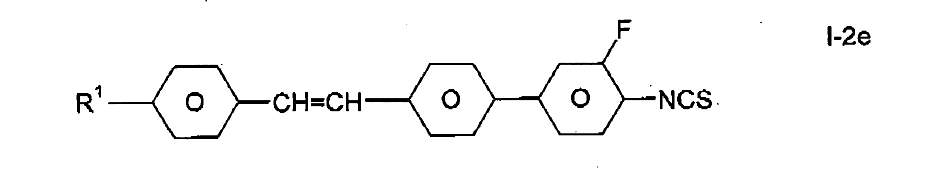 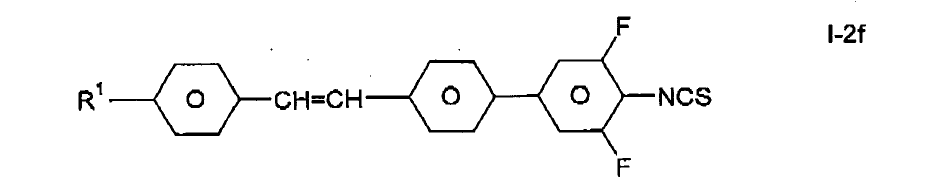 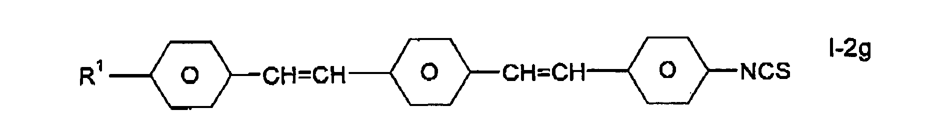 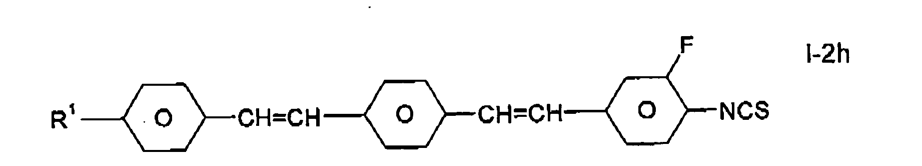 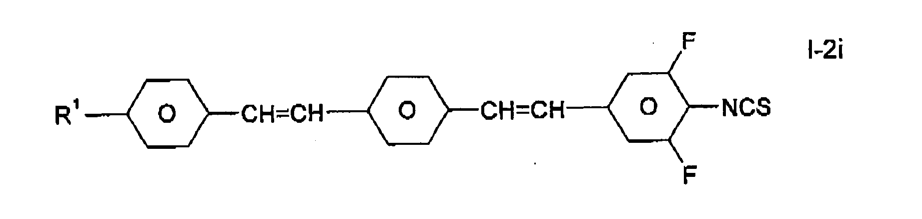 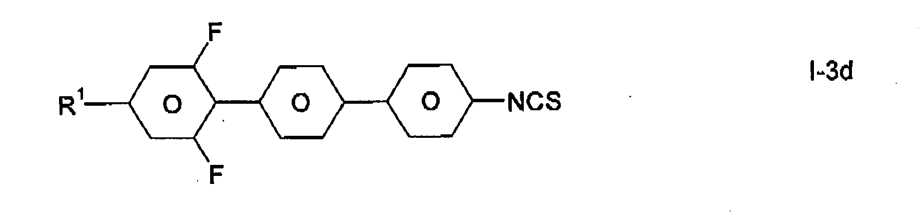 dans lesquelles
R¹ a la signification donnée dans la revendication 1.

7. Affichage à cristal liquide, **caractérisé en ce qu'**il comprend un milieu de cristal liquide selon au moins une des revendications 1 à 6.

8. Affichage à cristal liquide selon la revendication 7, **caractérisé en ce qu'**il comprend un système composite comprenant un milieu de cristal liquide selon au moins une des revendications 1 à 6 et un polymère.

9. Système d'affichage à cristal liquide selon au moins une des revendications 7 et 8, **caractérisé en ce qu'**il est un système d'affichage holographique.

10. Utilisation d'un milieu de cristal liquide selon au moins une des revendications 1 à 6 dans un système à cristal liquide.

11. Composé de la formule I 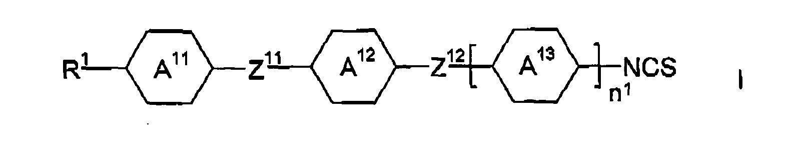 dans laquelle
R¹ est n-alkyle, n-alcoxy avec 1 à 7 atomes de C, alkényle, alkényloxy ou alcoxyalkyle avec 2 à 7 atomes de C, 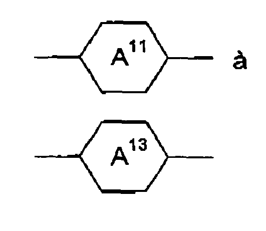 chacun, indépendamment les uns des autres, sont 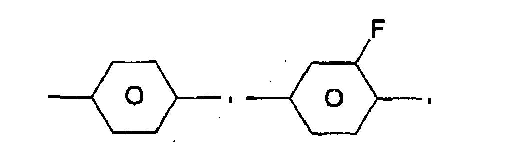 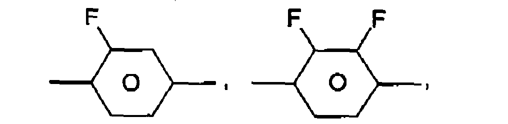 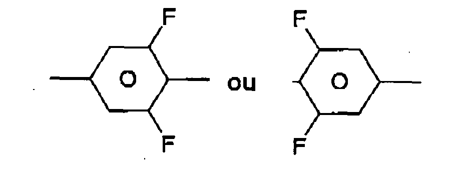
Z¹¹ et Z¹² chacun, indépendamment l'un de l'autre, sont une liaison simple ou trans -CH=CH-, dans le cas où n¹ est 0, Z¹² est une liaison simple et
n¹ est 0 ou 1,
avec la condition qu'au moins un de Z¹¹ et Z¹² est trans -CH=CH-
ou Z¹¹ et Z¹² sont tous deux une liaison simple et dans ce cas
n¹ est 1 et au moins un de 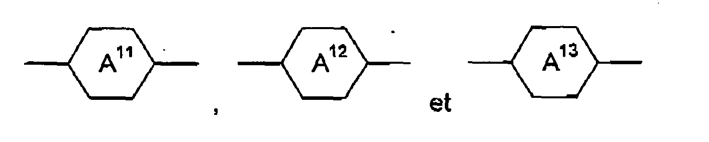 est

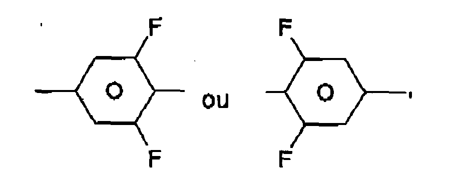

12. Composé choisi parmi le groupe des composés des formules I-1 à I-3: 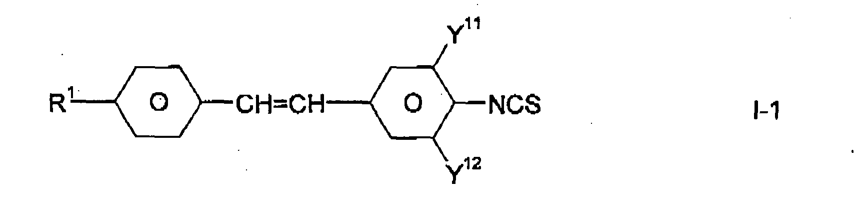 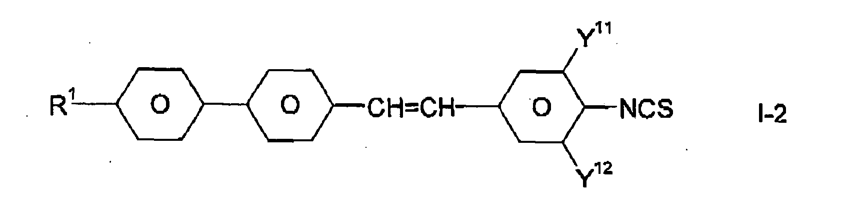 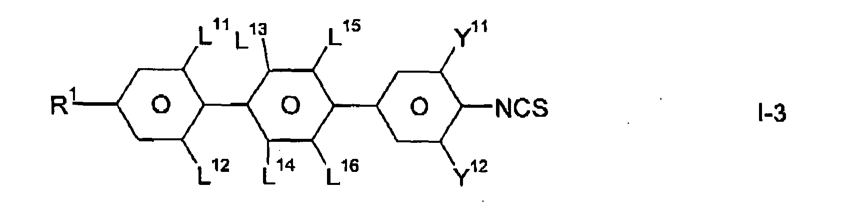 dans lesquelles
R¹ est n-alkyle, n-alcoxy avec 1 à 10 atomes de C, alkényle, alkényloxy ou alcoxyalkyle avec 2 à 7 atomes de C,
Y¹¹ et Y¹² sont indépendamment l'un de l'autre H ou F
L¹¹ à L¹⁶ sont indépendamment les uns des autres H ou F,
avec la condition que dans la formule I-3 au moins un des cycles 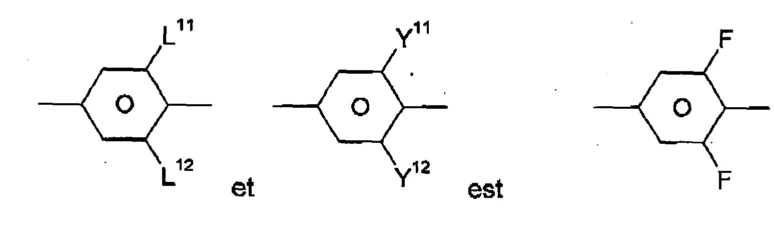 ou

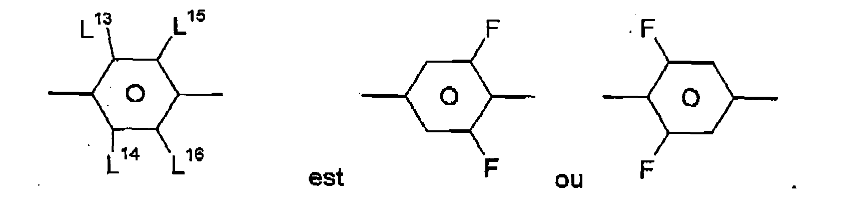

13. Composé choisi parmi le groupe des formules I-1a à I-1c, I-2a à I-2i et I-3d: 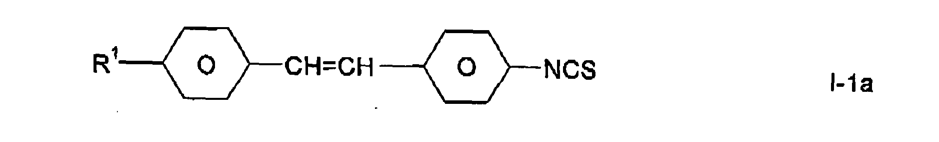 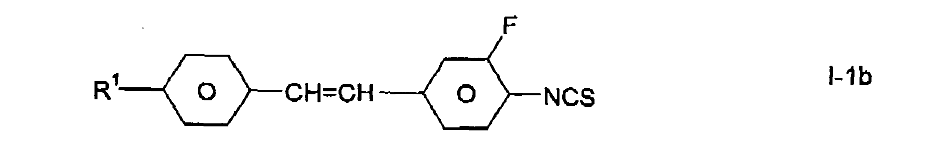 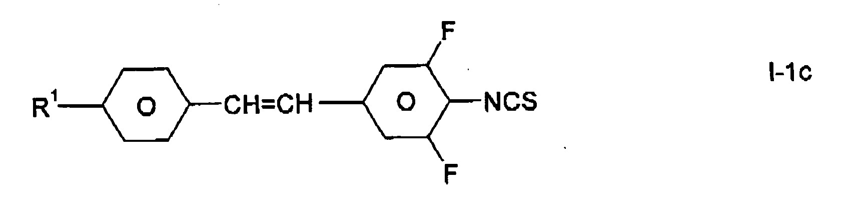 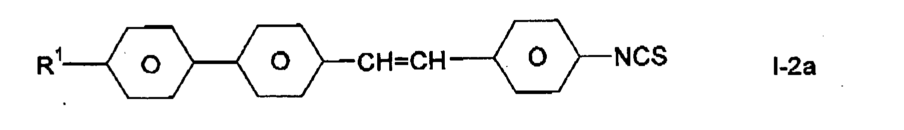 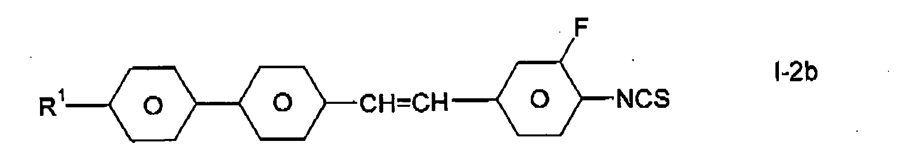 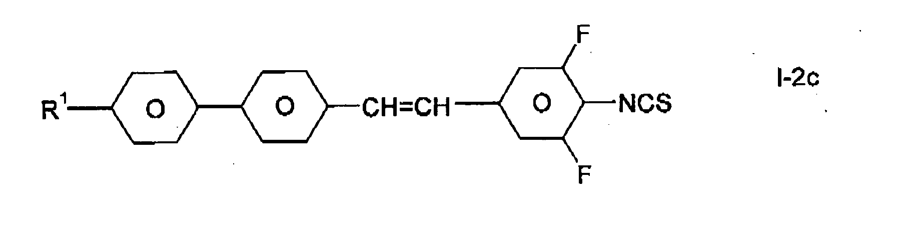 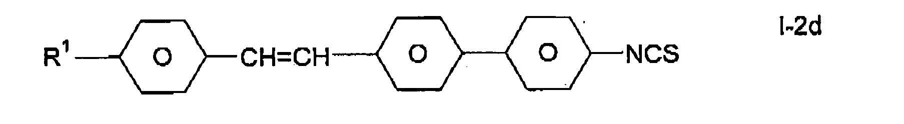 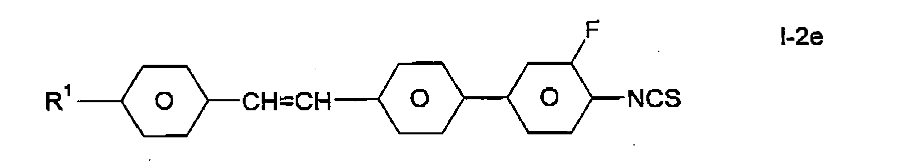 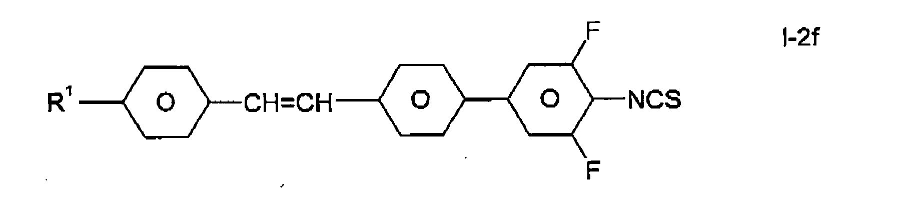 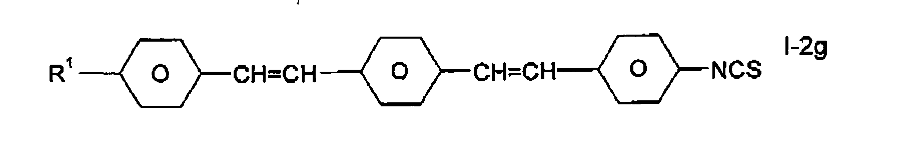 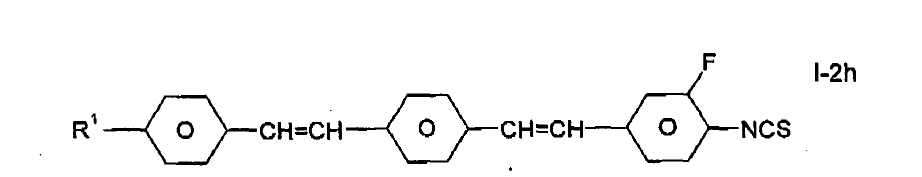 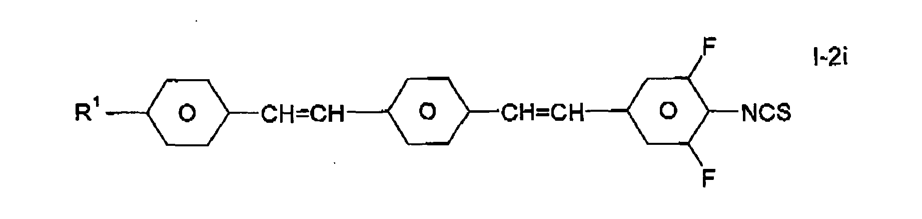 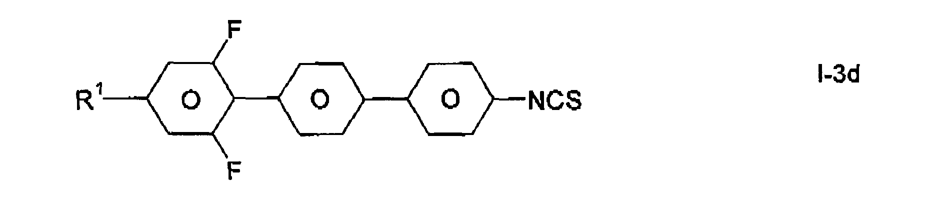 dans lesquelles
R¹ a la signification donnée dans la revendication 12.
